# FASCICULE DE BREVET EUROPEEN

(11) **EP 4 076 734 B1**
(45) Date de publication et mention de la délivrance du brevet: **03.04.2024**
(21) Numéro de dépôt: 20842718.7
(22) Date de dépôt: 09.12.2020
(51) Int. Cl.: B01J 20/22, B01J 20/02, B01J 20/32, G01N 21/01

(54) **MATÉRIAU COMPOSITE ASSOCIANT NANOPARTICULES DE MOF ET NANOPARTICULES MÉTALLIQUES**
VERBUNDSTOFF MIT EINER KOMBINATION AUS NANOPARTIKELN UND METALLNANOPARTIKELN
COMPOSITE MATERIAL COMBINING MOF NANOPARTICLES AND METAL NANOPARTICLES

(30) Priorité: 17.12.2019 FR 1914632
(43) Date de publication de la demande: 26.10.2022
(73) Titulaire: Centre national de la recherche scientifique, 75016 Paris (FR); Sorbonne Université, 75006 Paris (FR); Ecole Normale Supérieure de Paris, 75005 Paris (FR); Université de Versailles Saint-Quentin-en-Yvelines, 78000 Versailles (FR); Ecole Supérieure de Physique et de Chimie Industrielles de la Ville de Paris, 75005 Paris (FR); Muséum National D'histoire Naturelle, 75005 Paris (FR)
(72) Inventeur: SERRE, Christian, 78370 Plaisir (FR); STEUNOU, Nathalie, 95830 Frémécourt (FR); DEDECKER, Kevin, 78000 Versailles (FR); LAVÉDRINE, Bertrand, 75004 Paris (FR); BOISSIÈRE, Cédric, 91140 Villebon-sur-yvette (FR); DUMAS, Eddy, 78690 Saint-rémy-l'honoré (FR)
(74) Mandataire: Brevalex
(86) Numéro de dépôt international: PCT/FR2020/052356
(87) Numéro de publication internationale: WO 2021/123570

(56) Documents cités:
- US-A1- 2019 360 933
- US-B2- 9 983 124
- MINGZHAO LIU ET AL: "Mechanism of Silver(I)-Assisted Growth of Gold Nanorods and Bipyramids", JOURNAL OF PHYSICAL CHEMISTRY PART B, vol. 109, no. 47, 22 décembre 2005 (2005-12-22), pages 22192-22200, XP055517475, US ISSN: 1520-6106, DOI: 10.1021/jp054808n
- KEVIN DEDECKER ET AL: "Metal-Organic Frameworks for Cultural Heritage Preservation: The Case of Acetic Acid Removal", ACS APPLIED MATERIALS & INTERFACES, vol. 10, no. 16, 3 avril 2018 (2018-04-03) , pages 13886-13894, XP055519986, US ISSN: 1944-8244, DOI: 10.1021/acsami.8b02930
- HONGHONG RAO ET AL: "Gold nanorod etching-based multicolorimetric sensors: strategies and applications", JOURNAL OF MATERIALS CHEMISTRY C, vol. 7, no. 16, 1 janvier 2019 (2019-01-01), pages 4610-4621, XP055722831, GB ISSN: 2050-7526, DOI: 10.1039/C9TC00757A

## Description

### PRIORITE

La présente demande internationale revendique la priorité de la demande de brevet français N° 19/14632 déposée le 17 décembre 2019.

### DOMAINE TECHNIQUE DE L'INVENTION

La présente invention se rapporte à un matériau composite utilisable comme indicateur optique, notamment pour la détection optique de la saturation d'un adsorbant MOF en composés organiques volatils.

L'invention se rapporte également à un procédé de préparation du matériau composite, à un dispositif pour la détection optique de la saturation d'un adsorbant MOF en composés organiques volatils, ainsi qu'à l'utilisation du matériau composite comme indicateur optique pour la saturation d'un adsorbant MOF en composés organiques volatils.

Les références en gras et entre parenthèses (X) renvoient à la liste des références à la fin des exemples.

### ETAT DE LA TECHNIQUE

Depuis une vingtaine d'années on s'est avisé que la piètre qualité de l'air à l'intérieur des bâtiments avait des effets nocifs non seulement sur les occupants mais également, dans le cas des institutions patrimoniales, sur les collections et les oeuvres. Si dans certains cas ces effets sont spectaculaires et ont déclenché une rapide prise de conscience, bien souvent les dommages provoqués sont lents et on prend aujourd'hui la mesure des risques pour le patrimoine. Les responsables sont certes les polluants qui pénètrent avec l'air extérieur, mais une grande majorité d'entre eux se trouve à l'intérieur des locaux. Les matériaux d'isolation, les revêtements des murs et du sol, le mobilier, peuvent dégager des acides volatils, des aldéhydes, des peroxydes, des dérivés sulfurés, dont le taux d'émission décroît avec le temps. Le bois qu'il soit massif, contre-plaqué ou aggloméré libère des quantités conséquentes de formaldéhyde et/ou d'acide acétique. Des analyses effectuées par le Getty Conservation Institute à l'intérieur de dix-sept musées et institutions révèlent que les composés carbonylés sont les agents polluants internes les plus courants (Tableau 1 : Concentration moyenne en polluants carbonylés) dans les locaux. Les quantités sont d'autant plus importantes que l'air est confiné : les armoires de conditionnement et les vitrines sont les plus polluées, des concentrations de 1 mg/m³ d'acide acétique ont été mesurées dans certaines vitrines de musées. Avec le formaldéhyde, ces composés organiques sont parmi les polluants intérieurs les plus fréquents et les plus dommageables. Si le mobilier et les produits d'entretien peuvent être remplacés par des matériaux ou composés émettant moins, il arrive fréquemment que la source de polluants soit les objets du patrimoniaux eux-mêmes. Ainsi l'acide acétique est libéré par l'hydrolyse de l'acétate de cellulose au cours du temps. Ce phénomène est courant dans les collections du 20ème siècle (objets de design, lunettes, accessoires etc.) et particulièrement préoccupant pour le patrimoine photographique et cinématographique. Dénommé "syndrome du vinaigre" dans les cinémathèques, il favorise la dégradation des films en bon état stockés à proximité. Les effets pernicieux de l'acide acétique sont également visibles dans les collections d'histoire naturelle, les coquilles et coquillages présentés dans des vitrines et sur des étagères en bois (chêne, aggloméré, contre-plaqué, médium ...) sont attaqués par les vapeurs acides. Une efflorescence de cristaux d'acétate de calcium se développe à la surface des objets.

**Tableau 1**

| Tableau 1 : Concentration moyenne en polluants carbonylés¹⁰ | |
|---|---|
| Polluants | Moyenne des relevés sur 17 institutions patrimoniales |
| formaldéhyde | 42 ppb |
| acide formique | 14 ppb |
| acétaldéhyde | 23 ppb |
| acide acétique | 32 ppb |

Il s'avère donc utile dans une institution patrimoniale de contrôler la charge en polluants et en particulier celle en acide acétique pour évaluer les risques et identifier les actions prioritaires (changements des filtres, régénération des adsorbants, ventilation etc.). L'approche traditionnelle consiste à réaliser des analyses chimiques après piégeage sur un substrat (papier, cartouche chromatographique, plaques de silice) imprégné de 2-4 dinitro phénylhydrazone pour les aldéhydes et les cétones, ou d'hydroxyde de potassium pour les acides carboxyliques. La chromatographie en phase gazeuse couplée à un spectromètre de masse permet, en une seule opération, l'identification d'une gamme beaucoup plus étendue de composés organiques volatils que l'on recueille sur des adsorbants le temps que les gaz polluants soient adsorbés (indicateur de vapeur organique 3M, badge Draeger, Carbosieve SIII et Tenax TA...). Toutefois ces analyses nécessitent le recours à des laboratoires spécialisés et l'information arrive tardivement. D'autres tentatives ont été faites avec les tubes réactifs à lecture directe des sociétés Draeger et Gastec cependant ces tubes sont prévus pour mesurer des taux souvent bien supérieurs aux limites maximales de quelques microgrammes par m³ recommandés pour les institutions patrimoniales. De surcroît, le fait de réaliser une analyse dans un espace clos (boîte, placard, vitrine...) et non ventilé, que l'on ouvre à cet effet, perturbe les conditions de la mesure. La société Purafil a commercialisé des coupons métalliques et une sonde électronique la « OnGuard 2000 »où les détecteurs étaient des cristaux de quartz plaqués de cuivre ou d'argent. D'autres systèmes basés sur la modification de la résistivité au cours de la corrosion d'argent ou de cuivre ont été proposés. Ces capteurs furent conçus pour des polluants urbains, aucun étalonnage n'a été réalisé pour une application aux collections patrimoniales et l'on connaît mal la sensibilité pour l'acide acétique. A cela s'ajoute des sondes industrielles comme la gamme introduite par GrayWolf's mais qui par son coût (plusieurs milliers d'euros) et sa mise en oeuvre est un outil qui s'adresse plus à des techniciens de laboratoire qu'à des conservateurs ou des restaurateurs en charge de conservation préventive. Aucun de ces produits n'a dépassé le stade du prototype, leur transfert sur le marché a été limité en raison, sans doute, de la technicité imposée pour la mise en oeuvre, leur complexité et leur coût. La majorité des acteurs concernés a recours aujourd'hui à une approche simple mais très peu sensible (de l'ordre du ppm) : l'utilisation de papier pH (papier imprégné de bleu de bromothymol) qui change de couleur et passe au vert puis au jaune selon l'acidité de l'environnement (produit commercialisé sous le nom de A-D strip).

D1 (US 9 983 124-B2) décrit un dispositif de détection comprenant un matériau MOF.

La problématique concerne plus généralement la détection de polluants environnementaux et la surveillance de la qualité de l'air. Cette problématique s'adresse donc au domaine de la santé au sens large, pas seulement la préservation du patrimoine culturel. Les secteurs économiques concernés couvrent le domaine de l'habitat, les bureaux, l'automobile, les musées, les galeries, les bibliothèques et les collections d'archives.

Aujourd'hui, les matériaux principalement utilisés pour le contrôle de la qualité de l'air en milieu confiné sont les charbons actifs et les zéolithes. Ces matériaux présentent une faible sélectivité pour l'adsorption de ces polluants en présence d'eau. Il existe donc un réel problème de sélectivité de l'adsorption des COVs en présence d'humidité ambiante. Par ailleurs, aucun procédé simple ne permet de suivre le taux de remplissage des adsorbants existants et donc leur remplacement lorsque ceux-ci sont saturés en eau et/ou polluants.

Il existe donc un réel besoin de développer un moyen simple, efficace et sélectif dédié à la détection de COV, en particulier l'acide acétique, tel un indicateur optique, qui permet de mettre en évidence d'une façon visuelle l'importance du risque encouru en fonction d'un changement de couleurs avec une sensibilité accrue (ppb).

### BREVE DESCRIPTION DES FIGURES

Figure 1 représente: (A) MEB, (B) micrographies TEM et (c) distribution de la taille des nanoparticules ZIF-8 obtenues à l'Exemple 1 déduites de la micrographie TEM (50 particules).
Figure 2 représente: (A) Micrographies TEM des nanoparticules MIL-101(Cr) de l'Exemple 1. (B) et (C) Champ sombre annulaire à grand angle en mode de microscopie électronique à transmission par balayage (HAADF-STEM) d'images de nanoparticules MIL-101(Cr) de l'Exemple 1 (D) Distribution granulométrique des nanoparticules MIL-101(Cr) de l'Exemple 1, déduite des micrographies TEM (100 particules).
Figure 3 représente: (A) Diagramme PXRD (λCu=1.5406Å) des échantillons UiO-66 synthétisés à différentes températures à l'Exemple 1. (B) Isothermes d'adsorption d'azote (77K) des échantillons obtenus à 120 et 60°C. Conditions d'activation : 150°C sous vide pendant 16h.
Figure 4 représente: Micrographies MEB de nanoparticules d'UiO-66 synthétisées à (A) 120, (B) 90 et (C) 60°C dans l'Exemple 1.
Figure 5 représente: (A) Diagramme PXRD (λCu=1.5406Å) d'échantillons d'UiO-66 formés à partir de ZrCl4 (synthétisé après 48h à 60°C) et ZrOCl₂.8H₂O (formé après 24h à 60°C sans quantité supplémentaire de HCl). (B) Potentiel zêta apparent de l'UiO-66 synthétisé avec ZrCl₄, ZrOCl₂.8H₂O avec/sans ajout de HCl. (C) Estimation du diamètre hydrodynamique des colloïdes par DLS (l'échantillon obtenu à partir de ZrOCl₂.8H₂O sans quantité supplémentaire de HCl n'a pas pu être analysé par DLS en raison du degré important d'agrégation).
Figure 6 représente: (A) Images TEM (B) et (C) HAADF-STEM de nanoparticules UiO-66 et (B) leur distribution granulométrique déduite des micrographies TEM (pour 100 particules).
Figure 7 représente: Isothermes d'adsorption N₂ (77K, P0=1bar) des UiO-66 synthétisés.

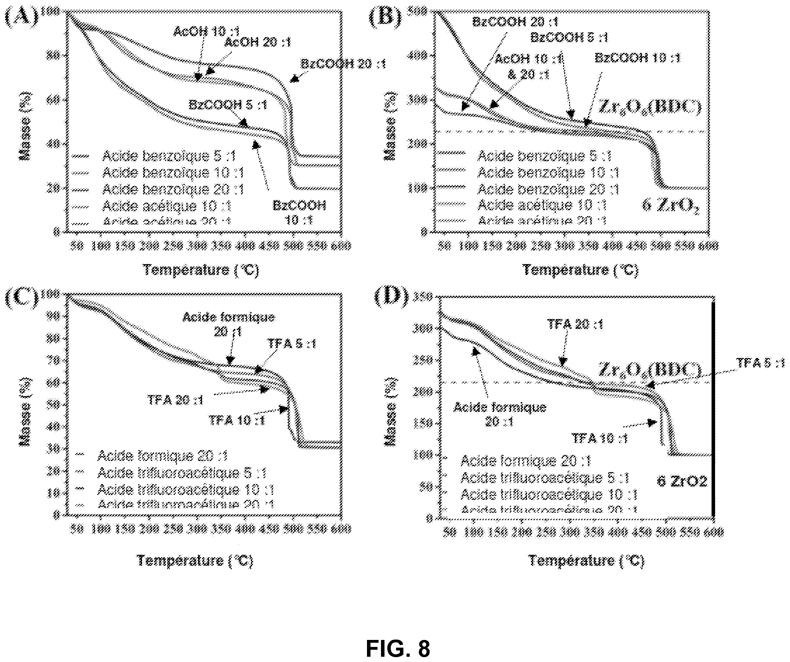

Figure 8 représente: Analyse thermogravimétrique des UiO-66 synthétisés avec (A) l'acide benzoïque, l'acide acétique, (C) l'acide formique et l'acide trifluoroacétique et (B, D) leurs résultats normalisés correspondants.
Figure 9 représente: (A) micrographies HAADF-STEM de UiO-66-2CF3 et (B) leur distribution granulométrique déduite des micrographies HAADF-STEM (100 particules).
Figure 10 représente: Installation pour les expériences de porosimétrie ellipsométrique environnementale (« PEE »). Circuit pour le système de générateur de vapeur et l'injection du mélange de vapeur dans la cellule thermique contenant le film MOF.
Figure 11 représente: Distribution granulométrique des nanoparticules de (A) ZIF-8, (B) MIL-101(Cr), (C) UiO-66 et (D) UiO-66-2CF3.
Figure 12 représente: (A) MEB, (B) micrographies TEM de ZIF-8, (C) TEM et (D) micrographies HAADF-STEM de MIL-101(Cr), (E) et micrographies HAADF-STEM de UiO-66(Zr), (G) et (H) micrographies HAADF-STEM d'UiO-66-2CF3.
Figure 13 représente: Images AFM de films MIL-101(Cr) obtenues à (A) 15 mm s-1 et (B) 0,05 mm s-1.
Figure 14 représente: Évolution due l'IR en présence de 40% HR, 2% d'acide acétique + 40% HR et d'air sec.
Figure 15 représente: Isotherme d'adsorption d'eau avec ou sans vapeur d'acide acétique de (A) MIL-101(Cr) et (B) UiO-66-2CF3.
Figure 16 représente: Mesure PEE avec différentes concentrations de vapeur d'acide acétique. (A) MIL-101(Cr), (B) UiO-66 et (C) UiO-66-2CF3. Etape de désorption : à l'intérieur de la cellule thermique, le film est chauffé à 120°C pendant 2 min avec une rampe de température de 18°C min-1, puis refroidi avant l'expérience d'adsorption.
Figure 17 représente: Mesure PEE avec différentes concentrations de vapeur d'acide acétique et 40% d'HR. (A) MIL-101(Cr) (3 cycles), (B) UiO-66 (4 cycles) et (C) UiO-66-2CF3 (4 cycles). Etape de désorption : à l'intérieur de la cellule thermique, le film est chauffé à 120°C pendant 2 min avec une rampe de température de 18°C min-1, puis refroidi avant l'expérience d'adsorption.
Figure 18 représente: Germes d'or (A) monocristallins et (B) polycristallins (32)
Figure 19 représente: Illustration schématique de la synthèse des germes d'or polycristallins et de leur croissance pour la formation de nanobipyramides d'or.
Figure 20 représente: Micrographies TEM (A) d'une nanobipyramide d'or isolée et (B) de nanoparticules d'or de morphologies différentes obtenues par l'approche de cristallogénèse par nucléation (nanobipyramides, nanobâtonnets et nanosphères).
Figure 21 représente: Distribution granulométrique des nanobipyramides déduite des micrographies TEM : (A) longueur et (B) largeur (estimation sur 50 particules).
Figure 22 représente: Distribution de la taille des particules de (A) nanosphères et (B) longueur des nanobâtonnets et (C) largeur des nanobâtonnets, déduites des micrographies TEM (estimation sur 100 particules).
Figure 23 représente: Spectre UV-visible des suspensions de nanobipyramides.
Figure 24 représente: Illustration de trois cas de figure possibles pour des mélanges de nanobipyramides d'or et de nanoparticules MIL-101(Cr) : (A) faible quantité de nanobipyramides, (B) rapport optimal des nanobipyramides d'or et des nanoparticules MIL-101(Cr) et (C) quantité élevée de nanobipyramides d'or.
Figure 25 représente: Images de films composites de nanoparticules MIL-101(Cr)/nanobipyramides d'or (A) avant et (B) après exposition à la vapeur d'eau. (C) Spectre de transmission des films composites de nanoparticules MIL-101(Cr)/nanobipyramides d'or, exposés à différentes humidités relatives de 1,1 à 93,2%.
Figure 26 représente: Evolution (A) de l'indice de réfraction d'un film MIL-101(Cr) exposé à la vapeur d'eau et (B) du déplacement de la deuxième bande de plasmon dans un film composite MIL-101(Cr)/nanobipyramide d'or exposé à différentes valeurs d'humidité relative.
Figure 27 représente: Spectres de transmission des films obtenus à l'Exemple 3.3.1 à 25, 40 et 80°C pour les ratios massiques MIL-101(Cr)/nanobipyramides d'or de 100/1 (A) et 0,1/1 (B).
Figure 28 représente: Spectres de transmission des films obtenus à l'Exemple 3.3.2 à 80°C pour les ratios massiques MIL-101 (Cr)/nanobipyramides d'or allant de 100/1 et 0.1/1.
Figure 29 représente: Spectres de transmission des films obtenus à l'Exemple 3.3.3 à 80°C pour un ratio massique MIL-101(Cr)/nanobipyramides d'or de 10/1 pour des mélanges eau/éthanol allant de 100/0 à 25/75.

### DEFINITIONS

Pour faciliter la compréhension de l'invention, un certain nombre de termes et expressions sont définis ci-dessous:
De manière générale, le terme « substitué », précédé ou non du terme « éventuellement », et les substituants décrits dans les formules du présent document, désignent le remplacement d'un radical hydrogène dans une structure donnée avec le radical d'un substituant spécifié. Le terme « substitué » désigne par exemple le remplacement d'un radical hydrogène dans une structure donnée par un radical R. Lorsque plus d'une position peut être substituée, les substituants peuvent être les mêmes ou différents à chaque position.

On entend par "aliphatique", au sens de la présente invention, les hydrocarbures aliphatiques saturés et insaturés, à chaîne droite (c'est-à-dire non ramifiée) ou ramifiée, qui sont éventuellement substitués par un ou plusieurs groupes fonctionnels. Comme le comprendra la personne du métier, il est entendu que le terme "aliphatique" inclut, mais sans s'y limiter, les groupements alkyle, alcényle, alcynyle, tels que définis ci-dessous.

On entend par « alkyle » au sens de la présente invention, un radical carboné saturé linéaire, ramifié ou cyclique, éventuellement substitué, comprenant 1 à 25 atomes de carbone, par exemple 1 à 10 atomes de carbone, par exemple 1 à 8 atomes de carbone, par exemple 1 à 6 atomes de carbone. Par exemple les groupes alkyle incluent, sans s'y limiter, méthyle, éthyle, n-propyle, isopropyle, n-butyle, sec-butyle, isobutyle, tert-butyle, n-pentyle, sec-pentyle, isopentyle, tert-pentyle, n-hexyle, sec-hexyle, etc. Les groupes alcényle comprennent, sans toutefois s'y limiter, l'éthényle, le propényle, le butényle, le 1-méthyl-2-butényl-2-l-yle, etc. Les groupes alcynyles représentatifs comprennent, sans s'y limiter, l'éthynyle, le 2-propynyle (propargyl), le 1-propynyle par exemple.

On entend par « aryle » ou « aromatique » au sens de la présente invention, un système aromatique comprenant au moins un cycle satisfaisant la règle d'aromaticité de Hückel. Ledit aryle ou groupe aromatique est éventuellement substitué et peut comprendre de 6 à 50 atomes de carbone, par exemple 6 à 20 atomes de carbone, par exemple 6 à 10 atomes de carbone. Par exemple, on peut citer phényle, indanyle, indényle, naphthyle, phénanthryle et anthracyle.

On entend par « hétéroaryle » ou « hétéroaromatique » au sens de la présente invention, un système comprenant au moins un cycle aromatique de 5 à 50 chaînons parmi lesquels au moins un chaînon du cycle aromatique est un hétéroatome, notamment choisi dans le groupe comprenant le soufre, l'oxygène, l'azote, le bore. Ledit hétéroaryle ou groupe hétéroaromatique peut éventuellement être substitué et peut comprendre de 1 à 50 atomes de carbone, de préférence 1 à 20 atomes de carbone, de préférence 3 à 10 atomes de carbone. Par exemple, on peut citer pyridyle, pyrazinyle, pyrimidinyle, pyrrolyle, pyrazolyle, imidazolyle, thiazolyle, oxazolyle, isooxazolyle, thiadiazolyle, oxadiazolyle, thiophenyle, furanyle, quinolinyle, isoquinolinyle, etc. Par exemple, on peut citer pyridyle, quinolinyle, dihydroquinolinyle, isoquinolinyle, quinazolinyle, dihydroquinazolyle, et tetrahydroquinazolyle. Avantageusement, au moins deux chaînons du cycle aromatique peuvent être un hétéroatome, notamment choisis dans le groupe comprenant le soufre, l'oxygène, l'azote, le bore, de préférence le soufre, l'oxygène ou l'azote, plus préférentiellement l'azote, et le groupe hétéroaromatique, éventuellement substitué, peut comprendre de 1 à 50 atomes de carbone, de préférence 1 à 20 atomes de carbone, de préférence 3 à 10 atomes de carbone.

On pourra citer par exemple les groupes de type imidazole, tels que les noyaux imidazolyle, benzimidazolyle, azabenzimidazolyle (p.ex. 4-azabenzimidazolyle, 5-azabenzimidazolyle,) ou purinyle.

On entend par «indépendamment» au sens de la présente invention, le fait que les substituants, atomes ou groupes auxquels ce terme se réfère, sont choisis parmi la liste des variables indépendamment l'une de l'autre (à savoir, ils peuvent être identiques ou différents).

Comme il sera manifestement apparent à une personne du métier, lorsque les variables énumérées sont regroupées dans un groupe, comme dans un groupe Markush, l'invention englobe non seulement tout le groupe énuméré dans son ensemble, mais chaque membre du groupe individuellement et tous les sous-groupes possibles du groupe principal. Ainsi, il est entendu que l'invention englobe non seulement le groupe principal, mais aussi le groupe principal en l'absence d'un ou de plusieurs des membres du groupe. L'invention prévoit donc l'exclusion explicite d'un ou de plusieurs membres d'un groupe récité. En conséquence, il est entendu que des disclaimers peuvent s'appliquer à l'une quelconque des catégories ou modes de réalisation divulgués dans le présent document, en vertu desquels un ou plusieurs des éléments, variantes ou modes de réalisation récités peuvent être exclus du domaine revendiqué, par exemple, par le biais d'une limitation négative explicite.

Par "structure tridimensionnelle", on entend une séquence ou une répétition tridimensionnelle d'unités/motifs ou de sous-variantes, au sens conventionnel du terme dans le domaine des matériaux MOF, qui sont également caractérisés comme "polymères organométalliques".

Dans le présent document, le terme "solide" désigne tout type de matériau cristallin. Ce solide peut être, par exemple, sous forme de cristaux, de poudre ou de particules de formes variées, par exemple de forme sphérique, lamellaire, etc. Les particules peuvent être sous forme de nanoparticules.

Dans le présent document, on entend par "milieu humide" un milieu atmosphérique comprenant de la vapeur d'eau. Il peut s'agir de l'air avec de la vapeur d'eau. La quantité de vapeur d'eau présente dans l'environnement, par exemple dans l'air, augmente à mesure que la température augmente. Les différences dans la quantité de vapeur d'eau dans une parcelle d'air peuvent être assez importantes. Par exemple, une parcelle d'air presque saturée peut contenir 28 grammes d'eau par mètre cube d'air à 30 °C, mais seulement 8 grammes d'eau par mètre cube d'air à 8 °C. La vapeur d'eau ou vapeur ou vapeur aqueuse est la phase gazeuse de l'eau.

C'est un état de l'eau dans l'hydrosphère. Dans des conditions atmosphériques typiques, la vapeur d'eau est continuellement produite par évaporation et éliminée par condensation. La teneur en vapeur de l'air peut être mesurée à l'aide de dispositifs appelés hygromètres. Dans le contexte de la présente invention, la quantité de vapeur d'eau dans l'environnement, par exemple dans l'air, peut aller de juste au-dessus de l'air sec, jusqu'à la saturation, par exemple de 10 à 30°C, par exemple à température ambiante (c'est-à-dire à une température entre 18°C et 28°C). Dans le présent document, l'expression "environnement à taux d'humidité élevé" désigne un taux d'humidité d'un environnement, tel que défini ci-dessus, qui est supérieur au seuil conventionnellement accepté pour un environnement humide normal pour le confort humain. Ce seuil d' « humidité normale » se situe généralement autour de 25-30% d'humidité. Cf. Ashrae Fundamentals Handbook, SI Edition, 2001, p. 24.5. (1) Dans le contexte de la présente invention, un environnement à taux d'humidité élevé désigne un taux d'humidité relative supérieur à 30%, de préférence ≥35% d'humidité relative, de préférence ≥40% d'humidité relative, jusqu'à 100% d'humidité relative (1). Les environnements intérieurs tels que les musées, les galeries, les bibliothèques et les collections d'archives sont conventionnellement associés à des taux d'humidité relative élevés, soit environ 40 % HR. Dans le contexte de la présente invention, un environnement « humide au-dessus de la normale » ou « anormalement humide » désigne un taux d'humidité relative supérieur à 60%, de préférence ≥70% d'humidité relative, de préférence ≥80% d'humidité relative, jusqu'à 100% d'humidité relative.

Les MOFs sont construits à partir de ligands organiques pontants, également appelés "linkers" ou "spacers", qui restent intacts tout au long de la synthèse, ces ligands agissant comme des lieurs dans le réseau de la structure tridimensionnelle MOF obtenue. Tel qu'utilisé ici, le terme "ligand" ou "linker" ou "spacer" fait référence à un ligand coordonné à au moins deux sites métalliques, qui participe à fournir la distance entre ces atomes métalliques et à former des espaces vides ou pores.

Dans le présent document, l'expression "taille moyenne des pores" désigne la taille (ou diamètre des pores) des pores du MOF, telle qu'elle est traditionnellement utilisée dans l'art, calculée par la méthode d'adsorption de l'azote. Il est destiné à englober les différentes géométries de pores possibles du matériau MOF (par exemple, tétraèdre, octaèdre). Les méthodes de mesure de la taille des pores sont bien documentées dans la littérature. Cf. Rouquérol et al. 1999. (2) Par exemple, la taille des pores du MOF peut être déterminée par le calcul de la distribution de la taille des pores de l'adsorption de l'azote. On peut aussi estimer la taille maximale et limite des pores à partir de données cristallographiques en simulant le remplissage des pores par des molécules de gaz (L. Sarkisov et A. Harrison, Mol. Simul., 2011, 37, 1248-1257 (3)) qui permettent le calcul des tailles moyennes des pores. Dans le présent document, la taille moyenne des pores, ainsi que la surface spécifique BET et le volume des pores, ont été déterminés par la méthode d'adsorption de N₂, sur la base des isothermes d'adsorption-désorption de N₂ à - 196°C (77K).

Dans le présent document, le terme "nanoparticule", désigne une particule dont la taille est inférieure à 1 µm. En particulier, les nanoparticules d'adsorbant MOF selon l'invention peuvent avoir un diamètre (ou taille du plus grand axe si les particules sont de forme asymétrique) inférieur à 1000 nanomètres, de préférence inférieur à 500 nm, plus préférablement inférieur à 250 nm et plus particulièrement inférieur à 100 nm. Les nanoparticules métalliques de forme anisotrope selon l'invention peuvent avoir une taille du plus grand axe inférieure à 1000 nanomètres, de préférence inférieure à 500 nm, plus préférablement inférieure à 250 nm et plus particulièrement inférieure à 100 nm. Comme il ressort des Exemples, la taille des nanoparticles de MOF et des nanoparticules métalliques de forme anisotrope existe sous forme de distribution. Donc dans le présent document, le terme « diamètre » ou « taille » se réfère au « diamètre moyen» ou à la « taille moyenne», respectivement.

Dans la présente description, les termes « anisotrope » et « asymmétrique » utilisés en référence à la forme des nanoparticules métalliques sont interchangeables : dans le contexte de la présente invention une nanoparticule anisotrope se réfère à une nanoparticule asymmétrique (e.g., non sphérique).

### DESCRIPTION DE CERTAINS MODES DE RÉALISATION AVANTAGEUX DE L'INVENTION

La présente invention répond précisément à ce besoin en associant certains MOFs particuliers avec certaines nanoparticules métalliques de forme anisotrope.

Ainsi, selon un aspect, l'invention concerne un matériau composite associant :
(a) au moins un MOF cristallin poreux sous forme de nanoparticules ayant un diamètre ou taille du plus grand axe si les particules sont de forme asymétrique inférieur à 100 nm; et
(b) des nanoparticules de forme anisotrope sous la forme de nanobipyramides, d'au moins un métal ou alliage de métaux ayant une bande plasmon dans le visible, le métal étant choisi parmi Au, Ag, Cu et Pd ou mélange homogène ou non ou alliage de ceux-ci;
le ratio massique MOF/nanoparticules métalliques étant compris entre 100/1 et 0,1/1 ; de préférence entre 50/1 et 1/1 ; de préférence entre 20/1 et 1/1 ; de préférence entre 15/1 et 5/1 ; de préférence entre 12/1 et 8/1 ; tout préférentiellement environ 10/1. Par exemple le ratio massique MOF/nanoparticules métalliques peut être compris entre 0,12/0,90 et 1,40/0,10.

En raison de leur nature poreuse, les MOFs considérés dans le cadre de la présente description son typiquement adaptés à l'adsorption de composés organiques volatils.

Avantageusement, le MOF cristallin poreux et les nanoparticules de forme anisotrope sont associés par mélange : les nanoparticules métalliques de forme anisotrope ne sont pas recouvertes, totalement ou en partie, de MOF. En particulier les nanoparticules métalliques de forme anisotrope ne sont pas enrobées de MOF. Le matériau composite est voué à avoir une fonction d'indicateur optique. Les biosenseurs sont exclus du cadre de la présente invention. A ce titre, le matériau composite ne comprend pas de biomolécule. Par "biomolécule" on entend une molécule typiquement synthétisée dans les organismes vivants, y compris, mais sans s'y limiter, les polynucléotides (ARN et ADN), les polysaccharides, les protéines entières (« full length proteins » en anglais), les polypeptides, les peptides, les lipides, les glycolipides, les aptamères et leurs combinaisons. Parmi les exemples de biomolécules, on peut citer les enzymes, les anticorps (y compris les anticorps monoclonaux (c'est-à-dire constitués de molécules d'anticorps identiques), les anticorps polyclonaux (c'est-à-dire constitués de deux ou plusieurs anticorps différents réagissant avec des épitopes identiques ou différents sur le même antigène ou même sur des antigènes distincts et différents), les dimères, les polymères, les anticorps multispécifiques (par exemple : anticorps à double spécificité) et les fragments d'anticorps présentant des activités biologiques cibles), les fragments d'anticorps (comprenant les anticorps chimériques et à chaîne unique, ainsi que les fragments d'anticorps de liaison, tels que les fragments Fab, Fv ou les fragments Fv à chaîne unique (scFv)), les récepteurs, les protéines de transport, les protéines de structure, les prions, ou les molécules protéiques antibiologiques (par exemple, une molécule protéique antimicrobienne, une molécule protéique antifongique).

Avantageusement, le MOF peut être formé par un réseau d'oxydes et/ou d'hydroxydes métalliques et/ou d'ions métalliques connectés par des ligands, lesdits ligands étant choisis dans le groupe comprenant :
- les ligands aromatiques polycarboxylates en C6-C24, tels que le di-, tri- ou tétracarboxylate de benzyle ou de naphtyle, les ligands aromatiques portant éventuellement un ou plusieurs atomes F sur au moins un noyau aromatique ;
- les ligands aliphatiques polycarboxylates en C2-C16,
- les ligands hétéroaromatiques en C1-C20 dont au moins deux chaînons du cycle aromatique sont des hétéroatomes choisis parmi S, N, O ou B, tels que les ligands de type imidazolyle, les ligands hétéroaromatiques portant éventuellement un ou plusieurs atomes F sur au moins un noyau aromatique ;
chacun des ligands précités portant éventuellement des groupes fluorés apolaires, par exemple des groupes -(CF₂)ₙ-CF₃, n étant un nombre entier de 0 à 5, de préférence 0 ou 3, et/ou des groupes alkyle apolaires en C1-C20 de préférence en C1-C4, par exemple -CH₃ ou -CH₂-CH₃, greffés directement sur les ligands et pointés vers l'intérieur des pores du MOF.

Avantageusement, le MOF peut être tout spécialement adapté à l'adsorption de l'acide acétique de l'air ambiant (acide acétique en tant que composé organique volatil). Dans ce cas, le MOF pourra être de préférence un MOF cristallin poreux, de préférence sous forme de nanoparticules, comprenant une taille moyenne de pores de 0,4 à 0,6 nm et un caractère hydrophobe. Le MOF pourra être formé par un réseau d'oxydes et/ou d'hydroxydes métalliques et/ou d'ions métalliques connectés par des ligands, lesdits ligands étant choisis dans le groupe comprenant:
- les ligands aromatiques polycarboxylates en C6-C24, tels que le di-, tri- ou tétracarboxylate de benzyle ou de naphtyle, les ligands aromatiques portant éventuellement un ou plusieurs atomes F sur au moins un noyau aromatique ;
- les ligands aliphatiques polycarboxylates en C2-C16,
- les ligands hétéroaromatiques en C1-C20 dont au moins deux chaînons du cycle aromatique sont des hétéroatomes choisis parmi S, N, O ou B, tels que les ligands de type imidazolyle, les ligands hétéroaromatiques portant éventuellement un ou plusieurs atomes F sur au moins un noyau aromatique ;
chacun des ligands précités portant éventuellement des groupes fluorés apolaires, par exemple des groupes -(CF₂)ₙ-CF₃, n étant un nombre entier de 0 à 5, de préférence 0 ou 3, des groupes aromatiques flurorés, et/ou des groupes alkyle apolaires en C1-C20 de préférence en C1-C4, par exemple -CH₃ ou -CH₂-CH₃, greffés directement sur les ligands et pointés vers l'intérieur des pores du MOF.

De préférence, les ligands peuvent être choisis parmi :
- les ligands aromatiques polycarboxylates en C6-C24 portant éventuellement un ou plusieurs atomes F sur au moins un noyau aromatique, tels que le di-, tri- ou tétracarboxylate de benzyle ou de naphtyle éventuellement F-substitué sur le radical aromatique ;
- les ligands aliphatiques polycarboxylates en C2-C16 ; et
- les ligands hétéroaromatiques de type imidazole éventuellement F-substitué sur le radical imidazole.

Avantageusement, les ligands peuvent être choisis parmi :
- les ligands aromatiques polycarboxylates en C6-C24 portant éventuellement un ou plusieurs atomes F sur au moins un noyau aromatique, tels que le di-, tri- ou tétracarboxylate de benzyle ou de naphtyle éventuellement F-substitué sur le radical aromatique, et
- les ligands aliphatiques polycarboxylates en C2-C16.

Avantageusement, les ligands aromatiques polycarboxylates en C6-C24, tels que le di-, tri- ou tétracarboxylate de benzyle ou de naphtyle, peuvent être choisis parmi C₆H₄(CO₂⁻)₂ (téréphtalate), C₁₀H₆(CO₂⁻)₂ (naphtalene-2,6-dicarboxylate), C₁₂H₈(CO₂⁻)₂ (biphenyl-4,4'-dicarboxylate), C₆H₃(CO₂⁻)₃ (benzene-1,2,4-tricarboxylate), C₆H₃(CO₂⁻)₃ (benzene-1,3,5-tricarboxylate), C₂₄H₁₅(CO₂⁻)₃ (benzene-1,3,5-tribenzoate), C₆H₂(CO₂⁻)₄ (benzene-1,2,4,5-tetracarboxylate, C₁₀H₄(CO₂⁻)₄ (naphtalene-2,3,6,7-tetracarboxylate), C₁₀H₄(CO₂⁻)₄ (naphtalene-1,4,5,8-tetracarboxylate), C₁₂H₆(CO₂⁻)₄ (biphenyl-3,5,3',5'-tetracarboxylate) et des analogues modifiés choisis parmi le 2-méthyl téréphtalate, 2,5-diméthyl téréphtalate, tétraméthyl téréphtalate, perfluorométhyl téréphtalate, diperfluorométhyl téréphtalate 2-chlorotéréphthalate, 2-bromotéréphthalate, 2,5 tétrafluorotéréphthalate, tétrafluorotéréphthalate, diméthyl-4,4'-biphényldicarboxylate, 2,2-Bis(4-carboxyphenyl)hexafluoropropane, tétramethyl-4,4'-biphényldicarboxylate, dicarboxy-4,4'-biphényldicarboxylate, azobenzène dicarboxylate, azobenzène tétracarboxylate. Avantageusement, le ligand 2,2-Bis(4-carboxyphenyl)hexafluoropropane (« CPHFP ») peut être un très bon candidat dans le cadre de la présente invention pour un MOF Zr de type MIL-140 ou UiO-67.

Avantageusement, les ligands aliphatiques polycarboxylates peuvent être choisis parmi les ligands alkyle polycarboxylates en C2 à C16, portant éventuellement des groupes fluorés apolaires, tels que décrits précédemment. Avantageusement, les ligands alkyle polycarboxylates en C2-C16 peuvent être choisis parmi les ligands di-, tri- ou tétracarboxylates ou di-, tri- ou tétraacide carboxyliques, par exemple C₂H₂(CO₂⁻)₂ (fumarate), C₂H₄(CO₂⁻)₂ (succinate), C₃H₆(CO₂⁻)₂ (glutarate), (C₄H₄)(CO₂⁻)₂ (muconate), C₄H₈(CO₂⁻)₂ (adipate).

Avantageusement, les ligands hétéroaromatiques peuvent être choisis parmi les ligands de type imidazole tels que les noyaux imidazolyle, benzimidazolyle, azabenzimidazolyle (p.ex. 4-azabenzimidazolyle, 5-azabenzimidazolyle,) ou purinyle, de préférence imidazolyle ; portant éventuellement un ou plusieurs atomes F sur le radical imidazole.

Avantageusement, chacun des ligands précités peuvent porter ou non des groupes fluorés apolaires, par exemple des groupes -(CF₂)ₙ-CF₃, n étant un entier de 0 à 5, de préférence 0 ou 1, par exemple -CF₃. Le nombre de groupes fluorés apolaires peut être de 1 à 3 par ligand.

Avantageusement, chacun des ligands précités peuvent porter ou non des groupes alkyle apolaires en C1-C20, de préférence en C1-C4 (nommés ici, par exemple - CH3 ou -CH2-CH3, greffés directement sur les lieurs et pointant dans les pores du MOF. Le nombre de groupes alkyle apolaires peut être de 1 à 3 par ligand. Avantageusement, chacun des ligands précités contenant un radical aromatique ou hétéroaromatique peut porter ou non un ou plusieurs atomes F sur le radical aromatique ou hétéroaromatique.

Différents modes de greffage des groupes fluorés dans la structure MOF peuvent être envisagés. Par exemple, avantageusement, les groupes fluorés apolaires peuvent tous être covalamment liés aux ligands des structures MOF. Alternativement, les groupes fluorés apolaires peuvent être greffés directement sur les clusters métalliques des MOFs. Dans une autre alternative encore, les pores des MOFs peuvent être imprégnés de molécules portant des groupes fluorés apolaires, qui pourraient rester dans les pores, compte-tenu du fait qu'ils sont peu volatiles à température ambiante. L'enseignement de ces différentes méthodes peut être trouvé par exemple dans les références suivantes :

### Coordination vers les sites métalliques ouverts :

Hwang, Y. K. ; Hong, D.-Y. ; Chang, J.-S. ; Jhung, S. H. ; Seo, Y.-K. ; Kim, J. ; Vimont, A. ; Daturi, M. ; Serre, C. ; Férey, G. Amine greffe sur centres métalliques des MOFs insaturés : conséquences pour catalyse et encapsulage des métaux. Angew. Chemie. Int. Ed. 2008, 47 (22), 4144-4148. **(4)**

### Échange de cations et de ligands après la synthèse des MOFs :

Kim, M. ; Cahill, J. F. ; Fei, H. ; Prather, K. A. ; Cohen, S. M. Postsynthetic Ligand and Cation Exchange in Robust Metal-Organic Frameworks. J. Am. Chem. Soc. 2012, 134 (43), 18082-18088. **(5)**

### Modifications postsynthétiques des MOFs :

a) Zhou, H.-C. "Joe" ; Kitagawa, S. Metal-Organic Frameworks (MOFs). Chem. Soc. Rev. 2014, 43 (16), 5415-5418 **;(6)** et b) Tanabe, K. K. ; Cohen, S. M. Postsynthetic modification of metal-organic frameworks--a progress report. Chem. Soc. Rev. 2011, 40 (2), 498-519. **(7)**

Avantageusement, les groupes fluorés apolaires peuvent être de préférence covalamment liés aux ligands des structures MOF. Mais il peut y avoir en parallèle d'autres modes de greffage, tels que décrits ci-dessus.

Avantageusement, le métal de l'oxyde et/ou de l'hydroxyde métallique et/ou l'ion métallique peut être choisi parmi Li, Na, Rb, Mg, Ca, Sr, Ba, Sc, Ti, Zr, Ta, Cr, Mo, W, Mn, Fe, Ru, Os, Co, Ni, Pd, Pt, Cu, Au, Zn, AI, Ga, In, Si, Ge, Sn, Bi, Cd, Mn, Tb, Gd, Ce, La, ou Cr. De préférence, le métal de l'oxyde et/ou de l'hydroxyde métallique et/ou l'ion métallique peut être choisi parmi Zr, Zn, Fe, Al, ou Cr.

Avantageusement, le MOF peut être choisi parmi les structures cristallines suivantes : MIL-101, MIL-101-en, UiO-66, UiO-67, MIL-140A, MIL-140B, MIL-140C, UiO-66-2CF₃, UiO-66-NH₂, UiO-NDC, UiO-66-(CH₃)₂, UiO-67-CPHFP, MIL-140A-CPHFP, MIL-140B-CPHFP, MIL-140C-CPHFP, ZIF, ZIF-8, MIL-53, MIL-68, MIL-69 ou MIL-88B-4CH₃; de préférence MIL-101, UiO-66-2CF₃, UiO-67-CPHFP, MIL-140A-CPHFP, MIL-140B-CPHFP ou MIL-140C-CPHFP; de préférence MIL-101 ou UiO-66-2CF₃.

Avantageusement, le MOF peut être choisi parmi les structures cristallines suivantes : MIL-101, MIL-101-en, UiO-66, UiO-67, MIL-140A, MIL-140B, MIL-140C, UiO-66-2CF₃, UiO-66-NH₂, UiO-NDC, UiO-66-(CH₃)₂, UiO-67-CPHFP, ZIF, ZIF-8, MIL-53, MIL-68, MIL-69 ou MIL-88B-4CH₃; de préférence MIL-101, UiO-66-2CF₃, UiO-67 ou UiO-67-CPHFP; et l'ion métallique et/ou le métal de l'oxyde et/ou de l'hydroxyde métallique, lorsque la structure MOF tridimensionnelle ouvre la possibilité d'avoir différents types d'atome métallique, peut être choisi parmi Zr, Zn, Fe, Al, ou Cr.

Selon une variante, le MOF peut être tout spécialement adapté à l'adsorption de l'acide acétique de l'air ambiant (acide acétique en tant que composé organique volatil). Dans ce cas, le MOF pourra être sélectionné de préférence parmi les MOFs cristallin poreux cités ci-dessus ayant un caractère hydrophobe, et comprenant une taille moyenne de pores de 0,4 à 0,6 nm. Par exemple, il peut s'agir de l'un quelconque des MOFs décrits dans WO 2019/053048. On peut mentionner par exemple, les MOFs ayant l'une des structures cristallines suivantes : MIL-140B, MIL-140C, UiO-66-2CF₃, UiO-NDC, UiO-66-(CH₃)₂ , ZIF, par exemple ZIF-8, MIL-53, MIL-53-(CF₃)₂, MIL-69 et MIL-88B-4CH₃. De préférence, le MOF tout spécialement adapté à l'adsorption de l'acide acétique de l'air ambiant peut être choisi parmi les structures cristallines suivantes : MIL-140B, MIL-140C, UiO-66-2CF₃, UiO-NDC, UiO-66-(CH₃)₂ , MIL-53, MIL-53-(CF₃)₂, ou MIL-88B-4CH₃. Avantageusement, dans le MOF spécialement adapté à l'adsorption de l'acide acétique de l'air ambiant, l'ion métallique et/ou le métal de l'oxyde et/ou de l'hydroxyde métallique, lorsque la structure MOF tridimensionnelle ouvre la possibilité d'avoir différents types d'atome métallique, peut être choisi parmi Zr, Zn, Fe, Al, ou Cr.

La signification des expressions "MOF à caractère hydrophile" ou "MOF avec un core hydrophile", et inversement "MOF à caractère hydrophobe" ou "MOF avec un core hydrophobe", ne s'écarte pas de la signification conventionnelle de ces termes dans le domaine des MOF. Le caractère hydrophile / hydrophobe d'un MOF est directement lié au ligand organique d'un MOF. Un MOF hydrophile présente des ligands hydrophiles qui sont attirés par les molécules d'eau ; généralement, des ligands avec un groupe polaire qui permet de créer des liaisons hydrogène avec l'eau ou un solvant polaire (ex : -NH₂ ; -OH ; -NO₂). En revanche, les MOF hydrophobes, présenteront des ligands organiques qui ne sont pas attirés par l'eau (ex : -CH3). Autrement dit, un MOF à caractère hydrophobe contiendra des ligands hydrophobes. L'encombrement stérique autour des sites métalliques des MOF qui peuvent interagir avec l'eau peut également augmenter l'hydrophobie d'un matériau. Cela peut impliquer l'utilisation de ligands fonctionnalisés avec des groupes alkyles ou par densification de la partie inorganique. L'évaluation du caractère hydrophile / hydrophobe d'un MOF est bien connue de la personne du métier. Le caractère hydrophile ou hydrophobe d'un MOF peut être évalué expérimentalement en fonction de son affinité pour l'eau. En pratique, le caractère hydrophile/hydrophobe des MOF peut être déterminé en fonction de leur isotherme d'adsorption d'eau en phase vapeur. En particulier, la comparaison des points d'inflexion dans les isothermes d'adsorption d'eau permet d'évaluer le caractère hydrophobe d'un MOF et peut être corrélée avec l'énergie d'interaction de l'eau avec la surface des pores du MOF. Un matériau hydrophile présentera une isotherme de type I (matériau microporeux) avec une adsorption massive à basse pression partielle. Un matériau plutôt hydrophobe présentera une isotherme de type V, avec une adsorption significative pour une pression partielle intermédiaire (0,2 <P / P0 <0,6), en raison de la condensation capillaire dans les pores. Le cas extrême du matériau super-hydrophobe montrera une absence totale d'adsorption d'eau, quelle que soit la pression partielle. Voir référence **(48).** Le degré d'affinité pour l'eau (et donc le caractère hydrophile ou hydrophobe) d'un MOF peut également être évalué en représentant les résultats issus des isothermes d'adsorption d'eau sous forme de quantité d'eau adsorbée en fonction de la surface spécifique BET du MOF : plus les quantités d'eau adsorbées par surface spécifique BET sont élevées, plus le MOF est hydrophile. Inversement, plus les quantités d'eau adsorbées par surface spécifique BET sont faibles, plus le MOF est hydrophobe. Voir référence **(8).**

Les MOFs en général, et les matériaux MOF mentionnés dans les différents modes de réalisation décrits dans le contexte de la présente invention sont connus, et leur synthèse et caractérisation ont été rapportées dans la littérature. On pourra notamment à cet égard se référer au document WO 2019/053048. **(8)**

Le MOF UiO-NDC (également appelé "DUT-52") désigne un MOF de type UiO avec des ligands 1,4-naphtalènedicarboxylate.

Les MIL-140B et MIL-140C de l'Institut Lavoisier sont des MOF poreux dicarboxyliques de zirconium appartenant à la série MIL-140(A/B/C/D) construits à partir de chaînes d'oxyde de Zr constituées de polyèdres ZrO7 qui sont reliés dans six directions par des liaisons dicarboxylate aromatique pour définir des canaux mono-dimensionnels microporeux en forme de triangle. La formule générale du MOF MIL-140B est (ZrO(O2C-C10H6-CO2)). Le document V. Guillerm et coll. angew. Chemie Int. Ed. 2012, 51, 9267-9271 **(9)** divulgue ces MOFs et des exemples de protocoles pour leur fabrication.

L'UiO-66-2CF3 et UiO-NDC sont tous deux obtenus à partir du MOF UiO-66 (Universitetet i Oslo) de formule (Zr6O4(OH)4(O2C-O6H4-CO2)6) constitué de clusters (Zr6O4(OH)4) à ligands ou entretoises (« struts » en anglais) 1,4-benzodicarboxyliques. Le document J.H. Cavka et al, J. Am. Chem. Soc, 2008, 130, 13850-13851 **(10)** donne des exemples de protocoles pour obtenir des MOF de type UiO. L'UiO-66-2CF3 peut par exemple être obtenu par le protocole divulgué dans Q. Yang et al. Chem. Commun. 2011, 47, 9603-9605 **(11)** et S. Biswas et al. Eur. J. Inorg. Chem. 2013, 12, 12, 2154-2160. **(12)** UiO-NDC (NDC pour « 1,4-naphthalenedicarboxilic acid » en anglais cad acide 1,4-naphtalènedicarboxylique), également connu dans la littérature sous le nom de DUT-52, peut par exemple être obtenu par le protocole décrit dans les documents V. Guillerm et al. Angew. Chemie Int. Ed. 2012, 51, 9267-9271 **(9)** et V. Bon et al. CrystEngComm 2013, 15, 9572-9577 **(13).**

L'UiO-66-(CH3)2 est également un MOF constitué de clusters (Zr6O4(OH)4) avec des ligands ou entretoises (« struts » en anglais) 1,4-benzodicarboxylique. Le document Yuting Huang et al, Enhanced stability and CO2 affinity of a UiO-66 type metal-organic framework decorated with dimethyl groups, Dalton Trans, 2012, 41, 9283-9285 **(14)** décrit un exemple de protocole qui peut être utilisé pour obtenir le MOF UiO-66-(CH3)2.

Le ZIF (Zeolitic Imidazolate Framework) est un MOF constitué d'ions zinc coordonnés par quatre noyaux imidazolate de la même manière que les atomes de Si et d'AI sont reliés par covalamment par pontage via des oxygènes dans les zéolites. Le ZIF, par exemple le ZIF-8, peut être préparé par solvant thermique ou hydrothermique. Le document K. Park et coll. Acad. nat. Sci. 2006, 103, 10186-10191 **(15)** décrit ce MOF et ses protocoles de fabrication.

Le MIL-53 est un MOF de formule M(C8H3O4)(OH) constitué d'ions métalliques III (M = Cr, Al, Fe, Ga, In) coordonnés par des acides 1,4-benzodicarboxyliques, qui forment des solides poreux tridimensionnels constitués de chaînes d' octaèdres de MO4(OH)2 joint par les coins, reliés par des ligands 1,4-benzodicarboxylates pour former des canaux mono-dimensionnels en forme de losange (« diamond-shaped » en anglais). Les documents T. Loiseau, et al. Chem. Eur. J. 2004, 10, 1373-1382 **(16)** ou C. Serre et al. Chem. Soc. 2002, 124, 13519-13526 **(17)** ou T.R. Whitfield et al. 2005, 7, 1096-1103 **(18)** ou E.V. Anokhina et al. J. Am. Chem. Soc. 2005, 127, 15000-15001 **(19)** donnent des exemples de protocoles de fabrication de ce type de MOF. Les matériaux MIL-53 peuvent être greffés avec des groupes fonctionnels, de préférence avec des groupes perfluoro et alkyles sur les ligands 1,4-benzodicarboxylate, dans l'esprit de la présente invention pour améliorer fortement l'efficacité de capture des COV, de préférence polaires. Des exemples de tels matériaux sont le MIL-53(Fe)-(CF3) et le MIL-53(Fe)-(CH3) qui peuvent être obtenus par les protocoles illustratifs divulgués dans le document T. Devic et al. J. Am. Chem. Soc. 2010, 132 (3), 1127-1136 **(20).**

Le MIL-69 est un MOF de formule AI(OH)(O2C-C10H6-CO2)-H2O obtenu en utilisant l'acide 2,6-naphtalènedicarboxylique comme ligand rigide. La structure cristalline de ce MOF se compose de chaînes infinies d'octaèdres AIO4(OH)2 liés par les coins via des groupes µ2-hydroxyle et reliés par les ligands 2,6-naphtalènedicarboxylate. Il en résulte la formation de canaux plats parallèles aux chaînes d'octaèdres d'aluminium, s'étendant le long de l'axe c. Le document T. Loiseau et al, Hydrothermal Synthesis and Crystal Structure of a New Three-Dimensional Aluminum-Organic Framework MIL-69 with 2,6-Naphthalenedicarboxylate (ndc), AI(OH)(ndc)QH2O, C. R. Chimie, Spécial Issue on Crystalline and Organized Porous Solids, 8, 765-72 (2005) **(21),** présente des exemples de protocoles de fabrication de ce type de MOF.

Le MIL-88B(Fe)-4CH3 est un MOF dicarboxylate de fer(III) flexible hexagonal constitué de trimères d'octaèdres de fer(III) oxocentriques et de ligands téréphtalate de tétraméthyle formant des canaux microporeux 1D, de taille proche de 6 Angströms, ornés de groupes méthyle du ligand et de molécules d'H2O terminales de la sous unité inorganique. Sa surface BET est proche de 1500 m2/g tandis que son caractère flexible est limité à 25 % en volume unitaire de cellules. Le lecteur pourra se référer à Ramsahye, Naseem ; Khuong Trung, Thuy ; Scott, Lorna ; Nouar, Farid ; Devic, Thomas ; Horcajada, Patricia ; Magnier, Emmanuel ; David, Olivier ; Serre, Christian ; Trens, Philippe "Impact of the flexible character of MIL-88 iron(III) dicarboxylates on the adsorption of n-alkanes" Chem. Mater, 2013, 25, (3), 479-488 pour une description d'exemples de protocoles de fabrication de ce type de MOF. **(22)**

Avantageusement, le MOF peut être choisi parmi MIL-101(Cr), MIL-101(Cr)-en, UiO-66(Zr), UiO-67(Zr), MIL-140A(Zr), MIL-140B(Zr), MIL-140C(Zr), UiO-66-2CF₃(Zr), UiO-66-NH₂(Zr), UiO-NDC(Zr), UiO-66-(CH₃)₂(Zr), UiO-67-CPHFP(Zr), MIL-140A-CPHFP(Zr), MIL-140B-CPHFP(Zr), MIL-140C-CPHFP(Zr), ZIF, ZIF-8, MIL-53(M = Cr, Al, Fe, Ga, In), MIL-68(AI), MIL-69(AI) ou MIL-88B-4CH₃(Fe); de préférence MIL-101(Cr), UiO-66-2CF₃(Zr), UiO-67-CPHFP(Zr), MIL-140A-CPHFP(Zr), MIL-140B-CPHFP(Zr) ou MIL-140C-CPHFP(Zr) ; plus préférentiellement MIL-101(Cr) ou UiO-66-2CF₃(Zr).

Lorsqu'il est souhaité que le MOF soit spécialement adapté pour adsorber sélectivement l'acide acétique dans l'air ambiant, celui-ci pourra être choisi parmi MIL-140B(Zr), MIL-140C(Zr), UiO-66-2CF₃(Zr), UiO-NDC(Zr), UiO-66(Zr)-(CH₃)₂, ZIF, par exemple ZIF-8, MIL-53(Fe), MIL-53(Fe)-(CF₃)₂, MIL-69(AI) et MIL-88B(Fe)-4CH₃; de préférence MIL-140B(Zr), MIL-140C(Zr), UiO-66-2CF₃(Zr), UiO-NDC(Zr), UiO-66(Zr)-(CH₃)₂, MIL-53(Fe), MIL-53(Fe)-(CF₃)₂, ou MIL-88B(Fe)-4CH₃.

Avantageusement, le matériau MOF peut de préférence être sous une forme permettant une grande surface d'échange entre le MOF et l'environnement où les composés organiques volatils, de préférence polaires, doivent être captés par adsorption. Le MOF peut par exemple se présenter sous toute forme conventionnelle dans laquelle un adsorbant peut être utilisé à des fins de sorption/désorption, par exemple, mais sans s'y limiter, des nanoparticules, une poudre, une membrane, des granulés ou sous la forme d'un matériau composite, noyé dans ou appliqué sur la surface d'une feuille de papier ou d'un polymère ou d'une fibre. Par exemple, le document WO2009/123484 **(23)** décrit un procédé utile pour produire un matériau filtrant en mousse de polyuréthane ayant des capacités d'adsorption, qui peut être utilisé comme support pour un MOF utilisable dans le cadre de la présente invention. D'autres exemples incluent l'électropolymérisation de polymères contenant des particules de MOF, décrits par exemple dans les documents M. Rose et al. Mater. 2011, 13, 356-360 **(24),** R. Ostermann at al. Chem. Commun. 2011, 47, 442-444 **(25),** J. Ren et al. Int. J. Hydrogen Energy 2015, 40, 9382-9387 **(26)** et M.R. Khan et al. Ing. Performez. 2016, 25, 1276-1283 **(27)** qui conduisent à des matériaux composites fibreux avec un MOF supporté, et qui simplifient l'application/utilisation des MOFs pour l'adsorption des composés organiques volatils.

Quelle que soit leur méthode de préparation, les MOFs utilisables dans la mise en oeuvre du matériau composite selon la présente invention, peuvent être obtenus sous forme de poudre, de nanoparticules ou d'agglomérats.

Avantageusement, le MOF peut être sous forme de nanoparticules. Les nanoparticules de MOF ont une taille moyenne < 100 nm, par exemple ≤ 90 nm, par exemple ≤ 85 nm, par exemple ≤ 80 nm, par exemple ≤ 75 nm, par exemple ≤ 70 nm, par exemple ≤ 60 nm, par exemple ≤ 50 nm, par exemple ≤ 40 nm, par exemple ≤ 30 nm, ou même ≤ 20 nm. La détermination de la distribution granulométrique des nanoparticules de MOF peut être effectuée de préférence à l'aide de micrographies TEM, par exemple sur un ensemble de 100 nanoparticules. La taille moyenne des nanoparticules de MOF peut être calculée à partir de la distribution granulométrique selon les calculs statistiques usuels. De manière générale, les nanoparticules de MOF étant sphériques, « taille moyenne » correspond à « diamètre moyen ».

Des méthodes de préparation de matériaux MOF sous forme de nanoparticules sont bien connues. Le lecteur pourra notamment se référer à l'enseignement du document WO 2009/07767 **(28)** Typiquement, la synthèse de matériaux MOF peut être de préférence réalisée en présence d'énergie qui peut être apportée par exemple par le chauffage, comme par exemple des conditions hydrothermales ou solvothermales, mais également par micro-ondes, par ultrasons, par broyage, par un procédé faisant intervenir un fluide supercritique, etc. Les protocoles correspondants sont ceux connus de l'homme du métier. Les solvants utilisés sont généralement polaires. Notamment les solvants suivants peuvent être utilisés : l'eau, les alcools, le diméthylformamide, le diméthylsulfoxide, l'acétonitrile, le tétrahydrofurane, le diéthylformamide, le chloroforme, le cyclohexane, l'acétone, le cyanobenzène, le dichlorométhane, le nitrobenzène, l'éthylèneglycol, le diméthylacétamide ou des mélanges de ces solvants.

Un ou plusieurs co-solvants peuvent également être ajoutés à n'importe quelle étape de la synthèse pour une meilleure solubilisation des composés du mélange. Il peut s'agir notamment d'acides monocarboxyliques, tels que l'acide acétique, l'acide formique, l'acide benzoïque, etc.

Lorsque le co-solvant est un acide monocarboxylique, celui-ci, outre un effet solubilisateur, permet également d'arrêter la croissance cristalline du solide MOF. En effet, la fonction carboxylique se coordonne avec le fer, lequel ne pourra pas se lier à un autre atome de fer faute de la présence d'une seconde fonction -COOH sur la molécule de co-solvant. Ainsi, la croissance du réseau cristallin s'en trouve ralentie, puis arrêtée. L'ajout d'un co-solvant monocarboxylique, tel que l'acide acétique, l'acide formique, l'acide benzoïque, etc., permet ainsi de réduire la taille des particules de solide MOF obtenues. L'utilisation d'un co-solvant monocarboxylique peut donc favoriser l'obtention de nanoparticules (particules de taille < 1 µm).

En général, le contrôle de la taille des nanoparticules de MOF peut être effectué avec l'ajout d'une molécule monocarboxylée. Il peut s'agir d'un des co-solvants précités. Il peut également s'agir d'un agent de surface organique monocarboxylé portant un ou plusieurs groupes fluorés. Dans ce cas, celui-ci a la double fonction de :
- arrêter la croissance cristalline du réseau MOF (et donc de permettre l'obtention de nanoparticules de plus petit taille)
- modifier la surface des nanoparticules par greffage de groupements fluorés (fonction d'agent de surface organique).

Typiquement, les conditions expérimentales propices à la formation de nanoparticules passent par le contrôle de quelques paramètres. Par exemple, un contrôle des paramètres suivants peut être important pour la réalisation de nanoparticules de MOF:
- température de réaction,
- temps de réaction,
- concentrations en ligand et en précurseur inorganique métallique et/ou
- ajout d'un ou plusieurs additifs tel que des modulateurs de pH (acides, bases), minéralisateurs, ou agents favorisant l'arrêt de la croissante cristalline (monoacide carboxylique).

Les fourchettes de valeurs préférées de chacun de ces paramètres peuvent varier selon que la synthèse des nanoparticules est réalisée par la voie hydro/solvothermale, par ultrasons ou par micro-ondes. Par exemple, une température de réaction plus élevée sera généralement utilisée pour la voie hydro/solvothermale (environ 20-150°C) que pour la voie par ultra-sons (environ 0°C).

D'une manière générale, un MOF peut être obtenu sous forme de nanoparticules en utilisant les paramètres suivants :

### Voie solvothermale

- la température de réaction est de préférence entre 20 et 200°C, plus particulièrement entre 50 et 100°C, tout particulièrement entre 60 et 70°C
- le temps de réaction se situe entre 30 minutes et 72 heures, plus particulièrement entre 30 minutes et 12 heures, tout particulièrement entre 1 et 4 heures
- la concentration en ligand et en précurseur inorganique métallique se situe entre 1 et 200 mmol/L, plus particulièrement entre 30 et 100 mmol/L, tout particulièrement entre 60 et 70 mmol/L
- un monoacide carboxylique est ajouté, de préférence l'acide acétique. Il est entendu que d'autres additifs tel que des modificateurs de pH (acides, bases), minéralisateurs peuvent également être ajoutés.

### Voie ultrasons

- la température de réaction est de préférence entre -5°C et 20°C, plus particulièrement entre -5°C et 10°C, tout particulièrement entre -5°C et 5°C
- le temps de réaction se situe entre 15 minutes et 2 heures, plus particulièrement entre 15 minutes et 1 heure, tout particulièrement entre 15 et 45 minutes
- la concentration en ligand et en précurseur inorganique métallique se situe entre 10 mol/l et 10⁻² mol/l, plus particulièrement entre 1 et 10⁻² mol/l, tout particulièrement entre 50 et 200 mmol/l
- un monoacide carboxylique est ajouté, de préférence l'acide acétique. Il est entendu que d'autres additifs tel que des modificateurs de pH (acides, bases), minéralisateurs peuvent également être ajoutés.

### Voie micro-ondes

- la température de réaction est de préférence entre 30°C et 300°C, plus particulièrement entre 30°C et 150°C, tout particulièrement entre 50°C et 120°C
- le temps de réaction se situe entre 1 minute et 3 heures, plus particulièrement entre 10 et 50 minutes, tout particulièrement entre 1 et 30 minutes
- la concentration en ligand et en précurseur inorganique métallique se situe entre 200 mol/l et 10⁻² mol/l, plus particulièrement entre 100 et 10⁻² mol/l, tout particulièrement entre 10 et 10⁻² mol/l
- un modificateurs de pH est ajouté, de préférence l'acide chlorhydrique. Il est entendu que d'autres additifs tel que des modificateurs de pH (acides, bases), minéralisateurs ou agents favorisant l'arrêt de la croissante cristalline (monoacide carboxylique) peuvent également être ajoutés.

Le lecteur pourra également se référer à WO 2018/141685 **[47]** dans lequel on enseigne un procédé de préparation de MOFs à basse température permettant d'obtenir des nanoparticules de MOF de faible index de polydispersité. Ainsi, la taille moyenne des nanoparticules de MOF dans le contexte de la présente invention peut être ajustée entre 100 nm et 70 nm ou moins (une taille moyenne < 100 nm, par exemple ≤ 90 nm, par exemple ≤ 85 nm, par exemple ≤ 80 nm, par exemple ≤ 75 nm, par exemple ≤ 70 nm, par exemple ≤ 60 nm, par exemple ≤ 50 nm, par exemple ≤ 40 nm, par exemple ≤ 30 nm, ou même ≤ 20 nm), selon les conditions de réaction (une température plus basse et des conditions plus diluées favoriseront la formation de nanoparticules de taille moyenne plus petite). Par exemple, les nanoparticules de MOF peuvent avoir un indice de polydispersité de 0,05 ≤ PDI ≤ 0,5, de préférence 0,05 ≤ PDI ≤ 0,4, de préférence 0,05 ≤ PDI ≤ 0,3, tel que calculé selon la norme ISO 13321:1996 E et ISO 22412:2008.Les MOFs utilisables dans la mise en oeuvre du matériau composite selon la présente invention peuvent être utilisés en tant que tels comme adsorbants dans le matériau composite selon l'invention, soit seuls, soit avec d'autres adsorbants ou des matériaux supplémentaires (cad des additifs habituellement utilisés dans la confection des lits adsorbants, comme les liants, les lubrifiants ou autres additifs utilisés dans la préparation des adsorbants mis en forme, « adsorbent shaped bodies » en anglais).

Avantageusement, les MOFs utilisables dans la mise en oeuvre du matériau composite selon la présente invention peuvent être mis en forme en « shaped bodies » (p.ex. sous forme de pastilles, billes ou granules de différentes formes/géométries). Une telle mise en forme de matériaux MOF peut être effectuée par toute méthode appropriée connue dans l'art. Par exemple, ces méthodes connues comprennent l'extrusion, le moulage (« slip casting » en anglais), le frittage par plasma (« spark plasma sintering » en anglais) ou le compactage. Dans des modes de réalisation illustratifs, cette méthode peut comprendre le malaxage du MOF, soit seul, soit avec au moins un liant et/ou au moins un agent de collage et/ou au moins un composé template pour obtenir un mélange ; la mise en forme du mélange obtenu au moyen d'au moins une méthode appropriée telle que l'extrusion ; éventuellement le lavage et/ou le séchage et/ou la calcination de l'extrudat ; éventuellement un traitement de finition. Le lecteur pourra se référer par exemple aux documents US 2014/0213832 **(29)** et Permyakova A. et al (2017b) **(30)** pour un enseignement général sur la mise en forme de MOFs par des procédés de granulation. D'autres enseignements peuvent être trouvés dans Kim et al (2015). **(31)** Dans la mise en forme des MOFs sous forme de « shaped bodies », d'autres matériaux tels que liants, lubrifiants ou autres additifs peuvent être mélangés avec le MOF.

Les géométries possibles de ces adsorbants MOF mis en forme ne sont soumises à quasiment aucune restriction. On pourra mentionner, par exemple, les pastilles telles que les pastilles circulaires, les billes, les sphères, les granules, les extrudats tels que les barres/bâtonnets, les structures en nids d'abeille, les grilles ou les corps creux. Avantageusement, le MOF utilisable dans la mise en oeuvre du matériau composite selon la présente invention peut être mis en forme en particules sphériques, de préférence des particules sphériques de 1 à 2 mm de diamètre. Avantageusement, des nanoparticules métalliques de forme anisotrope, telles que décrites ci-après, peuvent être déposées à la surface des corps façonnés (p.ex. pastilles) de MOF. Ceci peut être réalisé une fois l'adsorbant MOF mis en forme en corps façonné.

Alternativement, des nanoparticules métalliques de forme anisotrope peuvent être intimement mélangées à l'adsorbant MOF, qui se trouve de préférence sous forme de nanoparticules, avant la mise en forme du MOF en corps façonné. Ceci peut être réalisé au moment de la préparation de l'adsorbant MOF sous forme de corps façonné, en procédant à la mise en forme des corps façonnés à partir d'un mélange, de préférence homogène, d'adsorbant MOF, de préférence sous forme de nanoparticules, et de nanoparticules métalliques de forme anisotrope. Ainsi, les nanoparticules métalliques de forme anisotrope se trouvent substantiellement uniformément dans tout le volume de chaque pastille (ou corps façonné) de l'adsorbant MOF.

L'un des grands avantages des MOFs décrits ci-dessus est qu'ils sont tout spécialement conçus pour éliminer/capter les COV (composés organiques volatils) nocifs de l'air à de très faibles concentrations, en présence d'une forte concentration de vapeur d'eau.

En tant que matériaux poreux, les MOFs en général ont été utilisés comme matériaux adsorbants et/ou filtres. Les MOFs peuvent adsorber une quantité importante d'eau et de composés organiques comme l'acide acétique ou l'acétaldéhyde, comme on peut s'y attendre d'un matériau poreux. Par exemple, des MOF ont été testés pour éliminer les quantités saturées de COV et les odeurs de l'air afin de démontrer leur grande capacité d'adsorption.

Cependant, les MOFs décrits dans le présent document, pour la mise en oeuvre de la présente invention, constituent une sélection très particulière de la famille des MOFs. Ils sont en effet capables d'éliminer efficacement des COV, en particulier polaires, à faible concentration dans des environnements gazeux à taux d'humidité élevé voire anormalement humides (cad avec une humidité relative > 30%, de préférence ≥35% d'humidité relative, encore de préférence ≥40% d'humidité relative, jusqu'à 100% d'humidité relative). En effet, dans les matériaux poreux tels que les MOFs en général, l'adsorption concurrente de l'eau (molécule polaire) entrave l'utilisation des MOFs génériques pour adsorber les composés organiques volatils polaires qui sont présents dans l'air en très faible concentration. La présence d'eau influence fortement l'adsorption des COV polaires lorsque la concentration de COV à éliminer est très faible.

Les MOFs utilisables dans le cadre de la présente invention, tels que décrits dans le présent document, permettent d'améliorer significativement l'élimination/la capture des COV, de préférence polaires, présents en très faibles concentrations (tant en pression absolue que relative) en présence de concentrations élevées de vapeur d'eau. Il s'agit donc de MOFs spécialement conçus chimiquement et structurellement pour une adsorption améliorée des composés organiques volatils, de préférence polaires, présents à faible concentration dans des environnements humides (cad à taux d'humidité élevé voire avec une humidité relative au-dessus de la normale).

Ainsi, les MOFs utilisables dans le cadre de la présente invention présentent de manière générale une bonne stabilité à l'humidité et permettent une meilleure adsorption des composés organiques volatils, de préférence polaires, à des concentrations de l'ordre de 10 ppb et 500 ppm, voire de 10 ppb à 100 ppm, dans un environnement > 30% d'humidité relative, de préférence ≥35% d'humidité relative, plus préférentiellement ≥40% d'humidité relative, jusqu'à 100% d'humidité relative. Dans une variante, les MOFs utilisables dans les matériaux composites selon la présente invention permettent avantageusement d'éliminer facilement les faibles concentrations d'acide acétique de l'air environnant dans les intérieurs, même en présence de taux d'humidité élevés voire supérieurs à la normale, par exemple dans les musées où la présence des COV comme l'acide acétique pose de sérieux problèmes de conservation. La contrainte supplémentaire pour la meilleure conservation des articles stockés dans ces lieux est une faible concentration moyenne maximale d'acide acétique, généralement entre 400 et 40 ppb. Les MOFs utilisables dans les matériaux composites selon la présente invention permettent avantageusement de répondre à cette contrainte.

### Nanoparticules métalliques

Toutes les nanoparticules métalliques de forme anisotrope, d'au moins un métal ou alliage de métaux ayant une bande plasmon dans le visible, sont potentiellement utilisables. Les propriétés optiques (couleur) de ces nanoparticules métalliques sont connues pour être fortement dépendantes de leur environnement. Le principe de l'invention repose sur la modification de la couleur des nanoparticules métalliques, et donc du matériau composite selon l'invention, induite par une modification des propriétés physico-chimiques des MOFs (indice de réfraction) suite à l'adsorption de COVs dans des conditions ambiantes d'humidité. La présence des nanoparticules métalliques précitées permet donc de détecter à l'oeil nu la présence de COVs mais aussi, entre autres, de mettre en évidence la saturation en polluants (COVs) du matériau adsorbant. L'intégration des nanoparticules métalliques précitées dans le matériau composite selon l'invention, pour utilisation comme indicateurs optiques permet notamment d'optimiser l'utilisation des adsorbants de type MOFs par une indication visuelle de leur taux de remplissage et/ou de leur saturation en polluants (COVs).

Avantageusement, le métal peut être choisi parmi Au, Ag, Cu et Pd ou mélange homogène ou non ou alliage de ceux-ci. Avantageusement, les nanoparticules métalliques peuvent être en forme de bipyramide, bâtonnet ou étoile. Les nanoparticules métalliques en Au, Ag, Cu et Pd ou mélange homogène ou non ou alliage de ceux-ci, sous forme de bipyramides sont avantageusement préférées. Avantageusement, les nanoparticules métalliques peuvent être mono- ou bimétalliques, ou un mélange de différents types de nanoparticules métalliques, parmi celles décrites précédemment, peut être utilisé. De préférence, les nanoparticules métalliques de forme anisotrope peuvent avantageusement être sous forme de nanobypiramides, nanobâtonnets et/ou nanoétoiles ; de préférence sous forme de nanobypiramides et/ou nanobâtonnets ; tout particulièrement sous forme de nanobypiramides. Les nanobipyramides d'or sont avantageusement préférées.

Ce type de nanoparticules métalliques (« (B)MNPs ») est connu, ainsi que leurs méthodes de préparation. Le lecteur pourra par exemple se référer à l'ouvrage Metal nanoparticles and nanoalloys, volume 3, 1st Edition, Johnston, R.; Wilcoxon, J. Ed.; Elsevier 2012.

(B)MNPs anisotropes d'or : M. Liu, P. Guyot-Sionnest, J. Phys. Chem. B 109 (2005) 22192-22200 **(32),** dans lequel sont étudiées les conditions expérimentales pour augmenter le rendement des nanobipyramides. Liu et al. ont par exemple mis en exergue que l'un des facteurs importants est la cristallinité des germes d'or cristallins (en anglais « gold seeds ») utilisés dans l'approche de la cristallogénèse par nucléation/croissance (en anglais « seeded growth approach »). Le lecteur pourra également se référer aux travaux de N.K. Geitner et al. **(33).**

(B)MNPs anisotropes d'argent : Le lecteur pourra par exemple se référer aux travaux de J. Reguera et al.**(44)**

(B)MNPs anisotropes de cuivre : Le lecteur pourra par exemple se référer aux travaux de M. B. Gawande et **al.(45)**

(B)MNPs anisotropes de palladium : Le lecteur pourra par exemple se référer à J. Zhang, H. Li, Z. Jiang, Z. Xie, Phys. Sci. Rev., 2018, 3, doi 10.1515/psr-2017-0101.**(46)**

L'approche de la cristallogénèse par nucléation/croissance est souvent utilisée pour la synthèse de nanoparticules anisotropes puisqu'elle permet de découpler les étapes de nucléation et de croissance.

La formation des nanoparticules anisotropes souhaitées peut notamment être induite par un contrôle des germes (taille, cristallinité).

L'utilisation d'agents réducteurs spécifiques peut permettre de moduler/contrôler les paramètres de taille et/ou de cristallinité des germes de nanoparticules métalliques.

On peut citer par exemple le borohydrure de sodium, l'acide L-ascorbique, ou le citrate de sodium. Ces agents réducteurs peuvent être utilisés pour tous les métaux considérés, notamment dans le cas des germes cristallins d'or.

L'ajustement du pH peut également s'avérer utile pour ralentir la vitesse de croissance des nanoparticules, et influencer ainsi la taille des germes cristallins métalliques.

D'autres réactifs peuvent être utilisés pour diriger la croissance des germes métalliques et induire la formation de nanoparticules anisotropes. On peut mentionner Ag⁺ par exemple. Ag⁺ est aussi souvent utilisé pour contrôler le rapport d'aspect (en anglais « aspect ratio »), pour augmenter le rendement et l'homogénéité (monodispersité), en taille et en forme, final des nanoparticules anisotropes.

Des surfactants spécifiques peuvent être utilisés afin d'orienter/de favoriser la croissance anisotrope de nanoparticules métalliques. Par exemple, le CTAB (bromure de cétyltriméthylammonium) peut être utilisé en particulier pour la synthèse de nanobâtonnets.

Outre leurs propriétés optiques, les nanoparticules métalliques pourront être sélectionnées sur la base de leur stabilité chimique à l'oxydation. Par exemple, les nanoparticules d'or peuvent être avantageuses en raison de leurs propriétés optiques notoires mais aussi pour leur stabilité chimique à l'oxydation.

Les propriétés optiques des nanoparticules métalliques peuvent être accordées en modifiant différents paramètres tels que la composition (nature du métal, nanoparticules bimétalliques...), la taille, la forme (nanosphères, nanobâtonnets, nanofils...) et l'environnement (agent stabilisateur/fonctionnel...) **(34-36).** Par exemple, la forme des nanoparticules d'or peut influencer drastiquement la position et le nombre de leur(s) bande(s) d'extinction mais aussi leur sensibilité à une modification de leur environnement, c'est-à-dire un décalage de la ou des bande(s) d'extinction en fonction de l'indice de réfraction du milieu environnant **(36).** Ce déplacement de la ou des bandes d'extinction entraîne un changement de couleur plus ou moins prononcé et les nanoparticules d'or peuvent donc être utilisées pour la conception de dispositifs colorimétriques objets de la présente invention.

Toutes les nanoparticules anisotropes ayant une réponse (absorption/diffusion) dans le visible sont susceptibles d'être intéressantes pour la mise en oeuvre de la présente invention. Avantageusement, le choix du type (nature du métal) et de la forme des nanoparticules se portera de préférence vers celles présentant une réponse optique optimale suite à une variation de l'indice de réfraction du milieu environnant. Les nanoparticules métalliques sont sous forme de bipyramides. Par exemple, le choix peut avantageusement se porter sur les nanobipyramides d'or qui présentent une grande variation d'absorption/diffusion (dans le visible) pour une variation donnée de l'indice de réfraction (donc un changement de couleur le plus marqué) - cf. la partie « Exemples ».

Les nanoparticules métalliques anisotropes dans le contexte de l'invention peuvent en général avoir une forme allongée, avec un grand axe (longueur) et petit axe (largeur). Les nanoparticules métalliques anisotropes peuvent avoir une taille moyenne du grand axe ≤ 100 nm, par exemple entre 40 et 100 nm, voire 40-80 nm ; et une taille moyenne du petit axe ≤ 50 nm, par exemple entre 5 et 50 nm, par exemple entre 5 et 40 nm, voire 5-30 nm. La détermination de la distribution de taille des nanoparticules métallique peut être effectuée de préférence à l'aide de micrographies TEM, par exemple sur un ensemble de 100 nanoparticules métalliques. La longueur (dimension moyenne du grand axe) et la largeur (dimension moyenne du petit axe) moyennes des nanoparticules métalliques anisotropes peuvent être calculées à partir de la distribution de taille selon les calculs statistiques usuels.

Le rapport d'aspect (rapport longueur moyenne/largeur moyenne) des nanoparticules métalliques anisotropes dans le contexte de l'invention peut être de préférence ajusté de façon à ce que la bande d'extinction soit située dans la région visible. Par exemple, le rapport d'aspect des nanoparticules métalliques anisotropes peut être de 1.5 à 10, par exemple de 2 à 8, par exemple de 2 à 6, par exemple de 2 à 5, par exemple de 2 à 3. Par exemple, les nanoparticules métalliques anisotropes peuvent être des nanoparticules d'or bipyramidales avec un rapport d'aspect de 2 à 3, par exemple autour de 2,5. On notera que l'effet du rapport d'aspect est sensiblement le même quel que soit le métal considéré (Au, Ag, Cu et Pd, ou mélanges homogènes ou non ou alliages). En revanche, le positionnement final des bandes d'extinction dans le domaine du visible varie en fonction du métal. Par exemple, la bande d'extinction pour des nanoparticules sphériques (10 nm) se situe autour de 520 nm pour l'or, et plutôt autour de 420 nm pour l'argent. Lorsque l'on passe aux nanoparticules anisotropes, la bande d'extinction d'intérêt sera déplacée vers les hautes longueurs d'onde lorsque le rapport d'aspect augmente mais en partant de 420 nm pour l'argent et de 520 nm pour l'or. Ceci étant, les gammes de rapport d'aspect des nanoparticules métalliques anisotropes données ci-dessus (de 1.5 à 10, par exemple de 2 à 8, par exemple de 2 à 6, par exemple de 2 à 5, par exemple de 2 à 3, voire autour de 2,5) permettent de balayer tout le domaine du visible pour toutes les nanoparticules anisotropes (monométalliques Au, Ag, Cu et Pd, ou mélanges homogènes ou non ou alliages).

Avantageusement, on pourra utiliser un mélange d'au moins deux types de nanoparticules anisotropes de métal choisi parmi Au, Ag, Cu et Pd ou mélange homogène ou non ou alliage de ceux-ci, par exemple de formes différentes (p.ex. des nanopyramides et des nanobâtonnets d'or).

La présence de nanoparticules de métal choisi parmi Au, Ag, Cu et Pd ou mélange homogène ou non ou alliage de ceux-ci, de forme isotropes (p.ex. des nanosphères d'or, présentes avec des nanopyramides et/ou nanobâtonnets d'or) n'est pas préjudiciable à la mise en oeuvre de la présente invention.

### Préparation du matériau composite

Le matériau composite peut se présenter sous toute forme adaptée à sa fonction d'indicateur optique. Par exemple, il peut se présenter sous la forme d'une poudre, de granulés (« pellets »), de corps façonnés tels que décrits précédemment, ou d'une couche mince.

Avantageusement, le matériau composite selon l'invention peut être mis en forme sous la forme d'une couche mince. Les techniques usuelles de croissance de couches minces, adaptées aux MOFs, peuvent être utilisées. Par exemple, on pourra utiliser la technique de pulvérisation, l'enduction centrifuge (en anglais « spin coating ») ou l'enduction par trempage (en anglais « dip coating »).

Le matériau MOF et les nanoparticules métalliques peuvent être mis en forme, de préférence en couche mince, soit par dépôt successif des deux constituants, soit par dépôt d'un mélange des deux constituants. De préférence, les nanoparticules métalliques sur lesquelles on fait croître le MOF qui recouvre tout ou partie des nanoparticules métalliques, sont exclues du cadre de la présente invention. Les méthodes conventionnelles de dépôt en couche mince telles que celles précitées peuvent être utilisées.

Pour ce faire, les dépôts pourront par exemple être réalisés à partir :
- de deux suspensions colloïdales : une suspension colloïdale de nanoparticules d'au moins un MOF et une suspension colloïdale de nanoparticules de forme anisotrope d'au moins un métal ou alliage de métaux, tels que définis précédemment, dans un solvant organique ou aqueux ; ou
- d'une suspension colloïdale d'un mélange de nanoparticules d'au moins un MOF et de nanoparticules de forme anisotrope d'au moins un métal ou alliage de métaux, tels que définis précédemment, dans un solvant organique ou aqueux. Avantageusement, le solvant peut être H₂O, un solvant volatil tel qu'un alcool, par exemple EtOH, ou un mélange hydroalcoolique. De préférence, l'utilisation d'un mélange hydroalcoolique pourra être avantageuse, notamment pour la qualité du film composite et la reproductibilité de sa confection. Le solvant pourra être utilisé dans toute la gamme de ratio volumique eau/alcool 100/0 à 0/100, de préférence 100/0 à 25/75, de préférence 60/40 à 40/60, de préférence 55/54 à 45/55, tout préférentiellement environ 50/50. Avantageusement, l'alcool utilisé pourra être l'éthanol ou le méthanol, de préférence l'éthanol, dans les gammes de ratio volumétrique eau/alcool précitées.

Ainsi, selon un aspect, la présente invention concerne un procédé de préparation d'un matériau composite selon l'invention, comprenant une étape de préparation
- de deux suspensions colloïdales : une suspension colloïdale de nanoparticules d'au moins un MOF tel que défini précédemment et une suspension colloïdale de nanoparticules de forme anisotrope d'au moins un métal ou alliage de métaux, tels que définis précédemment, dans un solvant organique ou aqueux ; ou
- d'une suspension colloïdale d'un mélange de nanoparticules d'au moins un MOF et de nanoparticules de forme anisotrope d'au moins un métal ou alliage de métaux, tels que définis précédemment, dans un solvant organique ou aqueux.

Comme précédemment discuté, les nanoparticules de MOF ont un diamètre moyen (ou une taille moyenne du plus grand axe si les particules sont de forme asymétrique) inférieur à 100 nm. Les nanoparticules de MOF peuvent avoir une taille moyenne ≤ 90 nm, par exemple ≤ 85 nm, par exemple ≤ 80 nm, par exemple ≤ 75 nm, par exemple ≤ 70 nm, par exemple ≤ 60 nm, par exemple ≤ 50 nm, par exemple ≤ 40 nm, par exemple ≤ 30 nm, ou méme ≤ 20 nm. Les nanoparticules de MOF peuvent avoir en outre un indice de polydispersité de 0,05 ≤ PDI ≤ 0,5, de préférence 0,05 ≤ PDI ≤ 0,4, de préférence 0,05 ≤ PDI ≤ 0,3, tel que calculé selon la norme ISO 13321:1996 E et ISO 22412:2008.

De préférence, les nanoparticules de forme anisotrope d'au moins un métal ou alliage de métaux, tels que définis précédemment, sont sous forme de nanobypiramides. Les modes de réalisation détaillés *supra* concernant les rapports d'aspect des nanoparticules métalliques anisotropes s'appliquent ici *mutatis mutandis.*

Avantageusement, le procédé peut comprendre en outre une étape de dépôt du matériau composite en couche mince sur un substrat par pulvérisation, enduction par trempage (« dip coating » en anglais) ou enduction centrifuge (« spin coating » en anglais), de préférence par enduction trempage, d'une suspension colloïdale précitée.

L'étape de de dépôt du matériau composite en couche mince peut être réalisée à toute température adaptée au mode de dépôt considéré. De préférence, la température peut être comprise entre 20°C et 90°C, de préférence entre 30°C et 90°C, de préférence entre 40°C et 90°C, de préférence entre 50°C et 90°C, de préférence entre 60°C et 90°C, de préférence entre 70°C et 90°C, tout préférentiellement environ 80°C (78-82°C). Avantageusement, l'étape de dépôt du matériau composite en couche mince peut être réalisée par enduction par trempage, d'une suspension colloïdale précitée, dans les gammes de température précitées.

Dans une variante tout particulièrement avantageuse, l'étape de dépôt du matériau composite en couche mince peut être réalisée par enduction par trempage (« dip-coating »),
- de deux suspensions colloïdales (une suspension de MOF et une suspension de nanoparticules métalliques, telles que définies précédemment), ou bien d'une suspension colloïdale d'un mélange de MOF et de nanoparticules métalliques, tels que définis précédemment, dans un solvant aqueux ou organique, de préférence hydroalcoolique, dans toute la gamme de ratio volumique eau/alcool 100/0 à 0/100, de préférence 100/0 à 25/75, de préférence 60/40 à 40/60, de préférence 55/54 à 45/55, tout préférentiellement environ 50/50. Avantageusement, l'alcool utilisé pourra être l'éthanol ou le méthanol, de préférence l'éthanol, dans les gammes de ratio volumétrique eau/alcool précitées. Le ratio massique MOF/nanoparticules métalliques est compris entre 100/1 et 0,1/1 ; de préférence entre 50/1 et 1/1 ; de préférence entre 20/1 et 1/1 ; de préférence entre 15/1 et 5/1 ; de préférence entre 12/1 et 8/1 ; tout préférentiellement environ 10/1 ; et
- dans les gammes de température précitées, à savoir une température comprise entre 20°C et 90°C, de préférence entre 30°C et 90°C, de préférence entre 40°C et 90°C, de préférence entre 50°C et 90°C, de préférence entre 60°C et 90°C, de préférence entre 70°C et 90°C, tout préférentiellement environ 80°C (78-82°C).

Il peut s'agir du dépôt d'une seule suspension colloïdale contenant les deux constituants (MOF et nanoparticules métalliques). Le MOF est sous forme de nanoparticules, par exemple sous forme de poudre ou de corps façonnés (par exemple des pastilles), tels que décrits précédemment.

Alternativement, il peut s'agir de dépôts successifs de deux suspensions colloïdales, l'une contenant le MOF, l'autre les nanoparticules métalliques. De la même manière, le MOF est sous forme de nanoparticules, par exemple sous forme de poudre ou de corps façonnés (par exemple des pastilles), tels que décrits précédemment.

Avantageusement, le support sur lequel le matériau composite selon l'invention est déposé sous forme de couche mince, peut être tout support adapté. Le support choisi dépendra de la mise en forme finale du matériau composite, et de l'application envisagée. Avantageusement, le support peut être de préférence transparent, tel que le verre ou un plastique. Cette mise en forme est particulièrement adaptée à une application comme dispositif/indicateur optique pour le taux de remplissage de l'adsorbant MOF en composés organiques volatils, de préférence polaires.

### Dispositif colorimétrique

Selon un autre aspect, l'invention concerne un dispositif comprenant un matériau composite selon l'invention, pour la détection optique de la saturation d'un adsorbant MOF en composés organiques volatils. Les composés organiques volatils sont de préférence polaires, mais pas nécessairement.

Avantageusement, dans le cadre de la présente invention, les composés organiques volatils peuvent être choisis parmi l'acide acétique, l'acétaldéhyde, le formaldéhyde ou un mélange d'au moins deux de ceux-ci. De préférence il s'agit de l'acide acétique.

Avantageusement, le dispositif peut comprendre un matériau composite selon l'invention, mis en forme en couche mince, tel que décrit précédemment.

Alternativement, le dispositif peut comprendre un matériau composite selon l'invention, dans lequel l'adsorbant MOF est sous forme de pastilles, ou corps façonnés, tels que décrits précédemment. Dans ce cas, les nanoparticules métalliques de forme anisotrope, telles que décrites précédemment, peuvent être déposées à la surface des corps façonnés (p.ex. pastilles) de MOF (ceci peut être réalisé une fois l'adsorbant MOF mis en forme en corps façonné). Alternativement, les nanoparticules métalliques de forme anisotrope peuvent être intimement mélangées à l'adsorbant MOF, qui se trouve de préférence sous forme de nanoparticules, de sorte que les nanoparticules métalliques de forme anisotrope se trouvent substantiellement uniformément dans tout le volume de chaque pastille (ou corps façonné) de l'adsorbant MOF. Ceci peut être réalisé au moment de la préparation de l'adsorbant MOF sous forme de corps façonné, en procédant à la mise en forme des corps façonnés à partir d'un mélange, de préférence homogène, d'adsorbant MOF, de préférence sous forme de nanoparticules, et de nanoparticules métalliques de forme anisotrope.

### Utilisations

Selon un autre aspect, l'invention concerne l'utilisation d'un matériau composite selon l'invention, comme indicateur optique pour la saturation d'un adsorbant MOF en composés organiques volatils, de préférence polaires. Avantageusement, l'adsorbant MOF peut être plongé dans un environnement gazeux, tel que l'air, où les composés organiques volatils, de préférence polaires, sont présents à une concentration comprise entre 10 ppb et 500 ppm, avec une humidité relative > 30 %, de préférence ≥35 % d'humidité relative, plus préférentiellement ≥40% d'humidité relative.

Le dispositif selon l'invention peut avantageusement être utilisé dans une variété d'applications, par exemple, dans le cadre de la dépollution d'enceintes du type logements, bureaux, habitacles automobiles, ou plus spécifiquement dans le cadre de l'exposition et de la conservation des objets du patrimoine.

### EQUIVALENTS

Les exemples représentatifs qui suivent sont destinés à illustrer l'invention et ne sont pas destinés à limiter la portée de l'invention, ni ne doivent être interprétés comme tels.

Les exemples qui suivent contiennent des informations importantes supplémentaires, d'exemplification et d'enseignement qui peuvent être adaptés à la pratique de cette invention dans ses divers modes de réalisation.

Les exemples suivants sont donnés à titre indicatif et sans aucun caractère limitatif de l'invention.

### EXEMPLES

La personne du métier dispose d'une solide littérature de la chimie des MOFs de laquelle elle peut tirer parti, en combinaison avec les informations contenues dans ce document, pour des renseignements sur les stratégies de synthèse, les groupes protecteurs, et d'autres matériaux et des méthodes utiles pour la synthèse des matériaux composites de cette invention.

Les différents documents de brevets et autres références citées dans le présent document fournissent des informations générales utiles sur la préparation des composés similaires aux composés selon l'invention décrits dans la présente, ou intermédiaires pertinents.

De plus, la personne du métier pourra se référer à l'enseignement et aux exemples spécifiques fournis dans le présent document, se rapportant à divers exemples de composés et leurs intermédiaires, pour mettre en oeuvre la présente invention dans toute sa portée.

La synthèse et caractérisation des MOFs MIL-101(Cr), MIL-101(Cr)-EN, ZIF-8, UiO-66(Zr), UiO-66-NH₂, UiO-66-2CF₃, UiO-NDC, MIL-140A, MIL-140B, MIL-53-2CF₃ sont connues, et ont été rapportées notamment dans le document WO 2019/053048. **(8)**

Dans les Exemples qui suivent, les données de surface spécifique, volume poreux et/ou taille moyenne des pores des MOFs ont été extraites de la littérature, ou bien ont été mesurées expérimentalement. Sauf mention contraire, lorsque les données ont été déterminées expérimentalement, la surface spécifique de chaque MOF a été obtenue sur la base des isothermes d'adsorption-désorption de N₂ à -196°C, par la méthode Brunauer-Emmett-Teller (BET). Les isothermes d'adsorption-désorption de l'azote (Air Liquid, 99,999%) ont été mesurés à -196 °C en utilisant un bain cryogénique d'azote liquide, dans un appareil automatique volumétrique (Micromeritics, ASAP 2010). Sauf mention contraire, avant la mesure, les échantillons ont été dégazés à 150 °C pendant au moins 8 h sous vide (à une pression inférieure à 0,133 Pa). Le volume poreux total de chaque MOF a été déduit de la surface spécifique BET et des isothermes d'adsorption-désorption de N₂. La taille moyenne des pores des MOFs a été calculée sur la base des courbes de distribution de la taille des pores en utilisant la méthode de Barrett-Joyner-Halenda (BJH).

### Exemple 1: Synthèse de nanoparticules de MOF

### 1. ZIF-8(Zn)

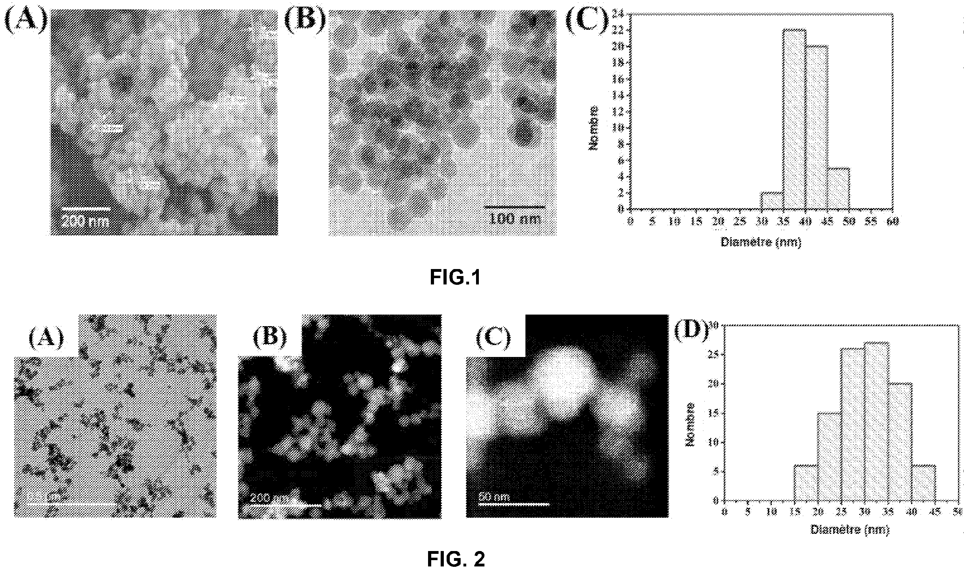

La préparation de nanoparticules ZIF-8 sous forme d'une suspension colloïdale stable a été réalisée selon le protocole décrit par Gravillon et al **(37,38).** Dans cette procédure, 2,933 g de Zn(NO3)2,6H2O (10 mmol) ont été dissous dans 200 mL de méthanol, puis ont été mélangés à une solution contenant 6,489 g de 2-méthylimidazole (80 mmol) dissous dans 200 mL de méthanol à température ambiante pendant 1 heure. La solution finale a été centrifugée à 14500 tr/min pendant 15 minutes. Après l'élimination du solvant, le solide a été redispersé et lavé dans de l'éthanol absolu. Cette opération a été effectuée trois fois pour obtenir une suspension colloïdale stable de nanoparticules de ZIF-8. La basse température permet de diminuer la cinétique de la croissance du MOF et peut donc conduire plus facilement à des nanoparticules de petite taille. La taille moyenne des nanoparticules ZIF-8 obtenues est d'environ 40 ± 10 nm (Figure 1).

### 2. MIL-101(Cr)

Les nanoparticules MIL-101(Cr) ont été obtenues dans des conditions de synthèse hydrosolvothermale assistée par micro-ondes **(39).** Une solution contenant 1,482 g de Cr(NO3)3.9H2O (3,7 mmol), 615 mg d'acide téréphtalique (3,7 mmol) dissous dans 20 mL d'eau a été placée dans un autoclave en téflon et chauffée à 200 °C en 4 minutes et maintenue à cette température pendant 1 minute. L'autoclave en téflon a été laissé à refroidir jusqu'à 80°C et a été ouvert pour la filtration du produit obtenu. Le filtrat a ensuite été prélevé et centrifugé une première fois à 14500 tr/min pendant 50 min. Le résidu a été suspendu dans l'eau et centrifugé (14500 tr/min pendant 50 min) afin d'éliminer l'excès de sel de chrome n'ayant pas réagi. Le solide obtenu a ensuite été redispersé dans de l'éthanol absolu pour l'élimination du ligand organique, puis a été centrifugé (14500 tr/min pendant 50 min). Cette opération a été répétée trois fois afin d'obtenir une suspension colloïdale stable de nanoparticules de MIL-101(Cr).

Le choix de cette voie de synthèse repose sur deux raisons. Premièrement, l'utilisation des micro-ondes favorise généralement la formation de nombreux sites de nucléation et, par conséquent, favorise la croissance de nanoparticules de petite taille. La deuxième raison est liée à la faible solubilité de l'acide téréphtalique (le ligand organique) dans l'eau, qui augmente cependant considérablement à haute température. Une meilleure solubilité des réactifs et la formation rapide de sites de nucléation ont conduit à la formation de nanoparticules MIL-101(Cr) d'environ 30 ± 15 nm (Figure 2).

### 3. UiO-66(Zr)

Différentes conditions de synthèse ont été évaluées/comparées pour la préparation de nanoparticules d'UiO-66 (< 100 nm). En particulier, l'impact de la température de réaction, le choix du précurseur métallique et du modulateur (acide monocarboxylique agissant comme ligand compétitif) sur la taille des particules a été étudié.
Températures testées : 60, 90 et 120°C
Sels métalliques testés : ZrCl4, ZrOCI2.8 H2O

Modulateurs testés : acide benzoïque, acide acétique, acide formique, acide trifluoroacétique.

### 3.1. Synthèse de nanoparticules d'UiO-66 (protocole de Shi (40))

320 mg d'acide téréphtalique (2 mmol), 2,44 g d'acide benzoïque (20 mmol) et 0,99 mL de HCl (37 % dans l'eau, 12 mmol) ont été ajoutés sous agitation à 36 mL de DMF dans un ballon de 50 mL. Le mélange a ensuite été chauffé à 60°C. Après dissolution, 644 mg de ZrOCl2.8H2O (2 mmol) ont été ajoutés à la solution. La réaction a été arrêtée juste après 7h. La solution a ensuite été centrifugée et le matériau a été lavé trois fois avec du DMF et trois fois avec de l'éthanol.

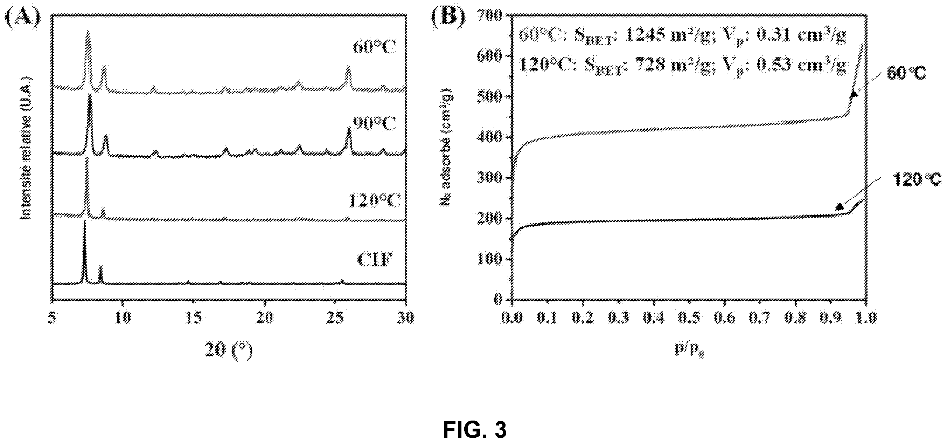

Les échantillons d'UiO-66 obtenus ont été caractérisés par PXRD, BET et SEM. Les diagrammes PXRD des UiO-66 synthétisés à 60, 90 et 120°C correspondent bien à ceux de l'UiO-66 (Figure 3A). A noter que la surface spécifique BET et le volume des pores, déduits par la méthode BET et la méthode t, de l'échantillon obtenu à 60°C présentent des valeurs beaucoup plus élevées que l'échantillon obtenu à 120°C : 1245 contre 728 m²/g (SBET) et 0,53 contre 0,31 cm3/g (volume des pores) (Figure 3B). Ces différences peuvent être attribuées à la présence de défauts dans la structure de l'UiO-66, particulièrement lorsque l'échantillon est préparé à 60°C.

On observe dans l'ensemble, une augmentation de la surface spécifique et du volume des pores pour les échantillons synthétisés lorsque la température de synthèse est réduite.

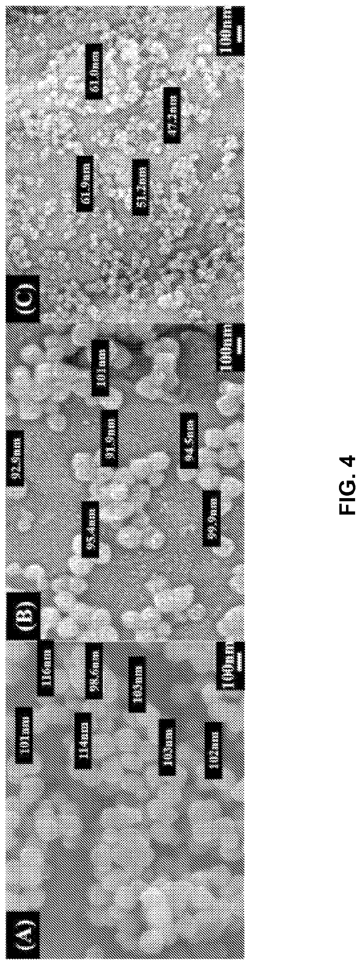

De plus, les micrographies du MEB montrent que la taille des nanoparticules d'UiO-66 est également affectée par la température de synthèse (Figure 4). On observe que les nanoparticules plus petites d'UiO-66 sont favorisées lorsque les températures de réaction diminuent. L'estimation précise de la distribution granulométrique peut être effectuée de préférence à l'aide de micrographies TEM. Néanmoins, les clichés de micrographie MEB montrent que la taille moyenne des particules pour chaque échantillon est d'environ 110, 90 et 50 nm pour les matériaux obtenus à 120, 90 et 60°C respectivement. Par conséquent, la température de réaction préférentielle a été fixée à 60°C pour la formation de nanoparticules plus petites.

### Le choix du sel métallique

Le rôle de l'eau, de l'acidité et de la température sur la cinétique de cristallisation est connu. Ces données peuvent être prises en compte pour réduire le temps de réaction et obtenir des nanoparticules d'UiO-66. Par exemple, l'ajout de HCl diminue le temps d'induction et accélère la cinétique de cristallisation. Dans le cas de l'eau, son impact sur la cinétique de cristallisation est plus important que celui du HCl. Le ZrCl4 est un métal précurseur de haute réactivité, dont l'hydrolyse peut conduire à une quantité ultérieure de HCl (voir équation 1). Par conséquent, en utilisant ce précurseur, il peut être difficile de contrôler la nucléation et la croissance du MOF. Pour ces raisons, le ZrCl4 a été remplacé par le ZrOCI2.8H2O, qui peut former lors de la dissolution un oxo-amas de zirconium préformé (Zr4(OH)8(H2O)16]Cl8(H2O)12) de faible réactivité. Il a été observé que ce précurseur conduisait à des cristallites plus petites (quelques centaines de nm) que dans le cas du ZrCl4. La réaction de ZrOCl2.8H2O avec le ligand H2BDC (voir équation 2) conduit à une quantité inférieure de HCl par rapport à la réaction avec ZrCl4. Cela peut donc affecter le pH du milieu réactionnel.

6*ZrCl₄* + 6*H₂BDC* + 8*H*₂*O* → *Zr*₆*O*₄(*OH*)₄(*BDC*)₆ + 24*HCl* **(1)**

6*ZrOCl*₂*.*8*H*₂*O* + 6*H*₂*BDC* → *Zr*₆*O*₄(*OH*)₄(*BDC*)₆ + 12*HCl* + 6*H*₂*O* **(2)**

### 3.2. Synthèse de nanoparticules d'UiO-66 à partir de ZrOCl₂.8H₂O

320 mg d'acide téréphtalique (2 mmol), 2,44 g d'acide benzoïque (20 mmol) et 0,33 mL de HCl (37 % dans l'eau, 4 mmol) ont été ajoutés sous agitation à 36 mL de DMF dans un ballon de 50 mL. Le mélange est ensuite chauffé à 60°C. Après dissolution, 644 mg de ZrOCl2.8H2O (2 mmol) sont ajoutés à la solution. La réaction a été stoppée juste après 24h. La solution a ensuite été récupérée par centrifugation et le matériau a été lavé trois fois avec du DMF et trois fois avec de l'éthanol.

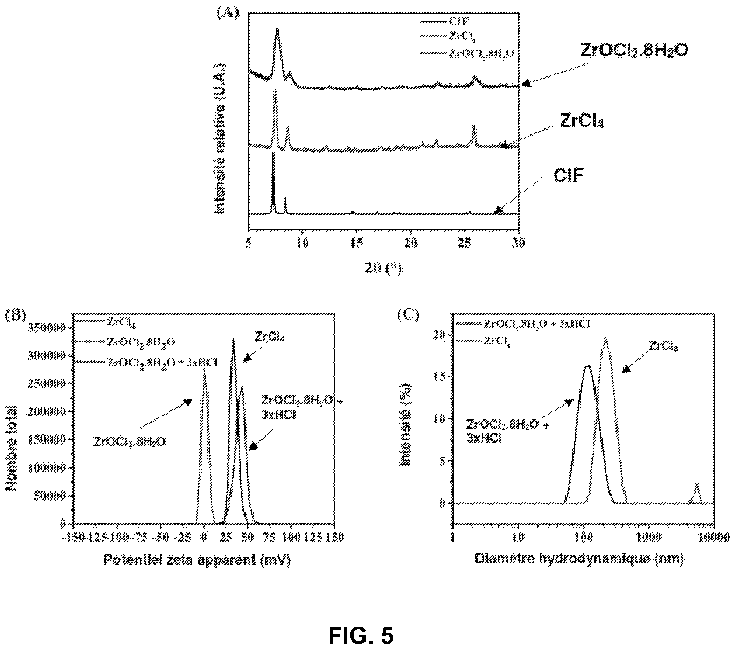

L'utilisation de ZrOCl2.8H2O au lieu de ZrCl4 a été associée à une diminution significative du temps de réaction de 48h à moins de 24h. Les modèles PXRD correspondent dans les deux cas à celui de l'UiO-66 (fichier CIF) (Figure 5A). Cependant, une précipitation est observée pour l'échantillon obtenu avec ZrOCl2.8H2O. Ceci représente un problème pour le dépôt ultérieur de nanoparticules d'UiO-66 par un procédé de revêtement par trempage (ou enduction par trempage) qui nécessite l'utilisation de suspensions colloïdales stables. Cela pourrait être dû à un pH plus élevé de la solution par rapport à celui obtenu avec ZrCl4 (pH ~ 6,5 vs 3,5 pour ZrOCl2.8H2O et ZrCl4, respectivement) entraînant un impact significatif sur la charge de surface et donc sur les répulsions interparticulaires (Figure 5B). En effet, un pH égal à 6 est proche du point de charge nulle de l'UiO-66(Zr). Pour résoudre ce problème de stabilité, les nanoparticules d'UiO-66 peuvent être redistribuées dans l'eau et le pH ajusté ensuite pour obtenir une surface chargée positivement. Cependant, nous avons envisagé une autre stratégie qui consiste à diminuer le pH du milieu réactionnel en ajoutant une quantité de HCl (soit 12 mmol). Cette approche conduit à la formation de nanoparticules d'UiO-66 après 6h avec une agrégation inférieure (diamètre hydrodynamique : 124 ± 41 nm (ZrOCl2.8H2O + 3×HCl) et 230 ± 61 nm (ZrCl4) (Figure 5C).

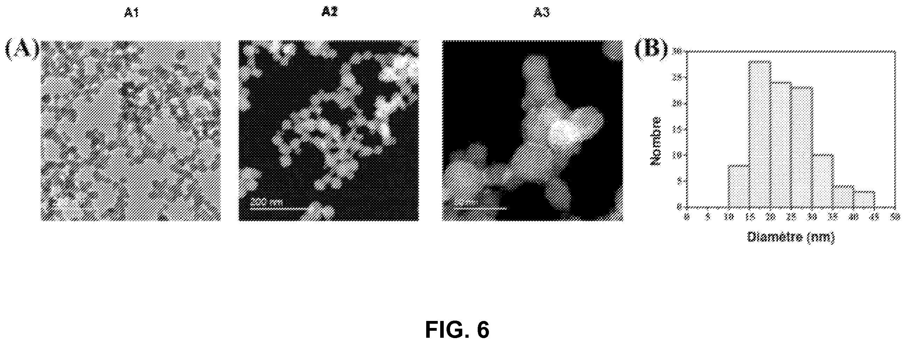

La synthèse de l'UiO-66 à partir de ZrOCl2.8H2O a conduit à des nanoparticules plus petites et plus rapidement que dans la synthèse rapportée dans la littérature. La valeur moyenne de la taille des particules d'UiO-66 obtenue dans les conditions de synthèse améliorées est de 27,5 ± 17,5 nm (Figure 6). Ces conditions de synthèse optimisées ont été suivies pour la formation de nanoparticules UiO-66 consacrées à l'élaboration de couches minces pour leur étude par ellipsométrie.

### L'impact du modulateur de pH

Parallèlement aux études liées à l'impact de la température et du précurseur métallique, nous avons exploré les effets d'une gamme de modulateurs sur la porosité (acide acétique, acide benzoïque, acide formique et acide trifluoroacétique) en utilisant les mêmes conditions de synthèse que Shi et al **(40).** Un modulateur de pH est une molécule organique monofonctionnalisée (en anglais « monodentate ») ayant un groupe complexant semblable à l'agent de liaison organique (p. ex. acide benzoïque et acide téréphtalique). Ce modulateur de pH est en compétition avec le ligand organique qui a un impact sur la cinétique de croissance du MOF. On peut donc régler les conditions de croissance conduisant soit à des monocristaux **(41),** soit à des nanoparticules **(42).**

Pour une synthèse modulée typique d'UiO-66 avec l'acide benzoïque (ratio molaire modulateur/ligand : 10:1), 53 mg d'acide téréphtalique (0,32 mmol), 390 mg d'acide benzoïque (3,2 mmol), 0,33 mL de HCl (37% dans l'eau, 0,64 mmol) et 108 mg de ZrOCl2.8H2O (0,32 mmol) sont ajoutés à 6 mL de DMF dans un autoclave de 23 mL. Le mélange est ensuite mis au four à 120°C pendant 24h. La solution est ensuite centrifugée et le matériau est lavé trois fois avec du DMF et trois fois avec de l'éthanol. Différentes quantités de modulateur de pH ont été utilisées.

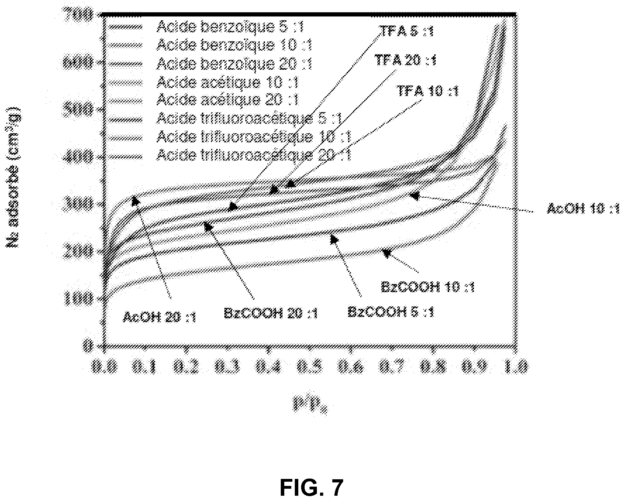

La surface spécifique BET et le volume des pores des différents échantillons d'UiO-66 déduits de leurs isothermes d'adsorption N₂ montrent que leur porosité varie en fonction des conditions de synthèse (Figure 7, Tableau 2).

**Tableau 2**

| **Ratio molaire modulateur de pH/ligand** | **S_{BET} (m²/g)** | **Vₚ (cm³/g)** |
|---|---|---|
| BzCOOH 5 :1 | 728 | 0.34 |
| BzCOOH 10 :1 | 549 | 0.16 |
| BzCOOH 20:1 | 909 | 0.25 |
| AcOH 10 :1 | 823 | 0.20 |
| AcOH 20 :1 | 1258 | 0.54 |
| TFA 5 :1 | 985 | 0.37 |
| TFA 10 :1 | 1116 | 0.48 |
| TFA 20 :1 | 1103 | 0.48 |

Tableau 2 : Valeurs de S_{BET} et V_{P} pour les UiO-66 synthétisés déduites des isothermes d'adsorption N₂. Conditions d'activation : 150°C sous vide pendant 16h. Ceci met en évidence l'impact des défauts sur la porosité. En règle générale, une augmentation de la quantité de modulateur de pH entraîne une augmentation de la surface et du volume des pores du BET. Des résultats similaires ont été rapportés dans la littérature pour l'UiO-66. Par conséquent, on peut déduire que l'utilisation de modulateurs de pH en grande quantité peut conférer à l'UiO-66 un volume de pores élevé et des propriétés d'adsorption modulables grâce à l'incorporation d'anions compensateurs de charge (par exemple, les carboxylates).

Il a également été observé que dans certains cas, le modulateur de pH peut aussi agir sur l'introduction de défauts dans la structure du MOF. C'est le cas par exemple de l'acide trifluoroacétique. Ce phénomène montre que la mise au point de la structure de l'UiO-66 et donc de ses propriétés d'adsorption peut potentiellement s'effectuer par l'ingénierie de ses défauts.

### 4. UiO-66-2CF₃(Zr)

Le ligand organique constitutif de ce MOF (acide 2,5-bis(trifluorométhyl)téréphtalique) n'est à ce stade pas disponible sur le marché et doit donc être synthétisé. La synthèse de l'acide 2,5-bis(trifluorométhyl)téréphtalique est composée de deux étapes : la dibromation du 1,4-bis(trifluorométhyl)benzène avec du N-bromosuccinimide en solution acide suivie de la réaction nucléophile entre CO2 et le réactif organolithié obtenu à partir du 2,5-dibromo-1,4-bis(trifluorométhyl)benzène et nBuLi. Le ligand a été synthétisé selon le protocole de synthèse précédemment rapporté **(43).**

La synthèse de l'UiO-66-2CF3 a été réalisée sur la base du protocole optimisé de l'UiO-66 : 604 mg d'acide 2,5-bis(trifluorométhyl)téréphtalique (2 mmol), 2,44 g d'acide benzoïque (20 mmol) et 0,99 mL de HCl (37 % dans l'eau, 12 mmol) ont été ajoutés sous agitation à 36 mL de DMF dans un ballon de 50 mL. Le mélange a ensuite été chauffé à 60°C. Après dissolution, 644 mg de ZrOCl2.8H2O (2 mmol) ont été ajoutés à la solution. La réaction a été stoppée juste après 8h. La solution a ensuite été centrifugée et le matériau a été lavé trois fois avec du DMF et trois fois avec de l'éthanol.

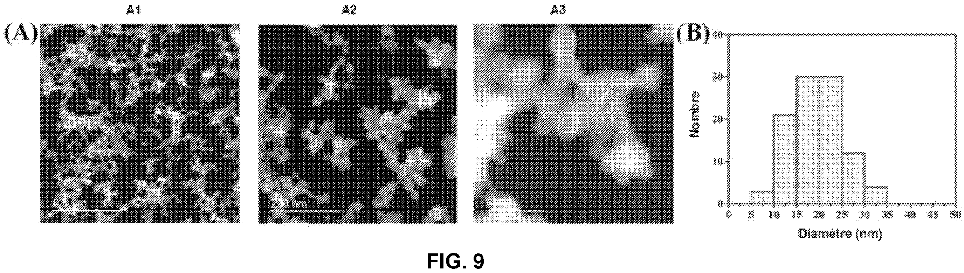

En effet, il a été démontré que dans le cas de l'UiO-66, la cinétique de cristallisation est similaire quels que soient les liants dicarboxyliques aromatiques si ces derniers sont suffisamment solubles. Expérimentalement, on peut remarquer que l'acide téréphtalique et l'acide 2,5-bis(trifluorométhyl)téréphtalique sont tous deux entièrement solubles dans le DMF. La synthèse de l'UiO-66-2CF3 a conduit avec succès à la formation de petites nanoparticules ayant une taille moyenne de particules d'environ 20 ± 15 nm (Figure 9).

### 5. MIL-140B

La stratégie développée pour les nanoparticules de MIL-140B est basée sur l'impact notoire des modulateurs de pH sur la taille des particules. À cette fin, des acides alkyles linéaires, aromatiques et cycliques alkylcarboxyliques ont été utilisés pour la synthèse du MIL-140B.

### 5.1. Synthèse de MIL-140B avec des acides carboxyliques linéaires

Dans une synthèse typique de MIL-140B avec de l'acide acétique, 277 mg de ZrCl4 (1,2 mmol) sont ajoutés sous agitation à 13 mL de DMF dans un ballon de 50 mL. Dans un autre ballon de 50 mL, 518 mg d'acide 2,6-naphtalènedicarboxylique (H2NDC, 2,4 mmol) et 2,55 mL d'acide acétique (45 mmol) sont ajoutés sous agitation à 30 mL de DMF. Les deux solutions sont chauffées sous reflux pendant 1h. Ensuite, la solution contenant le précurseur métallique est versée dans la deuxième solution. Après 24 heures, la solution est centrifugée et le matériau est lavé trois fois avec du DMF et trois fois avec du méthanol. Le MOF-140B-CPHFP(Zr) peut être préparé selon un protocole similaire, en remplaçant l'acide 2,6-naphtalènedicarboxylique par de l'acide 4-(2-(4-carboxyphenyl)-1,1,1,3,3,3-hexafluoropropan-2-yl)benzoique.

D'après des expériences d'adsorption d'azote à -196°C, la surface spécifique et le volume des pores ont été évalués à 414 m²/g et 0,16 cm3/g. Ces résultats sont en bon accord avec ceux qui ont été rapportés dans la littérature.

Résultats TGA : l'appariement entre les valeurs TGA expérimentales et théoriques tend à démontrer l'absence, ou la présence d'un très faible nombre, de défauts (p. ex. défauts de surface) pour ce MIL-140B. Ces résultats sont en accord avec les données rapportées dans la littérature qui montrent que parmi les séries de MIL-140A, B, C et D, la MIL-140B est le matériau qui contient le moins de défauts.

La synthèse a été également réalisée avec l'acide n-hexanoique comme modulateur de pH.

### 5.2. Synthèse de MIL-140B avec l'acide cyclohexanoïque

Dans une synthèse typique de MIL-140B avec de l'acide cyclohexanoïque, 277 mg de ZrCl4 (1,2 mmol) sont ajoutés sous agitation à 13 mL de DMF dans un ballon de 50 mL. Dans un autre ballon de 50 mL, 518 mg d'acide 2,6-naphtalènedicarboxylique (H2NDC, 2,4 mmol) et 5,23 mL d'acide cyclohexanoïque (5,76 g, 45 mmol) sont ajoutés à 30 mL de DMF en agitant. Les deux solutions sont chauffées sous reflux pendant 1h. Ensuite, la solution contenant le précurseur métallique est versée dans la deuxième solution. Après 24 heures, la solution est centrifugée et le matériau est lavé trois fois avec du DMF et trois fois avec du méthanol.

Le diagramme PXRD du matériau obtenu confirme la formation de MIL-140B pur. Les micrographies MEB ne montrent que la présence des plaquettes caractéristiques des cristallites de la MIL-140B. Contrairement au MIL-140B synthétisé avec de l'acide acétique, les particules finales présentent une longueur de quelques centaines de nanomètres après 24h. Ceci démontre l'avantage d'utiliser l'acide cyclohexanoïque comme modulateur par rapport à l'acide acétique pour la synthèse des nanoparticules MIL-140B. Par conséquent, on s'attend à ce que la réduction du temps de réaction conduise plus facilement à des nanoparticules plus petites adaptées à l'élaboration de couches minces et à leur étude par ellipsométrie.

### Exemple 2 : Films minces de haute qualité optique de nanoparticules de MOF

### 1. Méthodes

### 1.1. Préparation des couches minces de MOF

La préparation des couches minces de MOF a été réalisée par un procédé de revêtement par trempage (« dip-coating » en anglais). Une plaquette de silicium préalablement lavée à l'éthanol a été trempée dans une suspension colloïdale de MOF à température ambiante et sous pression atmosphérique. La vitesse d'extraction a été réglée à 0,05 ou 15 mm s-1. A la fin du dépôt MOF, la plaque de silicium est laissée pendant 1 minute à température ambiante (~20°C) pour l'évaporation du solvant restant. L'échantillon est ensuite chauffé à 120°C pendant 2 min avec une rampe de chauffage de 18 degrés.min-1 puis refroidi avant l'expérience d'adsorption.

### 1.2. Caractérisation

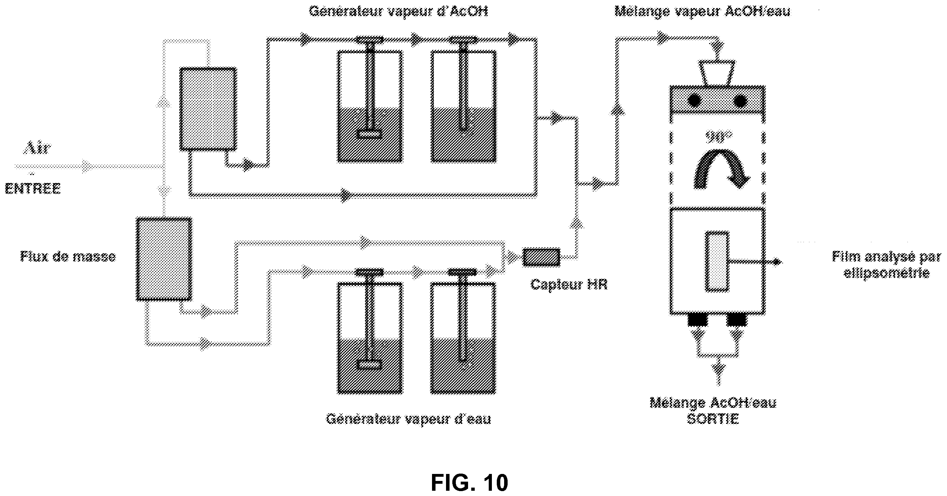

La collecte des diagrammes de diffraction aux rayons X des nanoparticules et des films MOF a été réalisée avec un diffractomètre Siemens X'Pert MDP D5000 de haute résolution pour une plage de 2θ de 5 à 30°. La porosité des matériaux a été étudiée par des expériences de sorption d'azote à 77K réalisées sur un porosimètre BELSORP-Mini. Un appareil Perkins Elmer SDA 6000 a été utilisé pour l'analyse thermogravimétrique. Les échantillons ont été chauffés jusqu'à 600°C avec une rampe de température de 5°C.min-1 sous un flux d'air. L'étude des colloïdes a été réalisée par diffusion dynamique de la lumière et par expérimentation du potentiel zêta dans un nanosizer de Malvern (Nano ZS) avec un angle de 173°. Les micrographies ont été obtenues par microscopie électronique à transmission avec un microscope JEOL 2100F en mode de microscopie électronique à transmission à balayage (STEM) fonctionnant à 200 kV et utilisant un détecteur annulaire JEOL. La microscopie à force atomique (AFM) a été réalisée avec le microscope Veeco DI CPII. Les expériences de porosimétrie ellipsométrique environnementale ont été réalisées avec un ellipsomètre UV-Vis (de 245 à 1000 nm) à angle variable (Woollam M-2000U) et le logiciel CompleteEASE utilisant des modèles de Cauchy. Ces expériences ont été réalisées avec une chambre contenant le film MOF équipée d'une cellule thermique (-70 à 600°C) pour la surveillance in situ de l'indice de réfraction du film en présence de mélanges vapeur acétique/ vapeur d'eau. L'acide acétique et la vapeur d'eau sont injectés dans la chambre à l'aide de deux jeux de barboteurs (Figure 10).

### 1.3. Résultats et discussion

### 1.3.1. Taille des particules MOF, stabilité colloïdale et caractéristiques du film

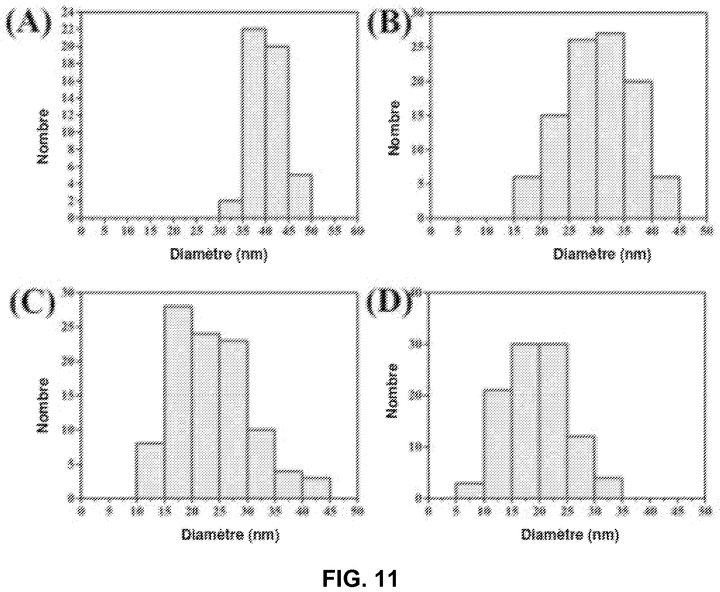

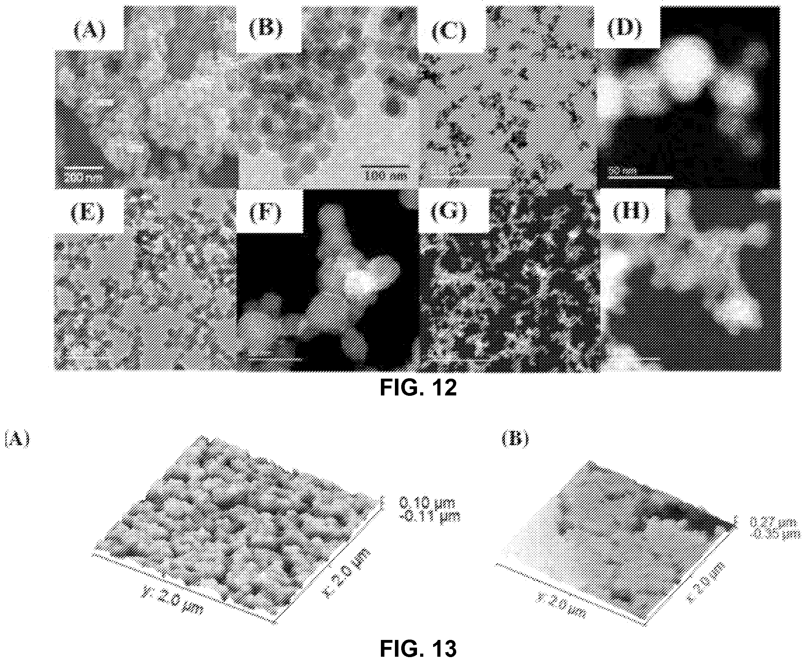

Pour l'analyse des films par ellipsométrie, la lumière polarisée doit être réfléchie. Pour cela, la rugosité du film doit être la plus faible possible. On sait (littérature) que cela peut être réalisé avec de très petites nanoparticules. Par conséquent, toutes les nanoparticules MOF ont été synthétisées afin d'obtenir une taille de particules inférieure à 100 nm. Les films ont été réalisés avec ZIF-8, MIL-101(Cr), UiO-66 et UiO-66-2CF3. Leurs protocoles de synthèse sont décrits dans l'Exemple 1. Sur la base des micrographies TEM, la taille des particules a été évaluée à 40 ± 10 nm, 30 ± 15 nm, 27,5 ± 17,5 nm et 20 ± 15 nm pour ZIF-8, MIL-101(Cr), UiO-66 et UiO-66-2CF3 respectivement (Figures 11 et 12).

La surface des nanoparticules de chaque MOF a été chargée positivement après leur synthèse (évaluée après leur dispersion dans l'eau) : (MOF, pH initial, diamètre hydrodynamique évalué par DLS) : ZIF-8, pH ∼ 8, 182 ± 88 nm ; MIL-101(Cr), pH ∼ 3, 138 ± 45 nm ; UiO-66, pH ∼ 3, 128 ± 43 nm. Le point de charge nulle dans l'eau a été évalué à pH= ∼ 10, ∼ 7,5, ∼ 6 pour le ZIF-8, MIL-101(Cr) et UiO-66(Zr).

L'élaboration d'une couche mince de haute qualité optique dépend de la concentration colloïdale, de la température et de la vitesse de retrait. Ce dernier paramètre (vitesse de retrait) conduit à deux mécanismes de dépôt différents appelés régimes de drainage (> 1 mm s-1) et régimes capillaires (< 0,1 mm s-1) incluant un régime intermédiaire (0,1-1 mm s-1). Dans le cas du régime capillaire, le film présente une plus grande compacité alors que pour le régime drainant, la distribution des nanoparticules est moins ordonnée et provoque la présence de grands mésopores interparticulaires (Figure 13). Ces dernières peuvent faciliter la diffusion des adsorbats mais la surface des nanoparticules MOF est donc très accessible pour l'adsorption. Dans le cas des films MOF compacts, les adsorbats interagissent principalement avec la surface interne du MOF. De plus, la rugosité des films compacts est potentiellement très limitée. Pour cette raison, les films MOF analysés par porosimétrie ellipsométrique environnementale ont été réalisés à 0,05 mm s-1.

Dans cet Exemple, l'ellipsométrie environnementale a été envisagée comme un outil précieux pour étudier les propriétés de coadsorption des MOFs dans des conditions opérationnelles, à savoir des conditions proches des conditions environnementales réalistes de stockage des artefacts culturels (de -296 à 888 ppm d'acide acétique sous 40% HR).

### 1.3.2. ZIF-8

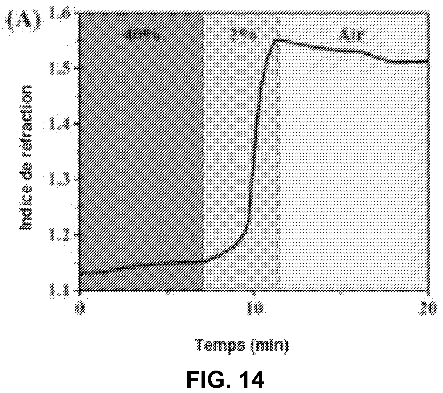

Pour évaluer les propriétés d'adsorption du ZIF-8 en présence de mélanges d'acide acétique et d'eau, l'expérience a été menée à température ambiante en trois étapes. Dans un premier temps, un flux de vapeur d'eau a été injecté dans une chambre contenant le film pour atteindre 40% d'humidité relative. Ensuite, un débit d'air de 2% (pression relative) d'acide acétique (296 ppm) a été ajouté au système (acide acétique + vapeur d'eau). Enfin, la désorption s'est produite par rinçage à l'air sec. En raison de la forte hydrophobie du ZIF-8, le changement du IR (indice de réfraction) était faible (ΔIR= 0.02) sous vapeur d'eau (Figure 14). En présence de vapeur d'acide acétique, une augmentation très rapide de l'IR jusqu'à n(700 nm) = 1,55 (ΔIR= 0,40) a été observée. Les films de ZIF-8 offrent donc l'avantage de présenter une grande différence de valeur IR qui peut être intéressante pour les appareils nécessitant une forte augmentation de l'indice de réfraction. De plus, la réponse optique se produit en quelques secondes et donc, ce MOF pourrait être un bon candidat pour une détection très sensible de l'acide acétique.

### 1.3.3. Adsorption des mélanges eau/acide acétique par MIL-101(Cr), UiO-66 et UiO-66-2CF3

Afin de mieux comprendre le changement d'efficacité d'adsorption de ces 3 MOFs, des isothermes eau et acide acétique (2%)/eau ont été obtenus par expérience de porosimétrie ellipsométrique environnementale à température ambiante et sous pression atmosphérique (conditions expérimentales très proches du milieu réel du musée).

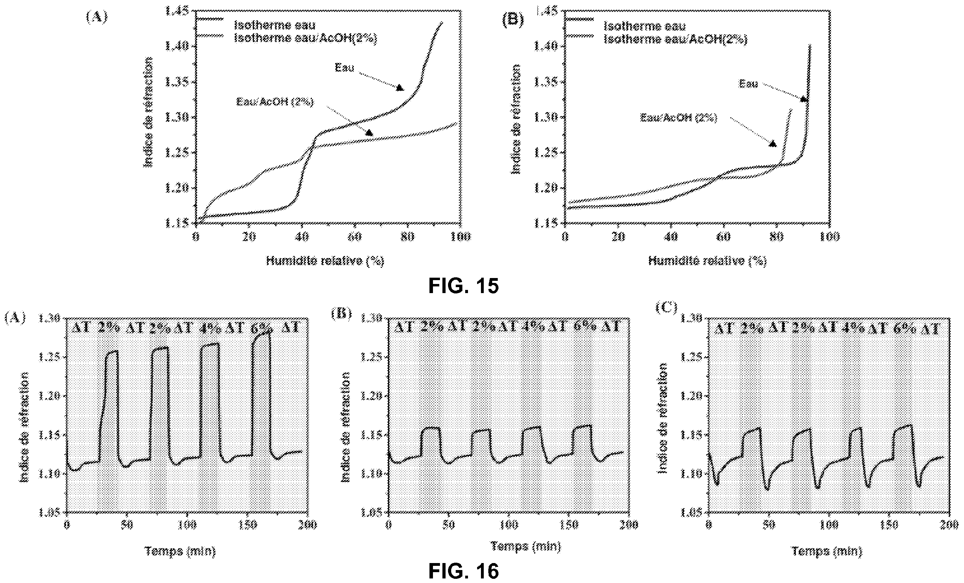

L'isotherme de l'eau de MIL-101(Cr) présente deux points d'inflexion entre 40 et 50% RH (Figure 15A). Ils correspondent au remplissage des petites cages (cages de diamètre 29 Å) et des grandes cages (cages de diamètre 34 Å), respectivement. La structure de l'UiO-66-2CF3 est composée de deux types de cages : tétraédriques et octaédriques avec un diamètre d'ouverture des pores de 5 et 7,5 Å respectivement. En présence d'un débit constant de 2% d'acide acétique, les isothermes d'eau obtenus présentent des différences plus ou moins prononcées en fonction du matériau. MIL-101(Cr) exposé au mélange d'acide acétique et d'eau présente une adsorption plus élevée à des pressions relatives plus faibles qu'en l'absence d'acide acétique (Figure 15A). Par conséquent, le caractère hydrophile de ce matériau a augmenté au contact de la vapeur d'acide acétique (probablement en raison des interactions favorables entre l'acide acétique et la coadsorption coopérative de l'eau). Comme il a été montré pour la silice mésoporeuse hydrophobe exposée à des mélanges éthanol/eau, la partie hydrophobe de l'adsorbat (chaîne alkyle) peut interagir avec les parois des pores tandis que la partie hydrophile (groupe alcool -OH) est dirigée vers l'intérieur des pores. On peut supposer qu'un phénomène similaire peut se produire pour l'acide acétique adsorbé dans la structure de la MIL-101(Cr) conduisant à une couverture des groupes -COOH sur les parois des pores qui peuvent interagir avec les molécules d'eau. De plus, on peut supposer que les molécules d'acide acétique peuvent interagir avec les sites métalliques ouverts de la MIL-101(Cr) et donc modifier ses propriétés d'adsorption. Ceci induit une hydrophilie "extrinsèque" qui peut être utilisée pour augmenter la réponse optique du matériau. En dessous de 40% RH (sans vapeur d'acide acétique), une légère augmentation de l'IR peut être observée mais en présence d'une faible quantité d'acide acétique (296 ppm), l'indice de réfraction augmente considérablement. Il est intéressant de noter que le décalage de la courbe isotherme d'adsorption de l'UiO-66-2CF3 est beaucoup moins prononcé que celui de la MIL-101(Cr) (Figure 15B). Cette différence de comportement peut être due à la plus grande hydrophobie de l'UiO-66-2CF3 qui empêche les molécules d'eau de pénétrer pleinement dans la porosité, même en présence d'acide acétique. Ces résultats confirment qu'un caractère hydrophobe plus élevé du MOF diminue l'impact de l'acide acétique sur l'équilibre hydrophilicité/hydrophobie global du matériau et préserve sa sélectivité vis-à-vis de l'acide acétique. De plus, ce phénomène explique la performance légèrement moins importante du MIL-101(Cr) pour l'adsorption sélective de l'acide acétique en milieu humide. En effet, en raison d'une plus grande hydrophilie induite par l'adsorption de l'acide acétique, on peut supposer que ses pores absorbent plus d'eau. Par contre, pour l'UiO-66-2CF3, ce matériau peut être très sélectif pour la capture de l'acide acétique dans des conditions humides.

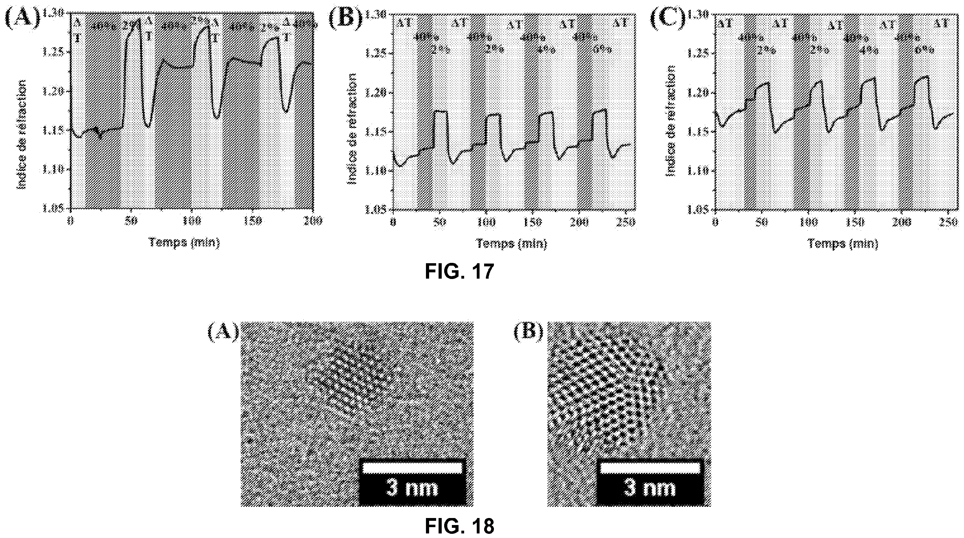

Afin d'établir une corrélation entre la concentration d'acide acétique injectée dans la chambre et la différence d'indice de réfraction mesurée, des expériences PEE ont été réalisées sur les films MOF avec trois concentrations de vapeur différentes (2, 4 et 6% v/v d'acide acétique sous air sec) (Figure 16) et des mélanges acide acétique/eau (2, 4 et 6% d'acide acétique (pression relative) à 40% HR) (Figure 17). Les cycles acide acétique/eau sont constitués de trois étapes : désorption du film par chauffage à 120°C, exposition du film à la vapeur d'eau (40% RH) et enfin à l'acide acétique et à la vapeur d'eau (40% RH + 2, 4 ou 6% (pression relative) de vapeur d'acide acétique). À titre de comparaison, les films ont également été exposés à des cycles d'adsorption/désorption au cours desquels ils ont été exposés à de la vapeur d'acide acétique pur (2, 4 et 6 % (pression relative) d'acide acétique dans l'air sec). Il ressort que les trois films MOF sélectionnés se comportent différemment. Les films MIL-101(Cr) présentent la plus forte augmentation de l'indice de réfraction évalué à ~ 0,07 RIU/% d'acide acétique pour l'adsorption de l'acide acétique pur tandis que les films UiO-66 et UiO-66-2CF3 présentent une réponse de ~ 0,02 RIU/% d'acide acétique (Tableaux 3 et 4, figure 16).

Les valeurs de l'indice de réfraction augmentent fortement : Δn acide acétique mesuré à partir d'expériences de porosimétrie ellipsométrique environnementale (« PEE ») et déduit de la figure 16. Le cycle est composé d'une désorption à 120°C suivie d'une adsorption de vapeur d'acide acétique (2, 4, et 6% (pression relative) d'acide acétique sous air).

**Tableau 3**

| Δn | **Cycle** | **% acide acétique (v/v)** | **MIL-101(Cr)** | **UiO-66** | **UiO-66-2CF₃** |
|---|---|---|---|---|---|
| **Acide acétique** | **1** | 2 | 0.142 ± 0.001 | 0.036 ± 0.001 | 0.037 ± 0.001 |
| | **2** | 2 | 0.144 ± 0.001 | 0.033 ± 0.001 | 0.041 ± 0.001 |
| | **3** | 4 | 0.147 ± 0.001 | 0.035 ± 0.001 | 0.038 ± 0.001 |
| | **4** | 6 | 0.158 ± 0.001 | 0.037 ± 0.001 | 0.044 ± 0.001 |

Les valeurs de l'indice de réfraction augmentent fortement : Δn eau et Δn acide acétique mesurées à partir des expériences PEE et déduites de la figure 17. *Les valeurs pour MIL-101(Cr) ne sont pas disponibles en raison des interférences techniques introduisant du bruit dans le signal. Le cycle est composé de trois étapes : une désorption à 120°C, une adsorption de vapeur d'eau (40% HR) et enfin une adsorption d'acide acétique/vapeur d'eau (2, 4, et 6% (pression relative) d'acide acétique sous 40% HR).

**Tableau 4**

| Δn | **Cycle** | **% acide acétique (v/v)** | **MIL-101(Cr)*** | **UiO-66** | **UiO-66-2CF₃** |
|---|---|---|---|---|---|
| **Eau** | **1** | | - | 0.009 ± 0.001 | 0.013 ± 0.001 |
| | **2** | | - | 0.004 ± 0.001 | 0.017 ± 0.001 |
| | **3** | | - | 0.008 ± 0.001 | 0.015 ± 0.001 |
| | **4** | | - | 0.008 ± 0.001 | 0.013 ± 0.001 |
| **Acide acétique** | **1** | 2 | - | 0.047 ± 0.001 | 0.021 ± 0.001 |
| | **2** | 2 | - | 0.038 ± 0.001 | 0.030 ± 0.001 |
| | **3** | 4 | - | 0.039 ± 0.001 | 0.033 ± 0.001 |
| | **4** | 6 | - | 0.039 ± 0.001 | 0.036 ± 0.001 |

Cette meilleure réponse optique du MIL-101(Cr) est due à son volume poreux plus élevé. La variation de la concentration d'acide acétique de 2 à 6% induit une légère augmentation progressive de l'indice de réfraction. UiO-66 et UiO-66-2CF3 semblent donner une réponse optique similaire pour les trois concentrations. On peut supposer que ces MOF sont saturés dans cette gamme de concentrations d'acide acétique et, par conséquent, donnent la même augmentation de l'indice de réfraction. L'obtention de concentrations plus faibles d'acide acétique pourrait être d'un grand intérêt, mais cette plage de concentrations n'était pas accessible avec notre dispositif expérimental qui nécessiterait l'utilisation de tubes de perméation. En présence d'eau, l'historique des films MIL-101(Cr) a un impact significatif sur la valeur de l'indice de réfraction (Figure 17). La première adsorption d'eau n'a pas affecté l'indice de réfraction. Après un premier cycle d'adsorption d'un mélange d'eau et d'acide acétique, il apparaît qu'une deuxième exposition au flux d'eau entraîne une augmentation plus importante de l'indice de réfraction que lors de la première exposition à l'eau. De plus, l'augmentation de l'indice de réfraction due à l'adsorption de l'acide acétique est plus faible après le premier cycle d'exposition eau/acide acétique. On peut supposer qu'à chaque cycle, l'eau, les molécules d'acide acétique ou les deux sont piégées dans la structure en raison du processus coopératif de coadsorption. De plus, l'acide acétique peut également être fortement ancré sur les sites métalliques ouverts de la norme MIL-101(Cr). Cette question pourrait être résolue par l'amélioration du processus de régénération. Ce matériau offre un indice de réfraction élevé mais souffre de l'impact de l'acide acétique sur son équilibre hydrophilie/hydrophobie qui rend difficile sa réutilisation après un premier cycle d'adsorption. Néanmoins, le matériau MIL-101(Cr) présente un intérêt certain pour la conception d'appareils colorimétriques à des fins d'indicateur optique pour l'évaluation à l'oeil nu du taux de remplissage du MOF en acide acétique. Les films d'UiO-66 présentent l'avantage de présenter une adsorption réversible et sélective et peuvent donc être régénérés après chauffage à 120°C pendant quelques minutes.

### 1.3.4. Conclusions

Les propriétés d'adsorption de quatre MOFs (ZIF-8, MIL-101(Cr), UiO-66 et UiO-66-2CF3) ont été évaluées pour la capture de l'acide acétique en conditions humides dans le cadre de la préservation des objets historiques des musées. La synthèse des MOFs sous forme de nanoparticules a été réalisée avec succès, conduisant à des suspensions colloïdales stables qui ont été utilisées pour le traitement des films minces MOF. Ces derniers ont été étudiés par porosimétrie ellipsométrie environnementale (PEE) en présence de différentes compositions d'acide acétique/vapeur d'eau.. L'équilibre hydrophilie/hydrophobie de MIL-101(Cr) est fortement affecté par la présence de vapeur d'acide acétique et présente dans ces conditions un caractère plus hydrophile. Ce MOF montre une grande différence d'indice de réfraction en présence d'acide acétique mais sa désorption n'était pas complète après chaque cycle. Sa régénération plus difficile est probablement liée à la présence de sites métalliques ouverts qui peuvent interagir avec les molécules d'acide acétique. Contrairement à la norme MIL-101(Cr), l'isotherme de l'UiO-66-2CF3 est légèrement influencé par la présence de vapeur d'acide acétique. Ceci montre que des matériaux très hydrophobes peuvent diminuer drastiquement l'effet de l'acide acétique sur leur équilibre hydrophilie/hydrophobie. UiO-66 et UiO-66-2CF3 sont cependant caractérisés par une augmentation inférieure de l'indice de réfraction lors de l'adsorption de l'acide acétique que ZIF-8 et MIL-101(Cr) mais présentent un procédé d'adsorption réversible.

### Exemple 3 : Dispositif colorimétrique pour l'évaluation visuelle du niveau de saturation d'un adsorbant MOF

Cet exemple concerne la mise en oeuvre d'un dispositif permettant un suivi visuel en temps réel du niveau de saturation d'un adsorbant pour savoir quand le remplacer. Plus particulièrement, cet exemple répond au besoin existant de mise en oeuvre d'un appareil facile à utiliser pour les utilisateurs, notamment pour les conservateurs de musées. Dans cet exemple, on illustre la mise en oeuvre d'un tel dispositif en combinant des nanoparticules MOF, pour la capture sélective de l'acide acétique, et des nanoparticules d'or, pour leurs propriétés optiques avantageuses dans la mise en oeuvre de la présente invention. Le but recherché est la conception d'un dispositif permettant de surveiller le remplissage poreux de l'adsorbant et, finalement, sa saturation en acide acétique par un changement de couleur à l'oeil nu. Cet exemple donne la preuve de concept.

### 3.1. Synthèse de nanoparticules d'or anisotropes

Les nanobipyramides d'or ont été synthétisées pour la première fois au début des années 2000. Elles étaient considérés comme un sous-produit de la synthèse des nanobâtonnets d'or. Toutefois, en raison de leur sensibilité élevée à l'indice de réfraction et de la possibilité de moduler leurs propriétés optiques par un contrôle précis de leur rapport d'aspect (en anglais « aspect ratio »), les nanobipyramides d'or ont été choisies pour la mise en oeuvre du dispositif optique recherché dans le cadre de la présente invention.

Les nanobipyramides d'or ont été préparées selon la méthode décrite par Liu et al. **(32).** D'après les travaux de Liu et al., on sait notamment que lors de la formation des germes d'or cristallins, l'utilisation du CTAB (bromure de cétyltriméthylammonium) permet de former des germes monocristallins (figure 18A) qui conduisent à la formation de nanobâtonnets d'or (en anglais « gold nanorods ») tandis que l'addition d'un réducteur tel que le citrate de sodium peut induire la formation de germes d'or polycristallins (figure 18B) qui favorisent la croissance des nanobipyramides.

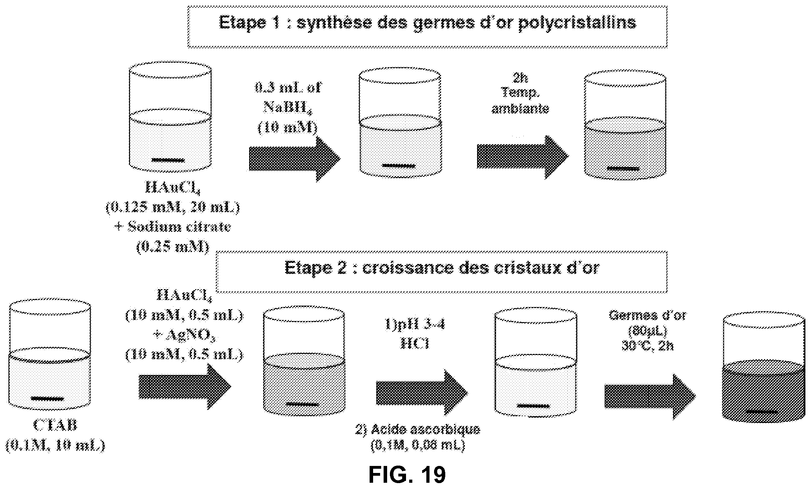

La synthèse a conduit à des suspensions de nanobipyramides d'or relativement monodisperses présentant une couleur rougeâtre. La voie de synthèse est divisée en deux principales étapes : (i) la synthèse des germes et (ii) leur utilisation pour la croissance des nanobipyramides (Figure 19). Cette méthode est généralement préférée pour la synthèse de nanoparticules métalliques de forme complexe, dont les nanoparticules anisotropes.

### Première étape : Synthèse de germes d'or polycristallins

La formation de germes d'or polycristallins a été réalisée en ajoutant une solution froide fraîchement préparée de NaBH₄ (0,3 mL, 10 mM) à une solution aqueuse (20 mL) de HAuCl₄ (0,125 mM) et de citrate de sodium (0,25 mM). Le mélange obtenu est ensuite laissé sous agitation pendant 2 h et utilisé, sans autre traitement, dans la deuxième étape.

### Deuxième étape : cristal logénèse/croissance des germes

Pour former des nanobipyramides d'or, une solution de HAuCl₄ (0,5 mL, 10 mM) et une solution de AgNO₃ (0,5 mL, 10 mM) sont ajoutées à une solution de CTAB (10 mL, 0,1 M). Le pH du mélange est ensuite ajusté entre 3 et 4 avec une solution de HCl. Une solution d'acide L-ascorbique est ensuite ajoutée au mélange (0,08 mL, 0,1 M). La solution de germes résultant de l'étape 1 (80 µL) est finalement ajoutée au mélange précité préalablement préparé et la solution est laissée à 30°C pendant 2 heures. La solution finale de nanobipyramides, de couleur violette, est obtenue après trois cycles de centrifugation pour éliminer l'excès de surfactant.

L'approche de la cristallogénèse par nucléation est souvent utilisée pour la synthèse de nanoparticules anisotropes puisqu'elle permet de découpler les étapes de nucléation et de croissance. La formation des nanoparticules anisotropes souhaitées peut être induite par un contrôle des germes (taille, cristallinité). Pendant l'étape de croissance, de l'acide L-ascorbique a été ajouté à la solution contenant HAuCl₄, AgNO₃ et CTAB. Cet acide carboxylique est utilisé pour réduire Au³⁺ en Au⁺. Ce dernier peut ensuite être réduit sur les germes d'or par un processus de dismutation pour favoriser la croissance des nanobipyramides. D'autres réactifs peuvent être utilisés pour diriger la croissance des germes d'or et induire la formation de nanobipyramides. Ag⁺ est l'un d'eux (33). Sans vouloir être lié à une théorie particulière, l'un de ses rôles serait lié à sa capacité d'être réduit sur des facettes cristallines spécifiques des germes d'or conduisant à une inhibition localisée de la croissance. Ag⁺ est aussi souvent utilisé pour contrôler le rapport d'aspect (en anglais « aspect ratio ») et pour augmenter le rendement final des nanoparticules anisotropes. L'ajustement du pH peut également s'avérer utile pour ralentir la vitesse de croissance des nanoparticules. Un pH faible peut déplacer l'équilibre acide-base de l'acide L-ascorbique et induire une diminution de son pouvoir réducteur (l'acide L-ascorbique est moins réducteur que sa forme carboxylate)**(32)**.

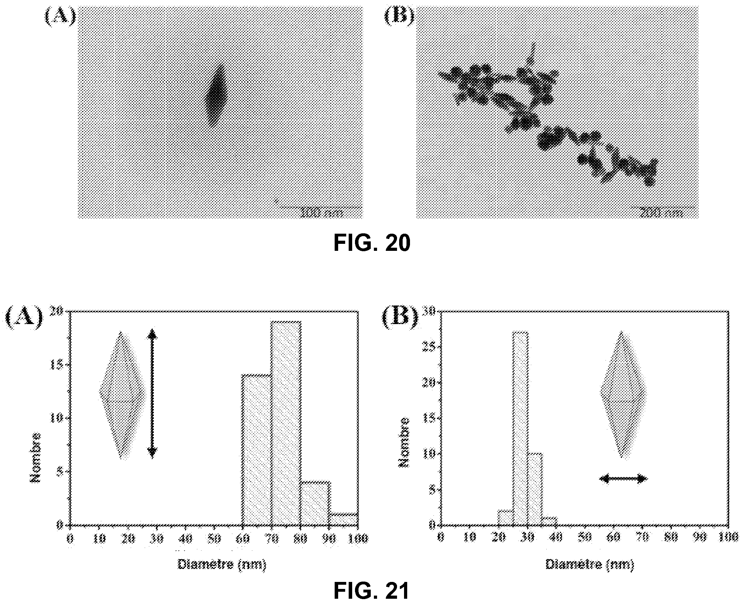

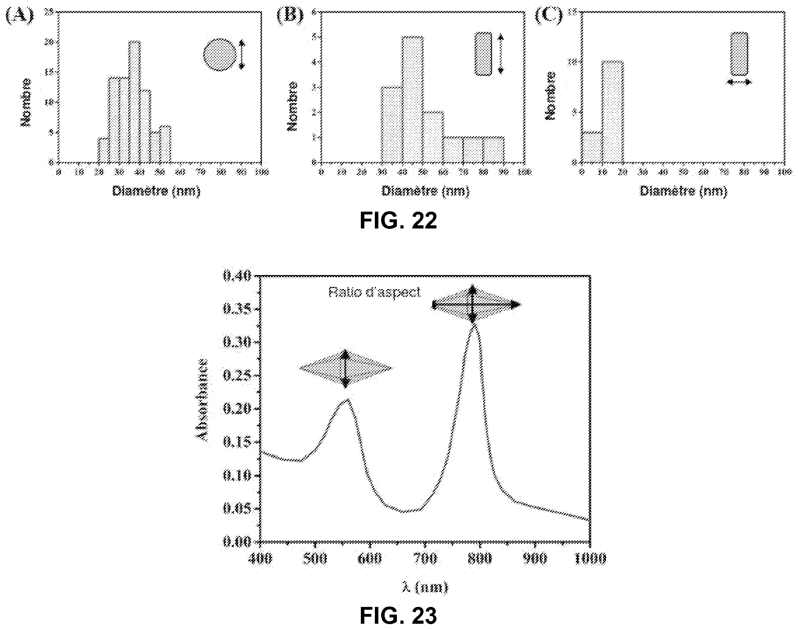

Le rapport d'aspect (en anglais « aspect ratio ») des nanobipyramides d'or finales peut être ajusté avec précision par le volume de la solution de germes d'or (étape 1) ajoutée à la solution de croissance (étape 2). Le contrôle du rapport d'aspect est un paramètre important car il régit les propriétés optiques des nanobipyramides d'or. La synthèse des nanobipyramides réalisée dans cet exemple a conduit à des résultats en accord avec ceux rapportés par Liu et al. en termes d'allongement et de proportion de nanobipyramides dans la suspension finale (30% de nanobipyramides et 70% de nanosphères et nanobâtonnets) (Figure 20). La longueur des nanobipyramides était de 73 ± 7 nm et la largeur de 29 ± 3 nm (figure 21). La distribution granulométrique a également été obtenue pour les nanosphères et les nanobâtonnets et indique que leurs tailles sont de 36 ± 8 nm pour les nanosphères et de 60 ± 20 nm/12 ± 2 nm pour les nanobâtonnets (longueur/largeur) (figure 22).

Comme rapporté dans la littérature, les nanobipyramides d'or présentent deux bandes d'extinction, situées à 548 et 772 nm (Figure 23). L'existence de ces bandes est due à l'anisotropie de ces nanoparticules et leur localisation est liée à leurs dimensions (largeur et rapport d'aspect). La première bande à 548 nm correspond au mode transversal tandis que la seconde bande à 772 nm est attribuée au mode longitudinal.

Plus précisément, la première bande observée à 548 nm est attribuée à différentes contributions : bande d'extinction des nanoparticules sphériques et résonance plasmon transverse des nanobipyramides et nanobâtonnets. Ces trois contributions expliquent la grande largeur à mi-hauteur de la bande. Dans le cas des nanobâtonnets et des nanobipyramides, la position de la bande transversale de plasmon est liée à la largeur des nanoparticules anisotropes et est plutôt insensible aux variations de leur taille ou de leur environnement (milieu environnant).

La deuxième bande, située à 772 nm, attribuée à la bande longitudinale du plasmon, est liée au rapport d'aspect des nanobipyramides et des nanobâtonnets. Les nanobipyramides d'or sont présentent une bande plasmonique longitudinale assez étroite (en anglais « sharp ») par rapport à celle des nanobâtonnets d'or. La netteté de la bande longitudinale du spectre de la figure 23 indique clairement qu'elle peut être principalement attribuée aux bipyramides d'or, en accord avec les micrographies TEM montrant une grande majorité de nanosphères d'or et de nanobipyramides d'or et quelques nanobâtonnets d'or. La position de la bande longitudinale de plasmon dépend fortement du rapport d'aspect mais aussi de l'environnement (milieu environnant) des nanobipyramides d'or. Cette propriété particulière des nanobipyramides d'or, en association avec un MOF présentant un changement notable d'indice de réfraction induit par l'adsorption de COV, comme l'acide acétique, forme la base des dispositifs optiques selon la présente invention. 3.2. Préparation de films composites composés de nanobipyramides d'or et de

### nanoparticules MIL-101(Cr)

Des films composites constitués de nanoparticules MOF MIL-101(Cr) et de nanobipyramides ont été élaborés. Comme vu dans l'Exemple 2, le MIL-101(Cr) est non seulement capable d'adsorber l'acide acétique, mais ce MOF présente aussi l'augmentation la plus élevée de l'indice de réfraction par adsorption de l'acide acétique parmi les MOF testés à l'Exemple 2, même s'il présente une plus faible sélectivité envers l'acide acétique.

Des mélanges de nanoparticules MIL-101(Cr) et de nanobipyramides d'or ont été préparés à partir de leurs suspensions colloïdales respectives (cf. supra). Leurs conditions de préparation sont détaillées dans le Tableau 5. Ce dernier indique le ratio massique des nanoparticules de MIL-101(Cr) aux nanobipyramides d'or, utilisé pour l'élaboration du film composite. La concentration des suspensions initiales de MIL-101(Cr) (C_{MIL-101(Cr)}) ainsi que leur dilution éventuelle avant le mélange sont précisées. Le Tableau indique également le volume d'eau utilisé, ainsi que le volume des suspensions des mélanges nanoparticules MIL-101(Cr)/ nanobipyramides d'or. Il est à noter que la masse des nanobipyramides d'or rapportée dans le Tableau 5 est une masse calculée avec l'hypothèse que tout l'or utilisé dans la synthèse est transformé en nanobipyramides d'or. Par conséquent, tous les rapports MIL-101(Cr)/nanobipyramides d'or indiqués dans le Tableau sont surestimés.

**Tableau 5**

| **Ratio massique nanoparticules MIL-101(Cr) / nanobipyramides d'or** | **C_{MIL-101} (mg/mL)** | **Dilution** | **V_{MIL- 101} (mL)** | **V_{bipyramide} (mL)** | **V_{H2O} (mL)** |
|---|---|---|---|---|---|
| **0.12/0.90** | 12.0 | X10 | 1 | 9 | 0 |
| **0.60/0.90** | 12.0 | X2 | 0.1 | 0.9 | 0 |
| **1.20/0.90** | 12.0 | X1 | 0.1 | 0.9 | 0 |
| **1.40/0.90** | 14.2 | X1 | 0.1 | 0.9 | 0 |
| **1.40/0.80** | 14.2 | X1 | 0.1 | 0.8 | 0.1 |
| **1.40/0.50** | 14.2 | X1 | 0.1 | 0.5 | 0.4 |
| **1.40/0.10** | 14.2 | X1 | 0.1 | 0.1 | 0.8 |

Tableau 5 : Conditions de dépôt pour l'élaboration de films composites de nanoparticules de MIL-101(Cr) /nanobipyramides d'or par un procédé d'enduction par trempage (T = 80 °C ; vitesse de retrait = 0,005 mm/s).

Les films composite ont été mis en forme par un procédé d'enduction par trempage en utilisant de l'eau (le solvant utilisé pour la synthèse des nanobipyramides d'or) à 80°C avec une vitesse d'extraction de 0,005 mm/s.

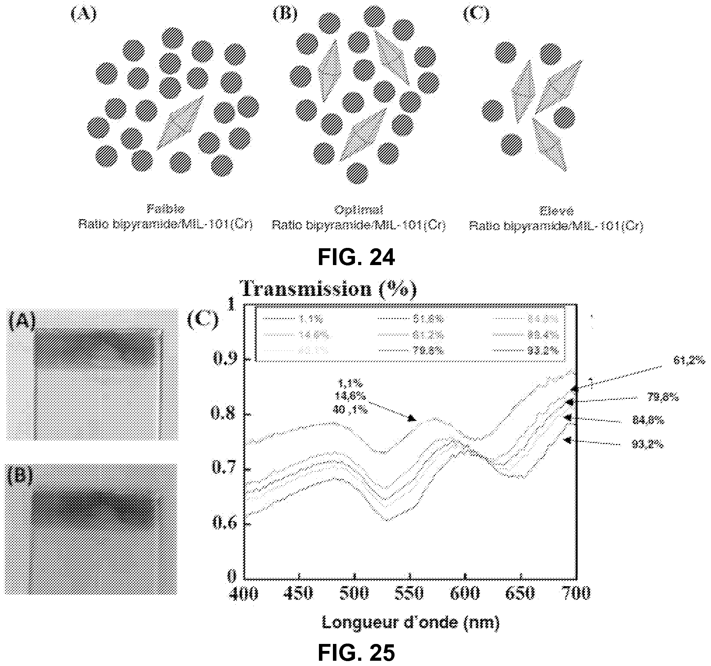

Selon le ratio pondéral nanoparticules MIL-101(Cr) / nanobipyramides d'or, trois cas peuvent se présenter (Figure 24). Ces dernières ne tiennent pas compte de la présence possible de microstructures dans le film et correspondent donc principalement à l'hypothèse d'un système monocouche. Premièrement, dans le cas de films contenant une majorité de nanoparticules MIL-101(Cr) et quelques nanobipyramides, la signature optique de ces nanoparticules d'or peut être "diluée" et donc peut être difficilement observable (Figure 24A). Dans la situation inverse, les nanobipyramides d'or sont proches les unes des autres et peuvent interagir ensemble (Figure 24C). Ces interactions interparticulaires peuvent conduire à des changements drastiques de leur signal optique et par conséquent, l'étude de leurs propriétés plasmoniques peut être compromise. Par conséquent, avantageusement, le ratio massique des nanoparticules MIL-101(Cr) aux nanobipyramides d'or peut être optimisé afin de pouvoir capter/détecter les propriétés plasmoniques des bipyramides d'or dans le film et de limiter leurs interactions (Figure 24B).

### 3.3. Impact de trois paramètres pour l'élaboration des films composites selon l'invention

L'impact de trois paramètres lors de l'élaboration du film composite sur la qualité du film (amélioration de la réponse optique en présence de COVs) et la reproductibilité du procédé de fabrication a été étudié : température, ratio massique et présence d'un co-solvant volatil. Dans cet exemple, les nanopyramides d'or ont été préparées selon l'Exemple 3.1, et les suspensions colloidales de MIL-101(Cr) et de nanobipyramides d'or ont été préparées selon le même protocole que celui décrit précédemment à l'Exemple 2.

### 3.3.1. Effet de la température:

L'étude de l'impact de la température sur les caractéristiques du film a été effectuée pour des mélanges de nanoparticules de nanobipyramides d'or et de MIL-101(Cr) dispersées dans de l'eau. Les films composite ont été mis en forme par le même procédé que l'Exemple 2, à savoir par un procédé d'enduction par trempage dans l'eau à différentes températures avec une vitesse d'extraction de 0,005 mm/s.

Les ratios MIL-101(Cr)/nanobipyramides d'or varient de 0.1/1 à 100/1 pour les températures de dépôt suivantes: 25, 40 et 80°C. Les résultats révèlent que l'augmentation de la température favorise le dépôt des nanoparticules conduisant à une épaisseur plus grande et un film de meilleure qualité (Tableau 6).

Tableau 6 : Epaisseur et qualité du film composite en fonction de la température d'enduction par trempage.

**Tableau 6**

| | | Température d'enduction par trempage | | |
|---|---|---|---|---|
| | | 25°C | 40°C | 80°C |
| Ratio massique MIL-101(Cr) /nanobipyramides d'or | 0,1/1 | - | + | ++ |
| | 1/1 | - | + | ++ |
| | 10/1 | - | ++ | +++ |
| | 100/1 | - | ++ | +++ |

| | | | | |
|---|---|---|---|---|
| - peu épais et de mauvaise qualité + épaisseur et qualité du film moyenne ++ bonne épaisseur et film de bonne qualité +++ film épais et de très bonne qualité | | | | |

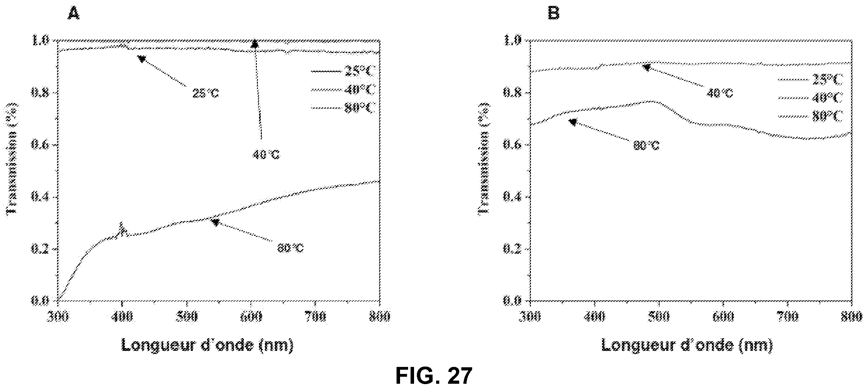

Cette tendance a été démontrée pour les ratios minimum et maximum explorés dans cette étude mais également pour toutes les valeurs intermédiaires. Les spectres de transmission montrent que la quantité de lumière transmise diminue avec l'augmentation de la température démontrant la présence d'un dépôt de matière plus important (Figure 27). Ceci permet de conclure que la température optimale parmi les températures testées est de préférence supérieure à 40°C, plus préférentiellement de l'ordre de 80°C.

### 3.3.2. Effet du ratio massique nanoparticules de MIL-101(Cr)/nanobipyramides d'or:

L'étude de l'impact du ratio massique MOF/nanoparticules métalliques sur les caractéristiques du film a été effectuée pour des mélanges de nanobipyramides d'or et des nanoparticules de MIL-101(Cr) dispersées dans de l'eau, et mis en forme en film composite à 80°C. Le paramètre pertinent étudié est le ratio massique entre la quantité de nanoparticules de MIL-101(Cr) et de nanobipyramides d'or (R_{MIL-101/bipyramide}). Les films composites ont été élaborés selon la méthode de l'Exemple 2, à 80°C, avec différents ratios massiques R_{MIL-101/bipyramide} : 100/1, 10/1, 1/1 et 0,1/1, et ont été évalués en observant si le phénomène optique rencontré lors de la capture des COVs se manifestait pour les films élaborés à partir de suspensions de nanoparticules d'or et de MIL-101(Cr) de compositions spécifiques. Les films obtenus à partir des mélanges en solution aqueuse à 80°C ont montré qu'un excès de nanobipyramides d'or (R_{MIL-101/bipyramide} <0,1/1) ne permettait pas d'induire un changement de couleur, ce qui est probablement dû à la proximité des nanoparticules d'or. Dans le cas d'un excès de nanoparticules de MIL-101(Cr) (R_{MIL-101/bipyramid}, >100/1), le signal optique est dilué et empêche dès lors de voir à l'oeil nu ce changement de couleur. Pour des rapports intermédiaires (e.g. R_{MIL-101/bipyramide}=10/1 ou 1/1), la signature optique des nanobipyramides d'or est détectable par spectroscopie optique et le changement de couleur s'opère en présence de vapeur de COVs (expérience réalisée en présence de vapeurs d'acide acétique : 15000 ppm acétique acide et RH 40%, une concentration très élevée donc on peut raisonnablement penser que les pores du MOF sont saturés dans ces conditions, ce qui est ce que l'on souhaite mettre en évidence dans ce test avec le fim composite MIL-101(Cr)/nanobipyramides d'or). La signature optique des nanobipyramides d'or est la même que celle de l'exemple 3.4. à savoir un déplacement des bandes longitudinales (déplacement de 607 nm (film non saturé) à 645 nm (film saturé)) et transversales (déplacement de 517 nm (non saturé) à 526 nm (film saturé)). Le déplacement (shift) de la bande transversale est faible et n'induit pas de changement de couleur visible à l'oeil nu. Ceci étant, cette bande transversale existe (détectable par spectroscopie optique) et est faiblement déplacée en présence d'humidité et/ou de COV. Le déplacement (shift) de la bande longitudinale est plus significatif. De ce fait, la bande longitudinale est intéressante pour caractériser le changement de couleur. La couleur s'explique par les deux bandes, le changement de couleur s'explique (essentiellement) par le déplacement de la bande longitudinale. Sans vouloir être lié à une quelconque théorie, les résultats semblent indiquer que les nanoparticules de MIL-101(Cr) s'intercalent entre les nanobipyramides d'or et induisent une bonne dispersion. Il ressort de ces résultats qu'il convient de préférence d'élaborer ces films composites avec un ratio massique R_{MIL-101/bipyramide} compris entre 100/1 et 0.1/1 de préférence 10/1, de préférence à 80°C.

### 3.3.3. Impact d'un co-solvant volatil, l'éthanol :

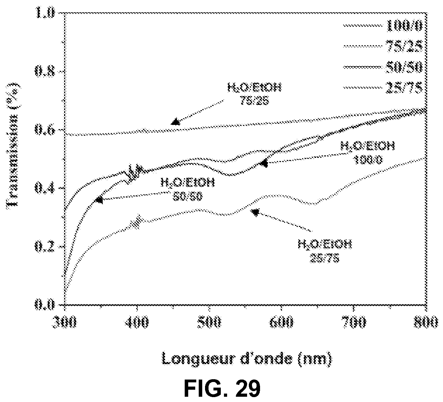

L'emploi d'un solvant volatil pour l'élaboration de films par enduction par trempage est généralement encouragé pour favoriser le dépôt d'une plus grande quantité de matière sur le substrat et ce, à plus basses températures. Les films composites ont été élaborés selon la méthode de l'Exemple 2, à 80°C, avec une suspension colloidale MIL-101(Cr)/nanopyramides d'or (ratio massique R_{MIL-101/bipyramide} de 10/1) dans différents mélanges hydroalcooliques eau/éthanol. Les ratios volumiques eau/éthanol étudiés dans cet exemple sont 100/0, 75/25, 50/50 et 25/75. Il apparait que pour une température fixée à 80°C et un ratio massique MIL-101(Cr)/nanobipyramides d'or de 10/1, la qualité du film et la quantité de matière apparente déposée sur le substrat à l'issue du dépôt par enduction par trempage sont affectées par la proportion d'éthanol. Pour une suspension purement aqueuse, le dépôt était hétérogène et différait d'un échantillon à l'autre (problème de reproductibilité) tandis que pour un mélange 50/50, le dépôt était plus épais et homogène. De plus, la reproductibilité avec le mélange 50/50 est grandement améliorée. Sans vouloir être lié à une quelconque théorie, les résultats supportent la proposition qu'une proportion plus élevée d'éthanol semble induire une déstabilisation contrôlée des nanobipyramides d'or favorisant leur dépôt sur le substrat. Par ailleurs, la présence d'un co-solvant plus volatil que l'eau permet d'abaisser la température d'ébullition du mélange et dès lors, de faire évaporer davantage de liquide conduisant à une augmentation de la quantité de matière déposée. La réponse optique attendue se manifeste au moins pour les ratios volumiques eau/éthanol 100/0, 50/50 et 25/75 pour lesquels la signature optique des nanobipyramides d'or est visuellement apparente (Figure 29).

### 3.4. Dispositif colorimétrique

Le comportement d'un film composite (ratio massique MIL-101(Cr)/nanobipyramide : 1,40/0,5, dépôt à 80°C avec une vitesse de retrait de 0,005 mm/s) a été évalué sous vapeur d'eau (de ~1% à 93% RH) (Figure 25). Le décalage des bandes d'extinction a été suivi en fonction de l'humidité relative par mode de transmission. La couleur du film composite initial, exposé à l'air sec (-1% HR), était bleuâtre et cette couleur devenait progressivement rougeâtre lorsque l'humidité relative augmentait. La position des bandes d'extinction est passée de 517 nm (-1% HR) à 526 nm (-93% HR) pour la première bande (transversale) et de 607 nm (-1% HR) à 645 nm (-93% HR) pour la seconde bande (longitudinale). Comme prévu, le déplacement de la bande longitudinale de plasmon est plus important que celui de la bande transversale. Ceci démontre le concept du dispositif colorimétrique. Des tests qualitatifs ont également été effectués en présence de vapeur d'acide acétique et ont confirmé le changement de couleur.

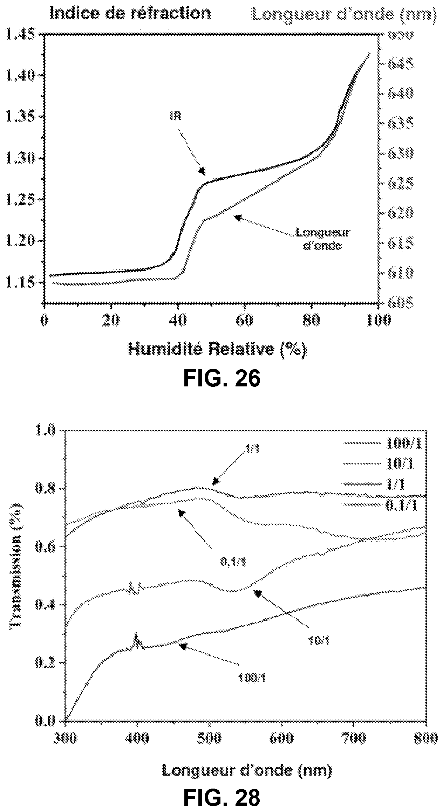

Une comparaison de l'évolution de la position de la bande plasmon longitudinale par rapport à l'HR d'une part, et de l'isotherme d'adsorption de l'eau de MIL-101(Cr) d'autre part, montre que les propriétés d'adsorption de MIL-101(Cr) régissent le comportement optique du film composite (Figure 26). L'isotherme de l'eau de MIL-101(Cr) (HR vs indice de réfraction) montre une faible évolution dans les valeurs d'indice de réfraction à basse pression (< 40% HR). Entre -40 et 45% HR, on observe une forte augmentation de l'indice de réfraction (-0,1 RIU) correspondant au remplissage de la porosité du MOF (petites et grandes cages). Au-delà de cette plage d'HR, la condensation capillaire se produit et l'indice de réfraction augmente jusqu'à atteindre 1,43 unités d'indice de réfraction (RIU). En parallèle, le décalage de la bande plasmon évolue de la même manière que l'indice de réfraction :
- jusqu'à ~40 % d'HR, la position de la bande longitudinale de plasmon est située à -607 nm.
- après le remplissage des cages de la MIL-101(Cr), cette bande est déplacée à ~618 nm.
- la bande plasmon rouge se décale progressivement jusqu'à -645 nm à -93% HR.

Ainsi, il a été démontré que la réponse optique des nanobipyramides d'or à la variation de l'indice de réfraction local peut être réglée en utilisant des nanoparticules MOF appropriées.

Cet Exemple a démontré l'effet synergique entre l'influence du changement de l'indice de réfraction du MIL-100(Cr) induit par l'adsorption par le MOF d'un composé volatile et le remplissage de ses pores (p.ex. avec de l'acide acétique), sur le déplacement de la bande plasmonique longitudinale des nanobipyramides d'or. De fait, cet exemple fournit une preuve de concept pour la mise en oeuvre d'un dispositif optique capable de révéler visuellement le niveau de saturation de l'adsorbant.

En résumé, dans certains modes de réalisation avantageux, l'invention concerne des films minces associant des solides hybrides poreux de type MOFs (Metal Organic Frameworks) et des nanoparticules (bi)métalliques (« (B)MNPs ») pour la capture sélective et la détection optique de COVs dans des conditions ambiantes de température, de pression et d'humidité, en particulier dans des conditions ambiantes d'humidité relative élevée voire supérieure à la normale, telles que celles que l'on peut trouver dans les musées. Les MOFs utilisés, sélectionnés pour leur stabilité chimique, leur hydrophobicité et leur sélectivité pour l'adsorption de COVs en présence d'humidité, sont déjà connus mais leur synthèse a été, pour certains, adaptée (taille nanométrique) afin d'optimiser les propriétés optiques des films composites.

Ainsi, un indicateur optique selon l'invention a été mis en oeuvre, lequel pouvant avantageusement être constitué de deux composants principaux :
(i) des nanoparticules de MOF choisi parmi des MOFs particuliers (une série de nanoparticules de MOFs a été synthétisée avec des spécificités physico-chimiques (nature du centre métallique et des ligands, balance hydrophile/hydrophobe, distribution en taille des pores, taille nanométrique du MOF) adaptées afin d'optimiser la stabilité du MOF (stabilité chimique en présence d'humidité) et ses propriétés d'adsorption sélective de COVs dans des conditions normales de température, de pression et d'humidité) ;
(ii) différentes nanoparticules métalliques de composition (or, argent, bimétalliques or/palladium, or/argent ...), de taille et de forme, de préférence anisotropique (étoile, bipyramide, bâtonnets ...) variables ont été synthétisées dans le but d'optimiser le changement de couleur induit par la modification de l'environnement de ces (B)MNPs.

L'association de ces deux composants et leur dépôt sous forme d'un film mince de qualité optique permet de générer un indicateur (optique) capable d'adsorber sélectivement des COVs, en présence d'humidité, dans des milieux confinés (habitat, habitacle automobile, musées ...), tout en offrant la possibilité de contrôler visuellement la présence et le remplissage des MOFs par les polluants (COVs). Une étude par ellipsométrie a permis de mettre en évidence la variation de l'indice de réfraction du MOF sélectionné en fonction de son taux de remplissage en eau et/ou COVs. Cette variation de l'indice de réfraction s'accompagne simultanément d'un déplacement de la bande d'extinction des nanoparticules métalliques et donc d'un changement de couleur des films minces associant MOFs et nanoparticules métalliques.

Avantageusement, des nanobipyramides d'or ont été utilisées avec succès dans la mise en oeuvre de films composites selon l'invention. Les nanoparticules d'or bipyramidales notamment sont avantageuses à plusieurs titres:
(i) en choisissant le rapport d'aspect approprié (longueur/largeur), la bande d'extinction peut être située dans la région visible. Un décalage de la bande d'extinction peut donc entraîner un changement de couleur de l'appareil.
(ii) les nanobipyramides d'or présentent une sensibilité élevée à l'indice de réfraction et
(ii) la synthèse des nanobipyramides d'or est bien documentée et donc très accessible.

Les indicateurs optiques selon la présente invention permettent de résoudre une problématique importante dans le cadre de l'utilisation d'adsorbants pour la dépollution de l'air intérieur, liée à la sélectivité des adsorbants pour la capture de COVs en présence d'humidité ambiante et au suivi du remplissage de ces adsorbants et donc à leur remplacement lorsque ces derniers sont saturés en polluants (COVs). Un des intérêts de l'invention réside dans la capacité de suivre par un changement de couleur observable à l'oeil nu le remplissage et/ou la saturation de l'indicateur optique dans des conditions ambiantes de température, pression et humidité. Cette invention permet donc de faciliter et optimiser l'utilisation et le remplacement d'adsorbants sélectionnés pour leur capacité à adsorber sélectivement les COVs en présence d'humidité. Un des grands avantages du matériau composite décrit dans le présent document, est qu'il peut être mis en oeuvre sous forme de film mince de haute qualité optique dans le visible (détection d'un changement de couleur à l'oeil nu).

L'utilisation de ces indicateurs optiques peut être envisagée dans tous les milieux intérieurs (logements, bureaux, habitacle automobile ...) et espaces confinés afin de contrôler le remplissage des adsorbants et donc optimiser leur utilisation et leur remplacement. Le changement de couleur observable à l'oeil nu permet d'envisager une utilisation des plus aisée afin notamment de savoir quand exactement l'utilisateur doit remplacer ou régénérer le capteur.

L'utilisation de ces indicateurs optiques peut aussi être envisagée dans le cadre de l'exposition et de la conservation des objets du patrimoine. Ces derniers sont susceptibles d'être altérés sous l'effet de COVs (ex: acide acétique), dans les conditions d'exposition mais aussi dans les conditions de stockage. L'utilisation de films, dont la couleur varie en fonction du taux de remplissage des adsorbants utilisés, permettra d'optimiser la durée de vie de ces adsorbants ainsi que leur remplacement lorsqu'ils seront saturés en polluants (COVs).

Différentes technologies sont actuellement utilisées pour l'adsorption de COVs, avec des sélectivités plus ou moins importantes, en présence d'humidité de l'air (charbons actifs, zéolithes ...) mais la problématique du taux de remplissage de ces adsorbants reste sans solution à ce jour. L'invention permet de visuellement contrôler le taux de remplissage d'adsorbants, sélectifs pour l'adsorption de COVs en présence d'humidité, et donc d'optimiser le remplacement lorsque ces adsorbants sont saturés en polluants.

### REFERENCES

**1.** Ashrae Fundamentals Handbook, SI Edition, 2001.
**2.** Rouquérol, F. ; Rouquérol, J. ; Sing, K. Adsorption by powders and porous solids ; Academic Press : San Diego, 1999.
**3.** L. Sarkisov et A. Harrison, Mol. Simul., 2011, 37, 1248-1257.
**4.** Hwang, Y. K. ; Hong, D.-Y. ; Chang, J.-S. ; Jhung, S. H. ; Seo, Y.-K. ; Kim, J. ; Vimont, A. ; Daturi, M. ; Serre, C. ; Férey, G. Amine greffe sur centres métalliques des MOFs insaturés : conséquences pour catalyse et encapsulage des métaux. Angew. Chemie. Int. Ed. 2008, 47 (22), 4144-4148.
**5.** Kim, M. ; Cahill, J. F. ; Fei, H. ; Prather, K. A. ; Cohen, S. M. Postsynthetic Ligand and Cation Exchange in Robust Metal-Organic Frameworks. J. Am. Chem. Soc. 2012, 134 (43), 18082-18088.
**6.** Zhou, H.-C. "Joe" ; Kitagawa, S. Metal-Organic Frameworks (MOFs). Chem. Soc. Rev. 2014, 43 (16), 5415-5418.
**7.** Tanabe, K. K. ; Cohen, S. M. Postsynthetic modification of metal-organic frameworks--a progress report. Chem. Soc. Rev. 2011, 40 (2), 498-519.
**8.** WO 2019/053048.
**9.** V. Guillerm et coll. angew. Chemie Int. Ed. 2012, 51, 9267-9271.
**10.** J.H. Cavka et al, J. Am. Chem. Soc, 2008, 130, 13850-13851.
**11.** Q. Yang et al. Chem. Commun. 2011, 47, 9603-9605.
**12.** S. Biswas et al. Eur. J. Inorg. Chem. 2013, 12, 12, 2154-2160.
**13.** V. Bon et al. CrystEngComm 2013, 15, 9572-9577.
**14.** Yuting Huang et al, Enhanced stability and CO2 affinity of a UiO-66 type metal-organic framework decorated with dimethyl groups, Dalton Trans, 2012, 41, 9283-9285.
**15.** K. Park et coll. Acad. nat. Sci. 2006, 103, 10186-10191.
**16.** T. Loiseau, et al. Chem. Eur. J. 2004, 10, 1373-1382.
**17.** C. Serre et al. Chem. Soc. 2002, 124, 13519-13526.
**18.** T.R. Whitfield et al. 2005, 7, 1096-1103.
**19.** E.V. Anokhina et al. J. Am. Chem. Soc. 2005, 127, 15000-15001.
**20.** T. Devic et al. Chem. Soc. 2010, 132 (3), 1127-1136.
**21.** T. Loiseau et al, Hydrothermal Synthesis and Crystal Structure of a New Three-Dimensional Three-Dimensional Aluminum-Organic Framework MIL-69 with 2,6-Naphthalenedicarboxylate (ndc), Al(OH)(ndc)QH2O, C. R. Chimie, Special Issue on Crystalline and Organized Porous Solids, 8, 765-72 (2005).
**22.** Ramsahye, Naseem ; Khuong Trung, Thuy ; Scott, Lorna ; Nouar, Farid ; Devic, Thomas ; Horcajada, Patricia ; Magnier, Emmanuel ; David, Olivier ; Serre, Christian ; Trens, Philippe "Impact of the flexible character of MIL-88 iron(lll) dicarboxylates on the adsorption of n-alkanes" Chem. Mater, 2013, 25, (3), 479-488 pour une description d'exemples de protocoles de fabrication de ce type de MOF.
**23.** WO2009/123484.
**24.** M. Rose et al. Mater. 2011, 13, 356-360.
**25.** R. Ostermann at al. Chem. Commun. 2011, 47, 442-444.
**26.** J. Ren et al. int. J. Hydrogen Energy 2015, 40, 9382-9387.
**27.** M.R. Khan et al. Ing. Performez. 2016, 25, 1276-1283.
**28.** WO 2009/07767.
**29.** US 2014/0213832.
**30.** Permyakova, A.; Skrylnyk, O.; Courbon, E.; Affram, M.; Wang, S.; Lee, U.-H.; Valekar, A.H.; Nouar, F.; Mouchaham, G.; Devic, T.; De Weireld, G.; Chang, J.-S.; Steunou, N.; Frère, M.; Serre, C. Synthesis Optimization, Shaping, and Heat Reallocation Evaluation of the Hydrophilic Metal-Organic Framework MIL-160(AI). Chem. Sus. Chem., 10, 1419-1426, 2017b.
**31.** Kim, P.-J.; You, Y.-W.; Park, H.; Chang, J.-S.; Bae, Y.-S.; Lee, C.-H.; Suh, J.-K. Séparation of SF6 from SF6/N-2 mixture using metal-organic framework MIL-100(Fe) granule Chem. Eng. J. 262, 683-690, 2015.
**32.** M. Liu, P. Guyot-Sionnest, J. Phys. Chem. B 109 (2005) 22192-22200.
**33.** N.K. Geitner, A. Doepke, M.A. Fickenscher, J.M. Yarrison-Rice, W.R. Heineman, H.E. Jackson, L.M. Smith, Nanotechnology 22 (2011) 275607.
**34.** G. Mie, Ann. Phys. 330 (1908) 377-445.
**35.** S. Link, M.A. El-Sayed, J. Phys. Chem. B 103 (1999) 4212-4217.
**36.** H. Chen, X. Kou, Z. Yang, W. Ni, J. Wang, Langmuir 24 (2008) 5233-5237.
**37.** A. Demessence, C. Boissière, D. Grosso, P. Horcajada, C. Serre, G. Férey, G.J.A.A. Soler-lllia, C. Sanchez, J. Mater. Chem. 20 (2010) 7676-7681.
**38.** J. Cravillon, S. Münzer, S.-J. Lohmeier, A. Feldhoff, K. Huber, M. Wiebcke, Chem. Mater. 21 (2009) 1410-1412.
**39.** A. Demessence, P. Horcajada, C. Serre, C. Boissière, D. Grosso, C. Sanchez, G. Férey, Chem. Commun. 0 (2009) 7149-7151.
**40.** X. Zhu, J. Gu, Y. Wang, B. Li, Y. Li, W. Zhao, J. Shi, Chem Commun 50 (2014) 8779-8782.
**41.** R.J. Marshall, C.L. Hobday, C.F. Murphie, S.L. Griffin, C.A. Morrison, S.A. Moggach, R.S. Forgan, J. Mater. Chem. A 4 (2016) 6955-696.
**42.** W. Morris, S. Wang, D. Cho, E. Auyeung, P. Li, O.K. Farha, C.A. Mirkin, ACS Appl. Mater. Interfaces 9 (2017) 33413-33418.
**43.** P. Horcajada, F. Salles, S. Wuttke, T. Devic, D. Heurtaux, G. Maurin, A. Vimont, M. Daturi, O. David, E. Magnier, N. Stock, Y. Filinchuk, D. Popov, C. Riekel, G. Férey, C. Serre, J. Am. Chem. Soc. 133 (2011) 17839-17847.
**44.** J. Reguera, J. Langer, D. J. de Aberasturi, L. M. Liz-Marzan, Chem. Soc. Rev., 2017, 46, 3866.
**45.** M. B. Gawande, A. Goswami, F.-X. Felpin, T. Asefa, X. Huang, R. Silva, X. Zou, R. Zboril, R. S. Varma, Chem. Rev., 2016, 116, 3722.
**46.** J. Zhang, H. Li, Z. Jiang, Z. Xie, Phys. Sci. Rev., 2018, 3, doi 10.1515/psr-2017-0101.
**47.** WO 2018/141685.
**48.** Paul Rouschmeyer, Thèse de doctorat de l'Université Paris-Saclay préparée à l'Université Versailles Saint-Quentin, «Nouveaux solides hybrides poreux luminescents à base de tétrazine", Ecole doctorale n°571, Sciences chimiques : molécules, matériaux, instrumentation et biosystèmes Chime (2015).

## Revendications

1. Matériau composite associant :
(a) au moins un MOF cristallin poreux sous forme de nanoparticules ayant un diamètre ou taille du plus grand axe si les particules sont de forme asymétrique inférieur à 100 nm, adapté à l'adsorption de composés organiques volatils ; et
(b) des nanoparticules sous la forme de nanobipyramides d'au moins un métal ou alliage de métaux ayant une bande plasmon dans le visible, le métal étant choisi parmi Au, Ag, Cu et Pd ou mélange homogène ou non ou alliage de ceux-ci;
le ratio massique MOF/nanoparticule métallique étant compris entre 100/1 et 0,1/1 ; de préférence entre 50/1 et 1/1 ; de préférence entre 20/1 et 1/1 ; de préférence entre 15/1 et 5/1 ; de préférence entre 12/1 et 8/1 ; tout préférentiellement environ 10/1.

2. Composite selon la revendication 1, dans lequel le MOF peut être formé par un réseau d'oxydes et/ou d'hydroxydes métalliques et/ou d'ions métalliques connectés par des ligands, lesdits ligands étant choisis dans le groupe comprenant:
- les ligands aromatiques polycarboxylates en C6-C24, tels que le di-, tri- ou tétracarboxylate de benzyle ou de naphtyle, les ligands aromatiques portant éventuellement un ou plusieurs atomes F sur au moins un noyau aromatique ;
- les ligands aliphatiques polycarboxylates en C2-C16,
- les ligands hétéroaromatiques en C1-C20 dont au moins deux chaînons du cycle aromatique sont des hétéroatomes choisis parmi S, N, O ou B, tels que les ligands de type imidazolyle, les ligands hétéroaromatiques portant éventuellement un ou plusieurs atomes F sur au moins un noyau aromatique ;
chacun des ligands précités portant éventuellement des groupes fluorés apolaires, par exemple des groupes -(CF₂)ₙ-CF₃, n étant un nombre entier de 0 à 5, de préférence 0 ou 3, et/ou des groupes alkyle apolaires en C1-C20 de préférence en C1-C4, par exemple -CH₃ ou -CH₂-CH₃, greffés directement sur les ligands et pointés vers l'intérieur des pores du MOF.

3. Composite selon la revendication 2, dans lequel le MOF est tout spécialement adapté à l'adsorption de l'acide acétique de l'air ambiant, et comprend une taille moyenne de pores de 0,4 à 0,6 nm.

4. Composite selon la revendication 2, dans lequel les ligands aromatiques polycarboxylates en C6-C24, tels que le di-, tri- ou tétracarboxylate de benzyle ou de naphtyle, sont choisis dans le groupe comprenant C₆H₄(CO₂⁻)₂ (téréphtalate), C₁₀H₆(CO₂⁻)₂ (naphtalene-2,6-dicarboxylate), C₁₂H₈(CO₂⁻)₂ (biphenyl-4,4'-dicarboxylate), C₆H₃(CO₂⁻)₃ (benzene-1,2,4-tricarboxylate), C₆H₃(CO₂⁻)₃ (benzene-1,3,5-tricarboxylate), C₂₄H₁₅(CO₂⁻)₃ (benzene-1,3,5-tribenzoate), C₆H₂(CO₂⁻)₄ (benzene-1,2,4,5-tetracarboxylate, C₁₀H₄(CO₂⁻)₄ (naphtalene-2,3,6,7-tetracarboxylate), C₁₀H₄(CO₂⁻)₄ (naphtalene-1,4,5,8-tetracarboxylate), C₁₂H₆(CO₂⁻)₄ (biphenyl-3,5,3',5'-tetracarboxylate) et des analogues modifiés choisis parmi le 2-méthyl téréphtalate, 2,5-diméthyl téréphtalate, tétraméthyl téréphtalate, perfluorométhyl téréphtalate, diperfluorométhyl téréphtalate 2-chlorotéréphthalate, 2-bromotéréphthalate, 2,5 tétrafluorotéréphthalate, tétrafluorotéréphthalate, diméthyl-4,4'-biphényldicarboxylate, 2,2-Bis(4-carboxyphenyl)hexafluoropropane, tétramethyl-4,4'-biphényldicarboxylate, dicarboxy-4,4'-biphényldicarboxylate, azobenzène dicarboxylate, azobenzène tétracarboxylate.

5. Composite selon la revendication 2, dans lequel les ligands alkyle polycarboxylates en C4-C16 sont choisis dans le groupe comprenant les ligands di-, tri- ou tétracarboxylates ou di-, tri- ou tétraacide carboxyliques, par exemple C₂H₂(CO₂⁻)₂ (fumarate), C₂H₄(CO₂⁻)₂ (succinate), C₃H₆(CO₂⁻)₂ (glutarate), (C₄H₄)(CO₂⁻)₂ (muconate), C₄H₈(CO₂⁻)₂ (adipate).

6. Composite selon la revendication 2, dans lequel les ligands hétéroaromatiques sont choisis dans le groupe comprenant les ligands de type imidazole tels que les noyaux imidazolyle, benzimidazolyle, azabenzimidazolyle (p.ex. 4-azabenzimidazolyle, 5-azabenzimidazolyle,) ou purinyle, de préférence imidazolyle.

7. Composite selon l'une quelconque des revendications 1 à 6, dans lequel le métal de l'oxyde et/ou de l'hydroxyde métallique et/ou l'ion métallique du MOF est choisi parmi Li, Na, Rb, Mg, Ca, Sr, Ba, Sc, Ti, Zr, Ta, Cr, Mo, W, Mn, Fe, Ru, Os, Co, Ni, Pd, Pt, Cu, Au, Zn, AI, Ga, In, Si, Ge, Sn, Bi, Cd, Mn, Tb, Gd, Ce, La, ou Cr, de préférence Zr, Zn, Fe, Al, ou Cr.

8. Composite selon l'une quelconque des revendications 1-2 et 4-7, dans lequel le MOF a une structure cristalline choisie parmi MIL-101, MIL-101-en, UiO-66, UiO-67, MIL-140A, MIL-140B, MIL-140C, UiO-66-2CF₃, UiO-66-NH₂, UiO-NDC, UiO-66-(CH₃)₂, UiO-67-CPHFP, MIL-140A-CPHFP, MIL-140B-CPHFP, MIL-140C-CPHFP, ZIF, ZIF-8, MIL-53, MIL-68, MIL-69 ou MIL-88B-4CH₃; de préférence MIL-101, UiO-66-2CF₃, UiO-67-CPHFP, MIL-140A-CPHFP, MIL-140B-CPHFP ou MIL-140C-CPHFP; de préférence MIL-101 ou UiO-66-2CF_{3;}
par exemple, le MOF est choisi parmi MIL-101(Cr), MIL-101(Cr)-en, UiO-66(Zr), UiO-67(Zr), MIL-140A(Zr), MIL-140B(Zr), MIL-140C(Zr), UiO-66-2CF₃(Zr), UiO-66-NH₂(Zr), UiO-NDC(Zr), UiO-66-(CH₃)₂(Zr), UiO-67-CPHFP(Zr), MIL-140A-CPHFP(Zr), MIL-140B-CPHFP(Zr), MIL-140C-CPHFP(Zr), ZIF, ZIF-8, MIL-53(M = Cr, Al, Fe, Ga, In), MIL-68(AI), MIL-69(AI) ou MIL-88B-4CH₃(Fe); de préférence MIL-101(Cr), UiO-66-2CF₃(Zr), UiO-67-CPHFP(Zr), MIL-140A-CPHFP(Zr), MIL-140B-CPHFP(Zr) ou MIL-140C-CPHFP(Zr) ; plus préférentiellement MIL-101(Cr) ou UiO-66-2CF₃(Zr).

9. Composite selon la revendication 3, dans lequel le MOF a une structure cristalline choisie parmi MIL-140B, MIL-140C, UiO-66-2CF₃, UiO-NDC, UiO-66-(CH₃)₂ , ZIF, par exemple ZIF-8, MIL-53, MIL-53-(CF₃)₂, MIL-69 et MIL-88B-4CH₃; de préférence, MIL-140B, MIL-140C, UiO-66-2CF₃, UiO-NDC, UiO-66-(CH₃)₂ , MIL-53, MIL-53-(CF₃)₂, ou MIL-88B-4CH₃;
par exemple, le MOF est choisi parmi MIL-140B(Zr), MIL-140C(Zr), UiO-66-2CF₃(Zr), UiO-NDC(Zr), UiO-66(Zr)-(CH₃)₂, ZIF, par exemple ZIF-8, MIL-53(Fe), MIL-53(Fe)-(CF₃)₂, MIL-69(AI) et MIL-88B(Fe)-4CH₃; de préférence MIL-140B(Zr), MIL-140C(Zr), UiO-66-2CF₃(Zr), UiO-NDC(Zr), UiO-66(Zr)-(CH₃)₂, MIL-53(Fe), MIL-53(Fe)-(CF₃)₂, ou MIL-88B(Fe)-4CH₃.

10. Matériau composite selon l'une quelconque des revendications 1 à 9 se présentant sous la forme d'une couche mince ou sous la forme de pastilles.

11. Procédé de préparation d'un matériau composite selon l'une quelconque des revendications 1 à 10, comprenant une étape de préparation.
- de deux suspensions colloïdales : (i) une suspension colloïdale de nanoparticules d'au moins un MOF tel que défini dans l'une quelconque des revendications 1 à 10 et (ii) une suspension colloïdale de nanoparticules sous la forme de nanobipyramides d'au moins un métal ou alliage de métaux, tels que définis dans la revendication 1, dans un solvant organique ou aqueux ; ou
- d'une suspension colloïdale d'un mélange (i) de nanoparticules d'au moins un MOF ayant un diamètre ou taille du plus grand axe si les particules sont de forme asymétrique inférieur à 100 nm et (ii) de nanoparticules sous la forme de nanobipyramides d'au moins un métal ou alliage de métaux, tels que définis dans la revendication 1, dans un solvant organique ou aqueux ; le solvant organique ou aqueux étant de préférence HzO, un alcool, par exemple EtOH, ou un mélange hydroalcoolique.

12. Procédé selon la revendication 11, comprenant en outre une étape de déposition du matériau composite en couche mince sur un substrat par pulvérisation, enduction par trempage (« dip-coating ») ou enduction centrifuge (« spin-coating »), de préférence par enduction par trempage.

13. Procédé selon la revendication 11 ou 12, dans lequel l'étape de déposition du matériau composite en couche mince est réalisée par enduction par trempage,
(i) à une température comprise entre 20°C et 90°C, de préférence entre 30°C et 90°C, de préférence entre 40°C et 90°C, de préférence entre 50°C et 90°C, de préférence entre 60°C et 90°C, de préférence entre 70°C et 90°C, tout préférentiellement environ 80°C (78-82°C) ;
(ii) les suspensions colloidales de nanoparticules de MOF ayant un diamètre ou taille du plus grand axe si les particules sont de forme asymétrique inférieur à 100 nm et de nanoparticules sous la forme de nanobipyramides d'au moins un métal ou alliage de métaux étant dans un solvant aqueux ou organique, de préférence hydroalcoolique, dans toute la gamme de ratio volumique eau/alcool 100/0 à 0/100, de préférence 100/0 à 25/75, de préférence 60/40 à 40/60, de préférence 55/54 à 45/55, tout préférentiellement environ 50/50, où l'alcool est l'éthanol ou le méthanol, de préférence l'éthanol ; et
(iii) le ratio massique nanoparticules de MOF/nanoparticules bipyramidales métalliques étant avantageusement compris entre 100/1 et 0,1/1 ; de préférence entre 50/1 et 1/1 ; de préférence entre 20/1 et 1/1 ; de préférence entre 15/1 et 5/1 ; de préférence entre 12/1 et 8/1 ; tout préférentiellement environ 10/1.

14. Procédé selon la revendication 12 ou 13, dans lequel le support est de préférence transparent, tel que le verre ou un plastique.

15. Dispositif comprenant un matériau composite selon l'une quelconque des revendications 1 à 10, pour la détection optique de la saturation d'un adsorbant MOF en composés organiques volatils, de préférence polaires, de préférence choisis parmi l'acide acétique, l'acétaldehyde, le formaldéhyde ou un mélange d'au moins deux de ceux-ci.

16. Dispositif selon la revendication 15 dans lequel le matériau composite se présente sous la forme d'une couche mince, ou sous la forme de pastilles.

17. Utilisation d'un matériau composite selon l'une quelconque des revendications 1 à 10, comme indicateur optique pour la saturation d'un adsorbant MOF en composés organiques volatils, de préférence polaires.

18. Utilisation selon la revendication 17, dans laquelle l'adsorbant MOF est plongé dans un environnement gazeux, tel que l'air, où les composés organiques volatils, de préférence polaires, sont présents à une concentration comprise entre 10 ppb et 500 ppm, avec une humidité relative > 30 %, de préférence ≥35 % d'humidité relative, plus préférentiellement ≥40% d'humidité relative.

## Patentansprüche

1. Verbundwerkstoff, der Folgendes verbindet:
(a) mindestens eine poröse kristalline MOF in Form von Nanopartikeln mit einem Durchmesser oder einer Größe der größten Achse, wenn die Partikel eine asymmetrische Form von weniger als 100 nm aufweisen, die für die Adsorption flüchtiger organischer Verbindungen geeignet ist; und
(b) Nanopartikel in Form von Nano-Bipyramiden aus mindestens einem Metall oder einer Metalllegierung mit einem Plasmonenband im sichtbaren Bereich, wobei das Metall aus Au, Ag, Cu und Pd oder einer homogenen oder nicht homogenen Mischung oder einer Legierung davon ausgewählt ist;
wobei das Massenverhältnis von MOF zu Metallnanopartikel zwischen 100/1 und 0,1/1; vorzugsweise zwischen 50/1 und 1/1; vorzugsweise zwischen 20/1 und 1/1; vorzugsweise zwischen 15/1 und 5/1; vorzugsweise zwischen 12/1 und 8/1; vor allem bevorzugt etwa 10/1 beträgt.

2. Verbundwerkstoff nach Anspruch 1, bei dem die MOF durch ein Netzwerk von Metalloxiden und/oder -hydroxiden und/oder Metallionen gebildet sein kann, die durch Liganden verbunden sind, wobei die Liganden ausgewählt sind aus der Gruppe, die Folgendes umfasst:
- aromatische C6-C24-Polycarboxylatliganden, wie Benzyl- oder Naphthyldi-, -tri- oder -tetracarboxylat, wobei die aromatischen Liganden gegebenenfalls ein oder mehrere F-Atome an mindestens einem aromatischen Ring tragen;
- aliphatische C2-C16-Polycarboxylatliganden;
- heteroaromatische C1-C20-Liganden, von denen mindestens zwei Glieder des aromatischen Rings Heteroatome sind, die aus S, N, O oder B ausgewählt sind, wie Liganden vom Imidazolyl-Typ, wobei die heteroaromatischen Liganden gegebenenfalls ein oder mehrere F-Atome an mindestens einem aromatischen Ring tragen;
wobei jeder der oben genannten Liganden gegebenenfalls unpolare fluorierte Gruppen, zum Beispiel -(CF₂)ₙ-CF₃-Gruppen, wobei n eine ganze Zahl von 0 bis 5, vorzugsweise 0 oder 3 ist, und/oder unpolare C1-C20-Alkylgruppen, vorzugsweise C1-C4-Alkylgruppen, zum Beispiel -CH₃ oder -CH₂-CH₃, trägt, die direkt auf die Liganden aufgepfropft und in das Innere der Poren der MOF gerichtet sind.

3. Verbundwerkstoff nach Anspruch 2, wobei die MOF speziell für die Adsorption von Essigsäure aus der Umgebungsluft geeignet ist und eine durchschnittliche Porengröße von 0,4 bis 0,6 nm aufweist.

4. Verbundwerkstoff nach Anspruch 2, wobei die aromatischen C6-C24-Polycarboxylatliganden, wie Benzyl- oder Naphthyldi-, -tri- oder -tetracarboxylat, aus der Gruppe ausgewählt sind, umfassend C₆H₄(CO₂⁻)₂(Terephthalat), C₁₀H₆(CO₂⁻)₂(Naphthalin-2,6-dicarboxylat), C₁₂H₈(CO₂⁻)₂(Biphenyl-4,4'-dicarboxylat), C₆H₃(CO₂⁻)₃(Benzol-1,2,4-tricarboxylat), C₆H₃(CO₂⁻)₃(Benzol-1,3,5-tricarboxylat), C₂₄H₁₅(CO₂⁻)₃(Benzol-1,3,5-Tribenzoat), C₆H₂(CO₂⁻)₄(Benzol-1,2,4,5-tetracarboxylat, C₁₀H₄(CO₂⁻)₄(Naphthalin-2,3,6,7-Tetracarboxylat), C₁₀H₄(CO₂⁻)₄(Naphtalin-1,4,5,8-Tetracarboxylat), C₁₂H₆(CO₂⁻)₄(Biphenyl-3,5,3',5'-Tetracarboxylat) und modifizierte Analoga, die ausgewählt sind aus 2-Methylterephthalat, 2,5-Dimethylterephthalat, Tetramethylterephthalat, Perfluormethylterephthalat, Diperfluormethylterephthalat, 2-Chlorterephthalat, 2-Bromterephthalat, 2,5-Tetrafluorterephthalat, Tetrafluorterephthalat, Dimethyl-4,4'-biphenyldicarboxylat, 2,2-Bis(4-carboxyphenyl)hexafluorpropan, Tetramethyl-4,4'-biphenyldicarboxylat, Dicarboxy-4,4'-biphenyldicarboxylat, Azobenzoldicarboxylat, Azobenzoltetracarboxylat.

5. Verbundwerkstoff nach Anspruch 2, wobei die C4-C16-Alkylpolycarboxylat-Liganden aus der Gruppe ausgewählt sind, die Di-, Tri- oder Tetracarboxylat- oder Di-, Tri- oder Tetracarbonsäureliganden, zum Beispiel C₂H₂(CO₂⁻)₂(Fumarat), C₂H₄(CO₂⁻)₂(Succinat), C₃H₆(CO₂⁻)₂(Glutarat), (C₄H₄)(CO₂⁻)₂ (Muconat), C₄H₈(CO₂⁻)₂(Adipat), umfasst.

6. Verbundwerkstoff nach Anspruch 2, wobei die heteroaromatischen Liganden aus der Gruppe ausgewählt sind, die Liganden vom Imidazol-Typ, wie Imidazolyl-, Benzimidazolyl-, Azabenzimidazolyl- (z. B. 4-Azabenzimidazolyl-, 5-Azabenzimidazolyl-) oder Purinylringe, vorzugsweise Imidazolylringe, umfasst.

7. Verbundwerkstoff nach einem der Ansprüche 1 bis 6, wobei das Metall des Metalloxids und/oder -hydroxids und/oder das Metallion der MOF ausgewählt ist aus Li, Na, Rb, Mg, Ca, Sr, Ba, Sc, Ti, Zr, Ta, Cr, Mo, W, Mn, Fe, Ru, Os, Co, Ni, Pd, Pt, Cu, Au, Zn, AI, Ga, In, Si, Ge, Sn, Bi, Cd, Mn, Tb, Gd, Ce, La oder Cr, vorzugsweise Zr, Zn, Fe, AI oder Cr.

8. Verbundwerkstoff nach einem der Ansprüche 1-2 und 4-7, wobei die MOF eine Kristallstruktur aufweist, die ausgewählt ist aus MIL-101, MIL-101-en, UiO-66, UiO-67, MIL-140A, MIL-140B, MIL-140C, UiO-66-2CF₃, UiO-66-NH₂, UiO-NDC, UiO-66-(CH₃)₂, UiO-67-CPHFP, MIL-140A-CPHFP, MIL-140B-CPHFP, MIL-140C-CPHFP, ZIF, ZIF-8, MIL-53, MIL-68, MIL-69 oder MIL-88B-4CH₃; vorzugsweise MIL-101, UiO-66-2CF₃, UiO-67-CPHFP, MIL-140A-CPHFP, MIL-140B-CPHFP oder MIL-140C-CPHFP; vorzugsweise MIL-101 oder UiO-66-2CF_{3;}
wobei die MOF zum Beispiel ausgewählt ist aus MIL-101(Cr), MIL-101(Cr)-en, UiO-66(Zr), UiO-67(Zr), MIL-140A(Zr), MIL-140B(Zr), MIL-140C(Zr), UiO-66-2CF₃(Zr), UiO-66-NH₂(Zr), UiO-NDC(Zr), UiO-66-(CH₃)₂(Zr), UiO-67-CPHFP(Zr), MIL-140A-CPHFP(Zr), MIL-140B-CPHFP(Zr), MIL-140C-CPHFP(Zr), ZIF, ZIF-8, MIL-53(M = Cr, Al, Fe, Ga, In), MIL-68(Al), MIL-69(Al) oder MIL-88B-4CH₃(Fe); vorzugsweise MIL-101(Cr), UiO-66-2CF₃(Zr), UiO-67-CPHFP(Zr), MIL-140A-CPHFP(Zr), MIL-140B-CPHFP(Zr) oder MIL-140C-CPHFP(Zr); am meisten bevorzugt MIL-101(Cr) oder UiO-66-2CF₃(Zr).

9. Verbundwerkstoff nach Anspruch 3, wobei die MOF eine Kristallstruktur ist, die ausgewählt ist aus MIL-140B, MIL-140C, UiO-66-2CF₃, UiO-NDC, UiO-66-(CH₃)₂, ZIF, zum Beispiel ZIF-8, MIL-53, MIL-53-(CF₃)₂, MIL-69 und MIL-88B-4CH₃; vorzugsweise MIL-140B, MIL-140C, UiO-66-2CF₃, UiO-NDC, UiO-66-(CH₃)₂, MIL-53, MIL-53-(CF₃)₂ oder MIL-88B-4CH₃;
wobei die MOF zum Beispiel ausgewählt ist aus MIL-140B(Zr), MIL-140C(Zr), UiO-66-2CF₃(Zr), UiO-NDC(Zr), UiO-66(Zr)-(CH₃)₂, ZIF, zum Beispiel ZIF-8, MIL-53(Fe), MIL-53(Fe)-(CF₃)₂, MIL-69(Al) und MIL-88B(Fe)-4CH₃; vorzugsweise MIL-140B(Zr), MIL-140C(Zr), UiO-66-2CF₃(Zr), UiO-NDC(Zr), UiO-66(Zr)-(CH₃)₂, MIL-53(Fe), MIL-53(Fe)-(CF₃)₂ oder MIL-88B(Fe)-4CH₃.

10. Verbundwerkstoff nach einem der Ansprüche 1 bis 9, der in Form einer dünnen Schicht oder in Form von Pellets vorliegt.

11. Verfahren zum Herstellen eines Verbundwerkstoffs nach einem der Ansprüche 1 bis 10, umfassend einen Schritt des Vorbereitens von
- zwei kolloidalen Suspensionen: (i) eine kolloidale Suspension von Nanopartikeln mindestens einer MOF, wie in einem der Ansprüche 1 bis 10 definiert, und (ii) eine kolloidale Suspension von Nanopartikeln in Form von Nano-Bipyramiden aus mindestens einem Metall oder einer Metalllegierung, wie in Anspruch 1 definiert, in einem organischen oder wässrigen Lösungsmittel; oder
- einer kolloidalen Suspension einer Mischung aus (i) Nanopartikeln von mindestens einer MOF mit einem Durchmesser oder einer Größe der größten Achse, wenn die Partikel eine asymmetrische Form von weniger als 100 nm aufweisen, und (ii) Nanopartikeln in Form von Nano-Bipyramiden aus mindestens einem Metall oder einer Metalllegierung, wie in Anspruch 1 definiert, in einem organischen oder wässrigen Lösungsmittel; wobei das organische oder wässrige Lösungsmittel vorzugsweise H₂O, ein Alkohol, zum Beispiel EtOH, oder eine hydroalkoholische Mischung ist.

12. Verfahren nach Anspruch 11, das ferner einen Schritt des Abscheidens des Verbundwerkstoffs in einer dünnen Schicht auf ein Substrat durch Sprühen, Tauchbeschichten ("dip-coating") oder Schleuderbeschichten ("spin-coating"), vorzugsweise durch Tauchbeschichten, umfasst.

13. Verfahren nach Anspruch 11 oder 12, wobei der Schritt des Abscheidens des Verbundwerkstoffs in einer dünnen Schicht durch Tauchbeschichten durchgeführt wird,
(i) bei einer Temperatur zwischen 20 °C und 90 °C, vorzugsweise zwischen 30 °C und 90 °C, vorzugsweise zwischen 40 °C und 90 °C, vorzugsweise zwischen 50 °C und 90 °C, vorzugsweise zwischen 60 °C und 90 °C, vorzugsweise zwischen 70 °C und 90 °C, vor allem bevorzugt etwa 80 °C (78-82 °C);
(ii) wobei die kolloidalen Suspensionen von MOF-Nanopartikeln mit einem Durchmesser oder einer Größe der größten Achse, wenn die Partikel eine asymmetrische Form von weniger als 100 nm aufweisen, und von Nanopartikeln in Form von Nano-Bipyramiden aus mindestens einem Metall oder einer Metalllegierung in einem wässrigen oder organischen, vorzugsweise hydroalkoholischen, Lösungsmittel im gesamten Bereich des Volumenverhältnisses von Wasser/Alkohol von 100/0 bis 0/100, vorzugsweise 100/0 bis 25/75, vorzugsweise 60/40 bis 40/60, vorzugsweise 55/54 bis 45/55, vor allem bevorzugt etwa 50/50, vorliegen, wobei der Alkohol Ethanol oder Methanol, vorzugsweise Ethanol, ist; und
(iii) wobei das Massenverhältnis von MOF-Nanopartikeln zu bipyramidalen Metall-Nanopartikeln vorteilhafterweise zwischen 100/1 und 0,1/1; vorzugsweise zwischen 50/1 und 1/1; vorzugsweise zwischen 20/1 und 1/1; vorzugsweise zwischen 15/1 und 5/1; vorzugsweise zwischen 12/1 und 8/1; vor allem bevorzugt etwa 10/1 beträgt.

14. Verfahren nach Anspruch 12 oder 13, wobei der Träger vorzugsweise transparent ist, wie etwa Glas oder Kunststoff.

15. Vorrichtung, die einen Verbundwerkstoff nach einem der Ansprüche 1 bis 10 umfasst, zur optischen Erfassung der Sättigung eines MOF-Adsorptionsmittels mit flüchtigen, vorzugsweise polaren, organischen Verbindungen, die vorzugsweise ausgewählt sind aus Essigsäure, Acetaldehyd, Formaldehyd oder einer Mischung aus mindestens zwei davon.

16. Vorrichtung nach Anspruch 15, wobei der Verbundwerkstoff in Form einer dünnen Schicht oder in Form von Pellets vorliegt.

17. Verwendung eines Verbundwerkstoffs nach einem der Ansprüche 1 bis 10, als optischer Indikator für die Sättigung eines MOF-Adsorptionsmittels mit flüchtigen, vorzugsweise polaren, organischen Verbindungen.

18. Verwendung nach Anspruch 17, wobei das MOF-Adsorptionsmittel in eine gasförmige Umgebung wie Luft, in der die flüchtigen, vorzugsweise polaren, organischen Verbindungen in einer Konzentration zwischen 10 ppb und 500 ppm vorliegen, bei einer relativen Luftfeuchtigkeit von > 30 %, vorzugsweise einer relativen Luftfeuchtigkeit von ≥ 35 %, am meisten bevorzugt einer relativen Luftfeuchtigkeit von ≥ 40 %, getaucht wird.

## Claims

1. A composite material combining:
(a) at least one porous crystalline MOF in the form of nanoparticles having a diameter or size of the largest axis if the particles are of asymmetric shape less than 100 nm, adapted to the adsorption of volatile organic compounds; and
(b) nanoparticles in the form of nanobipyramids of at least one metal or metal alloy having a plasmon band in the visible, the metal being selected from Au, Ag, Cu and Pd or a homogeneous or inhomogeneous mixture or alloy thereof;
the MOF/metal nanoparticle mass ratio being comprised between 100/1 and 0.1/1; preferably between 50/1 and 1/1; preferably between 20/1 and 1/1; preferably between 15/1 and 5/1; preferably between 12/1 and 8/1; most preferably about 10/1.

2. The composite according to claim 1, wherein the MOF can be formed by a network of metal oxides and/or hydroxides and/or metal ions connected by ligands, said ligands being selected from the group comprising:
- the C6-C24 aromatic polycarboxylate ligands, such as benzyl or naphthyl di-, tri- or tetracarboxylate, the aromatic ligands optionally carrying one or more F atoms on at least one aromatic ring;
- the C2-C16 aliphatic polycarboxylate ligands,
- the C1-C20 heteroaromatic ligands of which at least two links of the aromatic cycle are heteroatoms selected from S, N, O or B, such as the imidazolyl type ligands, the heteroaromatic ligands optionally carrying one or more F atoms on at least one aromatic ring;
each of the aforementioned ligands optionally carrying non-polar fluorinated groups, for example -(CF₂)ₙ-CF₃ groups, n being an integer from 0 to 5, preferably 0 or 3, and/or C1-C20 preferably C1-C4 non-polar alkyl groups, for example -CH₃ or -CH₂-CH₃, directly grafted onto the ligands and pointed towards the interior of the pores of the MOF.

3. The composite according to claim 2, wherein the MOF is especially adapted to the adsorption of acetic acid from ambient air, and comprises an average pore size of 0.4 to 0.6 nm.

4. The composite according to claim 2, wherein the C6-C24 aromatic polycarboxylate ligands, such as benzyl or naphthyl di-, tri- or tetracarboxylate, are selected from the group comprising C₆H₄(CO₂⁻)₂ (terephthalate), C₁₀H₆(CO₂⁻)₂ (naphthalene-2,6-dicarboxylate), C₁₂H₈(CO₂⁻)₂ (biphenyl-4,4'-dicarboxylate), C₆H₃(CO₂⁻)₃ (benzene-1,2,4-tricarboxylate), C₆H₃(CO₂⁻)₃ (benzene-1,3,5-tricarboxylate), C₂₄H₁₅(CO₂⁻)₃ (benzene-1,3,5-tribenzoate), C₆H₂(CO₂⁻)₄ (benzene-1,2,4,5-tetracarboxylate), C₁₀H₄(CO₂⁻)₄ (naphthalene-2,3,6,7-tetracarboxylate), C₁₀H₄(CO₂⁻)₄ (naphthalene-1,4,5,8-tetracarboxylate), C₁₂H₆(CO₂⁻)₄ (biphenyl-3,5,3',5'-tetracarboxylate) and modified analogues selected from 2-methyl terephthalate, 2,5-dimethyl terephthalate, tetramethyl terephthalate, perfluoromethyl terephthalate, diperfluoromethyl terephthalate 2-chloroterephthalate, 2-bromoterephthalate, 2,5 tetrafluoroterephthalate, tetrafluoroterephthalate, dimethyl-4,4'-biphenyldicarboxylate, 2,2-Bis(4-carboxyphenyl)hexafluoropropane, tetramethyl-4,4'-biphenyldicarboxylate, dicarboxy-4,4'-biphenyldicarboxylate, azobenzene dicarboxylate, azobenzene tetracarboxylate.

5. The composite according to claim 2, wherein the C4-C16 alkyl polycarboxylate ligands are selected from the group comprising the di-, tri- or tetracarboxylate or di-, tri- or tetracarboxylic acid ligands, for example C₂H₂(CO₂⁻)₂ (fumarate), C₂H₄(CO₂⁻)₂ (succinate), C₃H₆(CO₂⁻)₂ (glutarate), (C₄H₄)(CO₂⁻)₂ (muconate), C₄H₈(CO₂⁻)₂ (adipate).

6. The composite according to claim 2, wherein the heteroaromatic ligands are selected from the group comprising imidazole type ligands such as imidazolyl, benzimidazolyl, azabenzimidazolyl (e.g. 4-azabenzimidazolyl, 5-azabenzimidazolyl,) or purinyl, preferably imidazolyl, nuclei.

7. The composite according to any one of claims 1 to 6, wherein the metal of the oxide and/or the metal hydroxide and/or the metal ion of the MOF is selected from Li, Na, Rb, Mg, Ca, Sr, Ba, Sc, Ti, Zr, Ta, Cr, Mo, W, Mn, Fe, Ru, Os, Co, Ni, Pd, Pt, Cu, Au, Zn, Al, Ga, In, Si, Ge, Sn, Bi, Cd, Mn, Tb, Gd, Ce, La, or Cr, preferably Zr, Zn, Fe, Al, or Cr.

8. The composite according to any one of claims 1-2 and 4-7, wherein the MOF has a crystal structure selected from MIL-101, MIL-101-en, UiO-66, UiO-67, MIL-140A, MIL-140B, MIL-140C, UiO-66-2CF₃, UiO-66-NH₂, UiO-NDC, UiO-66-(CH₃)₂, UiO-67-CPHFP, MIL-140A-CPHFP, MIL-140B-CPHFP, MIL-140C-CPHFP, ZIF, ZIF-8, MIL-53, MIL-68, MIL-69 or MIL-88B-4CH₃; preferably MIL-101, UiO-66-2CF₃, UiO-67-CPHFP, MIL-140A-CPHFP, MIL-140B-CPHFP or MIL-140C-CPHFP; preferably MIL-101 or UiO-66-2CF_{3;}
for example, the MOF is selected from MIL-101(Cr), MIL-101(Cr)-en, UiO-66(Zr), UiO-67(Zr), MIL-140A(Zr), MIL-140B(Zr), MIL-140C(Zr), UiO-66-2CF₃(Zr), UiO-66-NH₂(Zr), UiO-NDC(Zr), UiO-66-(CH₃)₂(Zr), UiO-67-CPHFP(Zr), MIL-140A-CPHFP(Zr), MIL-140B-CPHFP(Zr), MIL-140C-CPHFP(Zr), ZIF, ZIF-8, MIL-53(M = Cr, Al, Fe, Ga, In), MIL-68(AI), MIL69(AI) or MIL-88B-4CH₃(Fe); preferably MIL-101(Cr), UiO-66-2CF₃(Zr), UiO-67-CPHFP(Zr), MIL-140A-CPHFP(Zr), MIL-140B-CPHFP(Zr) or MIL140C-CPHFP(Zr); most preferably MIL-101(Cr) or UiO-66-2CF₃(Zr).

9. The composite according to claim 3, wherein the MOF has a crystal structure selected from MIL-140B, MIL-140C, UiO-66-2CF₃, UiO-NDC, UiO-66-(CH₃)₂, ZIF, for example ZIF-8, MIL-53, MIL-53-(CF₃)₂, MIL-69 and MIL-88B-4CH₃; preferably, MIL-140B, MIL-140C, UiO-66-2CF₃, UiO-NDC, UiO-66-(CH₃)₂, MIL-53, MIL-53-(CF₃)₂, or MIL-88B-4CH₃;
for example, the MOF is selected from MIL-140B(Zr), MIL-140C(Zr), UiO-66-2CF₃(Zr), UiO-NDC(Zr), UiO-66(Zr)-(CH₃)₂, ZIF, for example ZIF-8, MIL-53(Fe), MIL-53(Fe)-(CH₃)₂, MIL-69(AI) and MIL-88B(Fe)-4CH₃; preferably MIL-140B(Zr), MIL-140C(Zr), UiO-66-2CF₃(Zr), UiO-NDC(Zr), UiO-66(Zr)(CH₃)₂, MIL-53(Fe), MIL-53(Fe)-(CF₃)₂ or MIL-88B(Fe)-4CH₃.

10. The composite material according to any one of claims 1 to 9, being in the form of a thin layer or in the form of pellets.

11. A method for preparing a composite material according to any one of claims 1 to 10, comprising a step of preparing:
- two colloidal suspensions: (i) a colloidal suspension of nanoparticles of at least one MOF as defined in any one of claims 1 to 10 and (ii) a colloidal suspension of nanoparticles in the form of nanobipyramids of at least a metal or metal alloy, as defined in claim 1, in an organic or aqueous solvent; or
- a colloidal suspension of a mixture of (i) nanoparticles of at least one MOF having a diameter or size of the largest axis if the particles are of asymmetric shape less than 100 nm and (ii) nanoparticles in the form of nanobipyramids of at least a metal or metal alloy, as defined in claim 1, in an organic or aqueous solvent; the organic or aqueous solvent preferably being H₂O, an alcohol, for example EtOH, or a hydroalcoholic mixture.

12. The method according to claim 11, further comprising a step of depositing the composite material in a thin layer on a substrate by spraying, dip-coating or spin-coating, preferably by dip-coating.

13. The method according to claim 11 or 12, wherein the step of depositing the composite material in a thin layer is carried out by dip-coating,
(i) at a temperature comprised between 20°C and 90°C, preferably between 30°C and 90°C, preferably between 40°C and 90°C, preferably between 50°C and 90°C, preferably between 60°C and 90°C, preferably between 70°C and 90°C, most preferably about 80°C (78-82°C);
(ii) the colloidal suspensions of MOF nanoparticles having a diameter or size of the largest axis if the particles are of asymmetric shape less than 100 nm and of nanoparticles in the form of nanobipyramids of at least a metal or metal alloy being in an aqueous or organic solvent, preferably hydroalcoholic, in the entire range of water/alcohol volume ratio 100/0 to 0/100, preferably 100/0 to 25/75, preferably 60/40 to 40/60, preferably 55/54 to 45/55, most preferably about 50/50, where the alcohol is ethanol or methanol, preferably ethanol; and
(iii) the mass ratio of MOF nanoparticles/metal bipyramidal nanoparticles being advantageously comprised between 100/1 and 0.1/1; preferably between 50/1 and 1/1; preferably between 20/1 and 1/1; preferably between 15/1 and 5/1; preferably between 12/1 and 8/1; most preferably about 10/1.

14. The method according to claim 12 or 13, wherein the support is preferably transparent, such as glass or plastic.

15. A device comprising a composite material according to any one of claims 1 to 10, for the optical detection of the saturation of an MOF adsorbent in volatile organic compounds, which are preferably polar, preferably selected from acetic acid, acetaldehyde, formaldehyde or a mixture of at least two thereof.

16. The device according to claim 15, wherein the composite material is in the form of a thin layer, or in the form of pellets.

17. A use of a composite material according to any one of claims 1 to 10, as an optical indicator for the saturation of a MOF adsorbent in volatile organic compounds, which are preferably polar.

18. A use according to claim 17, wherein the MOF adsorbent is immersed in a gaseous environment, such as air, where the volatile organic compounds, which are preferably polar, are present at a concentration comprised between 10 ppb and 500 ppm, with a relative humidity > 30%, preferably ≥35% of relative humidity, most preferably ≥40% of relative humidity.
